(19) Europäisches Patentamt
European Patent Office
Office européen des brevets

(11) **EP 1 893 724 B1**

(12) **FASCICULE DE BREVET EUROPEEN**

(45) Date de publication et mention de la délivrance du brevet:
**23.09.2015 Bulletin 2015/39**

(21) Numéro de dépôt: **06743709.5**

(22) Date de dépôt: **11.04.2006**

(51) Int Cl.:
***C10G 45/10*** *(2006.01)*

(86) Numéro de dépôt international:
**PCT/FR2006/000840**

(87) Numéro de publication internationale:
**WO 2006/114498 (02.11.2006 Gazette 2006/44)**

(54) **PROCEDE DE PRODUCTION DE DISTILLATS MOYENS PAR HYDRO1SOMERISATION ET HYDROCRAQUAGE DE CHARGES ISSUES DU PROCÉDÉ**

VERFAHREN ZUR HERSTELLUNG VON MITTELDESTILLATEN DURCH HYDROISOMERISATION UND HYDROCRACKEN VON DURCH DAS FISCHER-TROPSCH-VERFAHREN GEWONNENEN AUSGANGSMATERIALIEN

METHOD FOR PRODUCING MIDDLE DISTILLATES BY THE HYDROISOMERIZATION AND HYDROCRACKING OF FEEDSTOCKS OBTAINED FROM THE FISCHER-TROPSCH METHOD

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **25.04.2005 FR 0504143**

(43) Date de publication de la demande:
**05.03.2008 Bulletin 2008/10**

(73) Titulaires:
• **Institut Français du Pétrole**
**92852 Rueil Malmaison Cedex (FR)**
• **ENI S.p.A.**
**00144 Roma (IT)**

(72) Inventeurs:
• **EUZEN, Patrick**
**F-75001 Paris (FR)**
• **GUERET, Christophe**
**F-69560 Saint Romain en Gal (FR)**

(56) Documents cités:
**EP-A- 1 415 712     WO-A-2004/076598**

**Description**

La présente invention concerne un procédé de traitement avec hydrocraquage et hydroisomérisation, de charges issues du procédé Fischer-Tropsch, permettant d'obtenir des distillats moyens (gazole, kérosène) mettant en oeuvre un catalyseur comportant une silice-alumine particulière.

Dans le procédé Fischer-Tropsch, le gaz de synthèse (CO+H2) est transformé catalytiquement en produits oxygénés et en hydrocarbures essentiellement linéaires sous forme gazeuse, liquide ou solide. Ces produits sont généralement exempts d'impuretés hétéroatomiques telles que, par exemple, le soufre, l'azote ou des métaux. Ils ne contiennent également pratiquement peu ou pas d'aromatiques, de naphtènes et plus généralement de cycles en particulier dans le cas de catalyseurs au cobalt. Par contre, ils peuvent présenter une teneur non négligeable en produits oxygénés qui, exprimée en poids d'oxygène, est généralement inférieure à 5% poids environ et également une teneur en insaturés (produits oléfiniques en général) généralement inférieure à 10% en poids. Cependant, ces produits, principalement constitués de normales paraffines, ne peuvent être utilisés tels quels, notamment à cause de leurs propriétés de tenue à froid peu compatibles avec les utilisations habituelles des coupes pétrolières. Par exemple, le point d'écoulement d'un hydrocarbure linéaire contenant 20 atomes de carbone par molécule (température d'ébullition égale à 340°C environ c'est à dire souvent comprise dans la coupe distillat moyen) est de +37°C environ ce qui rend son utilisation impossible, la spécification étant de -15°C pour le gasoil. Les hydrocarbures issus du procédé Fischer-Tropsch comprenant majoritairement des n-paraffines doivent être transformés en produits plus valorisables tels que par exemple le gazole, kérosène, qui sont obtenus, par exemple, après des réactions catalytiques d'hydroisomérisation.

Le brevet EP-583,836 décrit un procédé pour la production de distillats moyens à partir de charge obtenue par la synthèse Fischer-Tropsch. Dans ce procédé, la charge est traitée dans sa globalité, tout au plus on peut enlever la fraction C4 moins et obtenir la fraction C5+ bouillant à près de 100°C. Ladite charge est soumise à un hydrotraitement puis à une hydroisomérisation avec une conversion (de produits bouillant au-dessus de 370°C en produits à point d'ébullition inférieur) d'au moins 40% poids. Un catalyseur utilisable en hydroconversion est une formulation platine sur silice-alumine. Les conversions décrites dans les exemples sont d'au plus 60% poids.

Le brevet EP-321,303 décrit également un procédé de traitement desdites charges en vue de produire des distillats moyens et éventuellement des huiles. Dans un mode de réalisation, des distillats moyens sont obtenus par un procédé consistant à traiter la fraction lourde de la charge, c'est à dire à point d'ébullition initial compris entre 232°C et 343°C, par hydroisomérisation sur un catalyseur fluoré contenant un métal du groupe VIII et de l'alumine et présentant des caractéristiques physico-chimiques particulières. Après hydroisomérisation, l'effluent est distillé et la partie lourde est recyclée en hydroisomérisation. La conversion en hydroisomérisation des produits 370°C+ est donnée comme comprise entre 50-95% pds et les exemples vont jusqu'à 85-87%.

Le brevet WO 2004/076598 décrit un procédé de production de distillats moyens à partir d'une charge F-T.

Tous les catalyseurs utilisés actuellement en hydroisomérisation sont du type bifonctionnels associant une fonction acide à une fonction hydrogénante. La fonction acide est apportée par des supports de grandes surfaces (150 à 800 m2.g-1 généralement) présentant une acidité superficielle, telles que les alumines halogénées (chlorées ou fluorées notamment), les alumines phosphorées, les combinaisons d'oxydes de bore et d'aluminium, les silices-alumines amorphes et les silice-alumines. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI tels que chrome, molybdène et tungstène et au moins un métal du groupe VIII.

L'équilibre entre les deux fonctions acide et hydrogénante est l'un des paramètres qui régissent l'activité et la sélectivité du catalyseur. Une fonction acide faible et une fonction hydrogénante forte donnent des catalyseurs peu actifs et sélectifs envers l'isomérisation alors qu'une fonction acide forte et une fonction hydrogénante faible donnent des catalyseurs très actifs et sélectifs envers le craquage. Une troisième possibilité est d'utiliser une fonction acide forte et une fonction hydrogénante forte afin d'obtenir un catalyseur très actif mais également très sélectif envers l'isomérisation. Il est donc possible, en choisissant judicieusement chacune des fonctions d'ajuster le couple activité/sélectivité du catalyseur.

Les performances de ces catalyseurs sont étroitement liées à leurs caractéristiques physico-chimiques, et plus particulièrement à leurs caractéristiques texturales. Ainsi et d'une façon générale, la présence de macropores dans les catalyseurs comportant une silice-alumine (tels que ceux décrits par exemple dans le brevet US 5370788) est un inconvénient. On entend par macropores, des pores dont le diamètre est supérieur à 500 Å.

En voulant résoudre ce problème la demanderesse a été conduite à préparer des catalyseurs d'hydrocraquage à base de silice-alumine à teneurs réduites en macropores et présentant des performances catalytiques améliorées dans les procédés d'hydrocraquage et d'hydroisomérisation de paraffines issues d'un procédé de synthèse Fischer-Tropsch.

La présente invention concerne donc un procédé pour la production de distillats moyens. Ce procédé permet :

- d'améliorer fortement les propriétés à froid des paraffines issues du procédé Fisher-Tropsch et ayant des points d'ébullition correspondants à ceux des fractions gazole et kérosène, (encore appelées distillats moyens) et notamment d'améliorer le point de congélation des kérosènes.
- d'augmenter la quantité de distillats moyens disponibles par hydrocraquage des composés paraffiniques les plus lourds, présents dans l'effluent de sortie de l'unité Fischer-Tropsch, et qui ont des points d'ébullition supérieurs à ceux des coupes kérosène et gazole, par exemple la fraction 380°C$^+$.

et ce procédé met en oeuvre une silice-alumine particulière permettant d'obtenir des catalyseurs très sélectifs et actifs.

Plus précisément l'invention concerne un procédé de production de distillats moyens à partir d'une charge paraffinique produite par synthèse Fischer-Tropsch mettant en oeuvre un catalyseur d'hydrocraquage/hydroisomérisation particulier comprenant au moins un élément hydro-déshydrogénant choisi dans le groupe formé par les éléments du groupe VIB et du groupe VIII. de la classification périodique, de 0,2 à 2,5 % poids d'oxyde d'un élément dopant choisi parmi le phosphore, le bore et le silicium et un.support non zéolitique à base de silice - alumine contenant une quantité supérieure à 5% poids et inférieure ou égale à 95% poids de silice ($SiO_2$), ledit catalyseur présentant les caractéristiques suivantes :

- un diamètre moyen poreux, mesuré par porosimétrie au mercure, compris entre 20 et 140 Å,
- un volume poreux total, mesuré par porosimétrie au mercure, compris entre 0,1 ml/g et 0,5 ml/g,
- un volume poreux total, mesuré par porosimétrie azote, compris entre 0,1 ml/g et 0,5 ml/g,
- une surface spécifique BET comprise entre 100 et 550 m$^2$/g,
- un volume poreux, mesuré par porosimétrie au mercure, compris dans les pores de diamètre supérieur à 140 Å inférieur à 0,1 ml/g ,
- un volume poreux, mesuré par porosimétrie au mercure, compris dans les pores de diamètre supérieur à 160 Å inférieur à 0,1 ml/g,
- un volume poreux, mesuré-par porosimétrie au mercure, compris dans les pores de diamètre supérieurs à 200 Å, inférieur à 0,1 ml/g,
- un volume poreux, mesuré par porosimétrie au mercure, compris dans les pores de diamètre supérieurs à 500 Å est strictement supérieur à 0,01 et inférieur à 0,1 ml/g.
- un diagramme de diffraction X qui contient au moins les raies principales caractéristiques d'au moins une des alumines de transition comprise dans le groupe composé par les alumines alpha, rhô, chi, eta, gamma, kappa, thêta et delta.
- une densité de remplissage tassée supérieure à 0,75 g/cm$^3$.

### **Description détaillée de l'invention**

Techniques de caractérisation

Dans l'exposé qui suit de l'invention, on entend par surface spécifique, la surface spécifique B.E.T, déterminée par adsorption d'azote conformément à la norme ASTM D 3663-78 établie à partir de la méthode BRUNAUER-EMMETT-TELLER décrite dans le périodique « The Journal of American Society", 60, 309, (1938).

Dans l'exposé qui suit de l'invention, on entend par volume mercure des supports et des catalyseurs, le volume mesuré par intrusion au porosimètre à mercure selon la norme ASTM D4284-83 à une pression maximale de 4000 bar, utilisant une tension de surface de 484 dyne/cm et un angle de contact pour les supports silice-alumine amorphe de 140°. On définit le diamètre moyen mercure comme étant un diamètre tel que tous les pores de taille inférieure à ce diamètre constituent 50% du volume poreux ($V_{Hg}$), dans un intervalle compris entre 36 Å et 1000 Å. L'angle de mouillage a été pris égal à 140° en suivant les recommandations de l'ouvrage "Techniques de l'ingénieur, traité analyse et caractérisation, P 1050-5, écrits par Jean Charpin et Bernard Rasneur".

Afin d'obtenir une meilleure précision, la valeur du volume mercure en ml/g donnée dans le texte qui suit correspond à la valeur du volume mercure total (volume poreux total mesuré par intrusion au porosimètré à mercure) en ml/g mesurée sur l'échantillon moins la valeur du volume mercure en ml/g mesurée sur le même échantillon pour une pression correspondant à 30 psi (environ 2 bars). On définit également le diamètre moyen mercure comme étant un diamètre tel que tous les pores de taille inférieure à ce diamètre constituent 50% du volume poreux total mercure. Afin de mieux caractériser la distribution poreuse, on définit enfin les critères de distribution poreuse suivants en mercure: le volume V1 correspond au volume contenu dans les pores dont le diamètre est inférieur au diamètre moyen moins 30 Å. Le volume V2 correspond au volume contenu dans les pores de diamètre supérieur ou égal au diamètre moyen moins 30 Å et inférieur au diamètre moyen plus 30 Å. Le volume V3 correspond au volume contenu dans les pores de diamètre supérieur ou égal au diamètre moyen plus 30 Å. Le volume V4 correspond au volume contenu dans les pores dont le diamètre est inférieur au diamètre moyen moins 15 Å. Le volume V5 correspond au volume contenu dans les pores de diamètre supérieur ou égal au diamètre moyen moins 15 Å et inférieur au diamètre moyen plus 15 Å. Le volume V6 correspond au volume contenu dans les pores de diamètre supérieur ou égal au diamètre moyen plus 15 Å.

La distribution poreuse mesurée par adsorption d'azote a été déterminée par le modèle Barrett-Joyner-Halenda (BJH). L'isotherme d'adsorption - désorption d'azote selon le modèle BJH est décrit dans le périodique "The Journal of American Society" , 73, 373, (1951) écrit par E.P.Barrett, L.G.Joyner et P.P.Halenda. Dans l'exposé qui suit de l'invention, on entend par volume adsorption azote, le volume mesuré pour $P/P_0$= 0,99, pression pour laquelle il est admis que l'azote a rempli tous les pores. On définit le diamètre moyen désorption azote comme étant un diamètre tel que tous les pores inférieurs à ce diamètre constituent 50% du volume poreux (Vp) mesuré sur la branche de désorption de l'isotherme azote.

Par surface adsorption, on entend la surface mesurée sur la branche de l'isotherme d'adsorption. On se reportera par exemple à l'article de A. Lecloux "Mémoires Société Royale des Sciences de.Liège, 6ème série, Tome I, fasc.4, pp.169-209 (1971)".

La teneur en sodium a été mesurée par spectrométrie d'absorption atomique.

La diffraction X est une technique pouvant être utilisée pour caractériser les supports et catalyseurs selon l'invention. Dans l'exposé qui suit, l'analyse des rayons X est réalisée sur poudre avec un diffractomètre Philips PW 1830 opérant en réflexion et équipé d'un monochromateur arrière en utilisant la radiation CoKalpha ($\lambda K_{\alpha 1}$ = 1.7890 A, $\lambda lK_{\alpha 2}$ = 1.793 A, rapport d'intensité. $K_{\alpha 1}$/ $K_{\alpha 2}$ = 0,5). Pour le diagramme de diffraction X de l'alumine gamma, on se reportera à la base de données ICDD, fiche 10-0425. En particulier, les 2 pics les plus intenses sont situés à une position correspondant à un d compris entre 1,39 et 1,40 Å et un d compris entre 1,97 Å à 2,00 A. On appelle d la distance inter-réticulaire qui est déduite de la position angulaire en utilisant la relation dite de Bragg (2 $d_{(hkl)}$* sin (θ) = n*λ). Par alumine gamma, on entend dans la suite du texte entre autres par exemple une alumine comprise dans le groupe composé des alumines gamma cubique, gamma pseudo-cubique, gamma tétragonale, gamma mal ou peu cristallisée, gamma grande surface, gamma basse surface, gamma issue de grosse boehmite, gamma issue de boehmite cristallisée, gamma issue de boehmite peu ou mal cristallisée, gamma issue d'un mélange de boehmite cristallisée et d'un gel amorphe, gamma issue d'un gel amorphe, gamma en évolution vers delta. Pour les positions des pics de diffraction des alumines êta, delta et thêta, on peut se référer à l'article de B.C. Lippens, J.J. Steggerda, dans Physical and Chemical aspects of adsorbents and catalysts, E.G. Linsen (Ed.), Academic Press, London. 1970, p.171-211.

Pour les supports et catalyseurs selon l'invention, le diagramme de diffraction X met en évidence un pic large caractéristique de la présence de silice amorphe.

Par ailleurs, dans l'ensemble du texte qui suit, le composé d'alumine peut contenir une fraction amorphe difficilement détectable par les techniques de DRX. On sous-entendra donc par la suite que les composés d'alumine utilisés ou décrits dans le texte peuvent contenir une fraction amorphe ou mal cristallisée.

Les supports et catalyseurs selon l'invention ont été analysés par RMN MAS du solide de $^{27}$Al sur un spectro-mètre de la firme Brüker de type MSL 400, en sonde 4 mm. La vitesse de rotation des échantillons est de l'ordre de 11 kHz. Potentiellement, la RMN de l'aluminium permet de distinguer trois types d'aluminium dont les déplacements chimiques sont reportés ci-après :

> Entre 100 et 40 ppm, aluminiums de type tétra-coordinés, notés $Al_{IV}$,
> Entre 40 et 20 ppm, aluminiums de type penta-coordinés, notés $Al_V$,
> Entre 20 et - 100 ppm, aluminiums de type hexa-coordinés, notés $Al_{VI}$.

L'atome d'aluminium est un noyau quadripolaire. Dans certaines conditions d'analyse (champs de radiofréquence faible : 30 kHz, angle d'impulsion faible : π/2 et échantillon saturé en eau), la technique de RMN de rotation à l'angle magique (MAS) est une technique quantitative. La décomposition des spectres RMN MAS permet d'accéder directement à la quantité des différentes espèces. Le spectre est calé en déplacement chimique par rapport à une solution 1M de nitrate d'aluminium. Le signal d'aluminium est à zéro ppm. Nous avons choisi d'intégrer les signaux entre 100 et 20 ppm pour les $Al_{IV}$ et $Al_V$, ce qui correspond à l'aire 1, et entre 20 et -100 ppm pour $Al_{VI}$, ce qui correspond à l'aire 2. Dans l'exposé qui suit de l'invention, on entend par proportion des $Al_{VI}$ octaédriques le rapport suivant: aire 2/ (aire 1 + aire 2).

L'environnement du silicium des alumines-silice est étudié par la RMN de $^{29}$Si. Les tables de déplacements chimiques en fonction du degré de condensation ont été déduites de l'ouvrage de G.Engelhardt et D.Michel : «High resolution solid-state NMR of silicates and zeolites » (Wiley), 1987. La RMN 29 Si montre les déplacements chimiques des différentes espèces de silicium telles que $Q^4$ (-105ppm à - 120 ppm), $Q^3$ (-90ppm à -102 ppm) et $Q^2$ (-75ppm à -93 ppm). Les sites avec un déplacement chimique à -102 ppm peuvent être des sites de type $Q^3$ ou $Q^4$, nous les.appelons sites $Q^{3-4}$. Les définitions des sites sont les suivantes :

> sites $Q^4$ : Si lié à 4Si (ou Al),
> sites $Q^3$ : Si lié à 3 Si(ou Al) et 1 OH

sites $Q^2$ : Si lié à 2 Si(ou Al) et 2 OH;

Les alumines-silice de l'invention sont composées de silicium de types $Q^2$, $Q^3$, $Q^{3-4}$ et $Q^4$. De nombreuses espèces seraient de type $Q^2$, approximativement de l'ordre de 10 à 80%, de préférence 20 à 60 % et manière préférée de 20 à 40%. La proportion des espèces $Q^3$ et $Q^{3-4}$ est également importante, approximativement de l'ordre de 5 à 50 % et de manière préférée de 10 à 40% pour les deux espèces.

L'environnement des siliciums a été étudié par RMN CP MAS $^1H \rightarrow ^{29}Si$, (300 MHz, vitesse de rotation : 4000 Hz). Dans ce cas, seul le silicium lié à des liaisons OH doit répondre. La table des déplacements chimiques utilisés est celle de Kodakari et al. , Langmuir, 14, 4623-4629, 1998. Les attributions sont les suivantes : -108 ppm (Q4), -99 ppm (Q3/Q4(1 Al)), -91 ppm (Q3/Q3(1Al)), -84 ppm (Q2/Q3(2Al)), -78 ppm (Q2/Q3(3Al)) et -73 ppm Q1/Q2 (3 Al).

Les alumines-silice de l'invention se présentent sous la forme de superposition de plusieurs massifs. Le pic principal de ces massifs est généralement situé à -110 ppm.

Une méthode de caractérisation des supports et catalyseurs selon l'invention pouvant être utilisée est la microscopie électronique par transmission (MET). Pour cela on utilise un microscope électronique (du type Jeol 2010 ou Philips Tecnai20F éventuellement avec balayage) équipé d'un spectromètre à dispersion d'énergie (EDS) pour l'analyse des rayons X (par exemple un Tracor ou un Edax). Le détecteur EDS doit permettre la détection des éléments légers. L'association de ces deux outils, MET et EDS, permet de combiner l'imagerie et l'analyse chimique locale avec une bonne résolution spatiale.

Pour ce type d'analyse, les échantillons sont finement broyés à sec dans un mortier ; la poudre est ensuite incluse dans de la résine pour réaliser des coupes ultrafines d'épaisseur 70 nm environ. Ces coupes sont recueillies sur des grilles de Cu recouvertes d'un film de carbone amorphe à trous servant de support. Elles sont ensuite introduites dans le microscope pour observation et analyse sous vide secondaire. En imagerie, on distingue alors aisément les zones d'échantillon des zones de résine. On procède ensuite à un certain nombre d'analyses, 10 au minimum, de préférence comprises entre 15 et 30, sur différentes zones de l'échantillon industriel. La taille du faisceau électronique pour l'analyse des zones (déterminant approximativement la taille des zones analysées) est de 50 nm de diamètre au maximum, de préférence de 20 nm, de manière encore plus préférée 10, 5, 2 ou 1nm de diamètre. En mode balayé, la zone analysée sera fonction de la taille de la zone balayée et non plus de la taille du faisceau généralement réduit.

Le traitement semi quantitatif des spectres X recueillis à l'aide du spectromètre EDS permet d'obtenir la concentration relative de Al et de Si (en % atomique) et le rapport Si/Al pour chacune des zones analysées. On peut alors calculer la moyenne Si/$Al_m$ et l'écart type $\sigma$ de cet ensemble de mesures. Dans les exemples non limitatifs de l'exposé qui suit de l'invention, la sonde de 50 nm est la sonde utilisée pour caractériser les supports et catalyseurs selon l'invention sauf mention contraire.

La densité de remplissage tassée (DRT) est mesurée de la manière décrite dans l'ouvrage " Applied Heterogenous Catalysis "de J.F. Le Page, J. Cosyns, P. Courty, E. Freund, J-P. Franck, Y. Jacquin, B. Juguin, C. Marcilly, G. Martino, J. Miquel, R. Montarnal, A. Sugier, H. Van Landeghem, Technip, Paris, 19887

. Un cylindre gradué de dimensions acceptables est rempli de catalyseur par additions successives; et entre chaque addition, le catalyseur est tassé en secouant le cylindre jusqu'à atteindre un volume constant. Cette mesure est généralement réalisée sur 1000 cm3 de catalyseur tassé dans un cylindre dont le ratio hauteur sur diamètre est proche de 5:1. Cette mesure peut être, de manière préférée, réalisée sur des appareils automatisés tels que Autotap® commercialisé par Quantachrome®.

L'acidité de la matrice est mesurée par spectrométrie Infra-Rouge (IR). Les spectres IR sont enregistrés sur un interféromètre Nicolet de type Nexus-670 sous une résolution de 4 cm-1 avec une apodisation de type Happ-Gensel. L'échantillon (20 mg) est pressé sous la forme d'une pastille auto-supportée, puis est placé dans une cellule d'analyse in-situ (25°C à 550°C, four déporté du faisceau IR, vide secondaire de 10-6 mbar). Le diamètre de la pastille est de 16 mm.

L'échantillon est prétraité de la façon suivante afin d'éliminer l'eau physisorbée et de déshydroxyler partiellement la surface du catalyseur afin d'obtenir une image représentative de l'acidité du catalyseur en fonctionnement :

- montée en température de 25°C à 300°C en 3 heures
- palier de 10 heures à 300 °C
- descente de température de 300°C à 25°C en 3.heures

La sonde basique (pyridine) est ensuite adsorbée à pression saturante à 25°C puis thermo-désorbée selon les paliers suivants :

- 25°C pendant 2 heures sous vide secondaire
- 100°C 1 heure sous vide secondaire
- 200°C 1 heure sous vide secondaire
- 300°C 1 heure sous vide secondaire

Un spectre est enregistré à 25°C à la fin du prétraitement et à chaque palier de désorption en mode transmission avec un temps d'accumulation de 100 s. Les spectres sont ramenés à iso-masse (donc supposés à iso-épaisseur) (20 mg exactement). Le nombre de sites de Lewis est proportionnel à la surface du pic dont le maximum se situe vers 1450 cm-1, tout épaulement étant inclus. Le nombre de sites de Bronsted est proportionnel à la surface du pic dont le maximum se situe vers 1545 cm-1. Le rapport du nombre de sites de Bronsted /nombre de sites de Lewis B/L est estimé égal au rapport des surfaces de deux pics décrits ci-dessus. On utilise généralement la surface des pics à 25°C. Ce rapport B/L est de manière générale calculé à partir du spectre enregistré à 25°C à la fin du prétraitement.

Lorsqu'un élément dopant, P et/ou B et/ou Si, est introduit, sa répartition et sa localisation peuvent être déterminées par des techniques telles que la microsonde de Castaing (profil de répartition des divers éléments), la microscopie électronique par transmission couplée à une analyse X des composants du catalyseurs, ou bien encore par l'établissement d'une cartographie de répartition des éléments présents dans le catalyseur par microsonde électronique. Ces techniques permettent de mettre en évidence la présence de ces éléments exogènes ajoutés après la synthèse de l'alumine-silice selon l'invention.

La composition globale du catalyseur peut être déterminée par fluorescence X sur le catalyseur à l'état pulvérulent ou par absorption atomique après attaque acide du catalyseur.

La mesure de la composition locale à l'échelle du micron, par opposition à la composition globale du catalyseur, peut s'effectuer par microsonde électronique Cette mesure peut s'effectuer en déterminant les teneurs en métal sur des zones de quelques microns cubes le long du diamètre d.'une particule de catalyseurs que l'on appelle unités de mesures. Cette mesure permet d'évaluer la répartition macroscopique des éléments à l'intérieur des particules. Elle peut être complétée éventuellement à l'échelle du nanomètre par STEM (Scanning Transmission Electron Microscopy (Microscopie Electronique de Transmission à Balayage)).

Les analyses sont conduites sur une microsonde électronique CAMECA SX100 (équipée de 5 spectromètres à dispersion de longueur d'onde)(appareillage préféré) ou éventuellement sur JEOL 8800R(4 spectromètres) Les paramètres d'acquisition sont les suivants : tension d'accélération 20 kV, courant 80 ou 200 nA et temps de comptage 10 s ou 20 s selon le niveau de concentration. Les particules sont enrobées dans la résine puis polies jusqu'à leur diamètre.

On notera que l'appellation diamètre ne se réfère pas uniquement à une forme en bille ou en extrudé, mais plus généralement à toute forme de particules ; est dénommée diamètre en fait la longueur représentative de la particule sur laquelle est effectuée la mesure.

Les mesures sont effectuées sur un échantillon représentatif du lit ou du lot de catalyseur qui sera utilisé sur un lit catalytique. On a considéré que les analyses devraient être faites sur au moins 5 particules avec au moins 30 mesures par particule, uniformément réparties le long du diamètre. On appelle CMo, CNi, CW et CP les concentrations locales (exprimées en %) respectivement en Molybdène, Nickel, Tungstène et phosphore

On pourrait tout aussi bien exprimer les concentrations en % atomique, les fluctuations relatives étant les mêmes.

Il est intéressant de préparer des catalyseurs présentant des concentrations homogènes CMo, CNi, CW et CP le long de l'extrudé. Il est également intéressant de préparer des catalyseurs présentant des concentrations CMo, CNi, CW et CP au coeur et en périphérie différente. Ces catalyseurs présentent des profils de répartition dits en « cuvette » ou en « dôme ». Un autre type de répartition est celle en croûte où les éléments de la phase active sont répartis en surface.

La présente invention concerne un procédé pour la production de distillats moyens utilisant un catalyseur d'hydrocraquage/hydroisomérisation qui comporte :

- au moins un élément hydro-déshydrogénant choisi dans le groupe formé par les éléments du groupe VIB et du groupe VIII de la classification périodique,
- de 0,2 à 2,5 % d'un élément dopant choisi parmi le phosphore, le bore et le silicium, de préférence bore ou phosphore et de manière plus préférée le phosphore,
- et un support non zéolitique à base de silice - alumine contenant une quantité supérieure à 5% poids et inférieure ou égale à 95% poids de silice (SiO$_2$), ledit catalyseur présentant les caractéristiques suivantes :
- un diamétre moyen poreux, mesuré par porosimétrie au mercure, compris entre 20 et 140 Å,
- un volume poreux total, mesuré par porosimétrie au mercure, compris entre 0,1 ml/g et 0,5 ml/g, de préférence inférieur à 0,45 ml/g et de manière plus préférée inférieur à 0,4 ml/g,
- un volume poreux total, mesuré par porosimétrie azote, compris entre 0,1 ml/g et 0,5 ml/g, de préférence inférieur à 0,45 ml/g et de manière plus préférée inférieur à 0,4 ml/g,
- une surface spécifique. BET comprise entre 100 et 550 m$^2$/g , de préférence comprise entre 150 et 500 m$^2$/g, de manière préférée inférieure à 350 m$^2$/g et de manière encore plus préférée inférieure à 250 m$^2$/g,
- un volume poreux, mesuré par porosimétrie au mercure, compris dans les pores de diamètre supérieur à 140 A inférieur à 0,1 ml/g,
- un volume poreux, mesuré par porosimétrie au mercure, compris dans les pores de diamètre supérieur à 160 Å inférieur à 0,1 ml/g,
- un volume poreux, mesuré par porosimétrie au mercure, compris dans les pores de diamètre supérieurs à 200 Å, inférieur à 0,1 ml/g, de préférence inférieur à 0,075 ml/g et de manière plus préférée inférieur à 0,05 ml/g,

- un volume poreux, mesuré par porosimétrie au mercure, compris dans les pores de diamètre supérieurs à 500 Å inférieur à 0,1 ml/g, de préférence inférieur à 0,05 ml/g et de manière plus préférée inférieur à 0,02 ml/g et strictement supérieur à 0,01 et inférieur à 0,1 ml/g.

- un diagramme de diffraction X qui contient au moins les raies principales caractéristiques d'au moins une des alumines de transition comprise dans le groupe composé par les alumines alpha, rhô, khi, êta, gamma, kappa, thêta et delta.

- une densité de remplissage tassée des catalyseurs supérieure à 0,75 g/cm$^3$, de manière préférée supérieure à 0,85 g/cm$^3$, de manière très préférée supérieure à 0,95 cm$^3$/g et de manière encore plus préférée supérieure à 1,05 g/cm$^3$.

*Caractéristiques du support du catalyseur selon l'invention*

L'alumine-silice utilisée dans le catalyseur selon l'invention est de préférence une alumine-silice homogène à l'échelle du micromètre et dans laquelle la teneur en impuretés cationiques (par exemple Na$^+$) est inférieure à 0,1%poids, de manière préférée inférieure à 0,05% poids et de manière encore plus préférée inférieure à 0,025% poids et la teneur en impuretés anioniques (par exemple SO$_4$$^{2-}$, Cl$^-$) est inférieure à 1% poids, de manière préférée inférieure à 0,5% poids et de manière encore plus préférée inférieure à 0,1% poids.

**[0046]** - Ainsi tout procédé de synthèse d'alumine silice connu de l'homme du métier conduisant à une alumine-silice homogène à l'échelle du micromètre et dans lequel les impuretés cationiques (par exemple Na$^+$) peuvent être ramenées à moins de 0,1%, de manière préférée à une teneur inférieure à 0,05% poids et de manière encore plus préférée inférieure à 0,025% poids et dans lequel les impuretés anioniques (par exemple SO$_4$$^{2-}$, Cl$^-$) peuvent être ramenées à moins de 1% et de manière plus préférée à une teneur inférieure-à 0,05% poids convient pour préparer les supports objet de l'invention.

Le support du catalyseur selon l'invention est un support non zéolitique à base d'alumine-silice (c'est-à-dire comprenant alumine et silice) de teneur massique en silice (SiO$_2$) supérieure à 5% poids et inférieure ou égale à 95% poids, de préférence comprise entre 10 et 80% poids, de manière préférée une teneur en silice supérieure à 20% poids et inférieure à 80% poids et de manière encore plus préférée supérieure à 25% poids et inférieure à 75% poids. La teneur en silice du support est avantageusement comprise entre 10 et 50 % poids,

L'environnement du silicium des alumines-silice est étudié par la RMN de $^{29}$Si. Les alumines-silice de l'invention sont composées de silicium de types Q$^2$, Q$^3$, Q$^{3-4}$ et Q$^4$. De nombreuses espèces sont de type Q$^2$, approximativement de l'ordre de 10 à 80%, de préférence 20 à 60 % et manière préférée de 20 à 40%. La proportion des espèces Q$^3$ et Q$^{3-4}$ est également importante, approximativement de l'ordre de 5 à 50 % et de manière préférée de 10 à 40% pour les deux espèces.

L'environnement des siliciums a été étudié par RMN CP MAS $^1$H→$^{29}$Si, (300 MHz, vitesse de rotation : 4000 Hz). Dans ce cas, seul le silicium lié à des liaisons OH doit répondre. La table des déplacements chimiques utilisés est celle de Kodakari et al. , Langmuir, 14, 4623-4629, 1998. Les attributions sont les suivantes : -108 ppm (Q4), -99 ppm (Q$^3$/Q4(1 Al)), -91 ppm (Q3/Q3(1Al)), -84 ppm (Q2/Q3(2Al), -78 ppm (Q2/Q3(3Al)) et-73 ppm Q1/Q2 (3 Al).

Les alumines-silice de l'invention se présentent généralement sous la forme de superposition de plusieurs massifs. Le pic principal de ces massifs est avantageusement situé à -110 ppm.

Les spectres RMN MAS du solide de $^{27}$Al des supports et des catalyseurs selon l'invention montrent deux massifs de pics distincts. Un premier type d'aluminium dont le maximum résonne vers 10 ppm s'étend entre -100 et 20 ppm. La position du maximum suggère que ces espèces sont essentiellement de type Al$_{VI}$ (octaédrique). Un deuxième type d'aluminium minoritaire dont le maximum résonne vers 60 ppm s'étend entre 20 et 110 ppm. Ce massif peut être décomposé en au moins deux espèces. L'espèce prédominante de ce massif correspondrait aux atomes d'Al$_{IV}$ (tétraédrique). Pour les supports et catalyseurs de la présente invention, avantageusement, la proportion des Al$_{VI}$ octaédriques est supérieure à 50%, de manière préférée supérieure à 60%, et de manière encore plus préférée supérieure à 70%.

Dans un mode de réalisation de l'invention, le catalyseur contient un support comprenant au moins deux zones alumino-silicates, les dites zones ayant des rapports Si/Al inférieurs ou supérieurs au rapport Si/Al global déterminé par fluorescence X. Ainsi un support ayant un rapport Si/Al égal à 0,5 comprend par exemple deux zones alumino-silicates, l'une des zones a un rapport Si/Al déterminé par MET inférieur à 0,5 et l'autre zone a un rapport Si/Al déterminé par MET compris entre 0,5 et 2,5.

Dans un autre mode de réalisation de l'invention, le catalyseur contient un support comprenant une seule zone alumine-silice, ladite zone ayant un rapport Si/Al égal au rapport Si/Al global déterminé par fluorescence X et inférieur à 2,3.

L'acidité du support de catalyseur selon l'invention peut être de manière avantageuse, sans que cela ne restreigne la portée de l'invention, mesurée par suivi IR de la thermo-désorption de la pyridine. Généralement, le rapport B/L, tel que décrit ci-dessus, du support selon l'invention est compris entre 0,05 et 1, de manière préférée entre 0,05 et 0,7, de manière très préférée.entre 0,05 et 0,5.

*Caractéristiques du catalyseur selon l'invention*

Le catalyseur du procédé selon l'invention comprend donc :

- un support non zéolitique à base d'alumine-silice (c'est-à-dire comprenant alumine et silice) de teneur massique en silice ($SiO_2$) supérieure à 5% poids et inférieure ou égale à 95% poids, de préférence comprise entre 10 et 80% poids, de manière préférée une teneur en silice supérieure à 20% poids et inférieure à 80% poids et de manière encore plus préférée supérieure à 25% poids et inférieure à 75% poids, la teneur en silice est avantageusement comprise entre 10 et 50 % poids,
- de préférence une teneur en impuretés cationiques inférieure à 0,1%poids, de manière préférée inférieure à 0,05% poids et de manière encore plus préférée inférieure à 0,025% poids. On entend par teneur en impuretés cationiques la teneur totale en alcalins.
- de préférence une teneur en impuretés anioniques inférieure à 1% poids, de manière préférée inférieure à 0,5% poids et de manière encore plus préférée inférieure à 0,1% poids.
- au moins un élément hydro-déshydrogénant choisi dans le groupe formé par les éléments du groupe VIB et du groupe VIII de la classification périodique,
- de préférence une teneur massique en métal(aux) du groupe VIB, sous forme métallique ou sous forme oxyde comprise entre 1 et 50 % en poids, de manière préférée entre 1,5 et 35 %, et de manière encore plus préférée entre 1,5 et 30%,
- de préférence une teneur massique en métaux du groupe VIII, sous forme métallique ou sous forme oxyde comprise entre 0,1 et 30 % en poids, de manière préférée entre 0,2 et 25 % et de manière encore plus préférée entre 0,2 et 20%,
- au moins un élément dopant déposé sur le catalyseur (on entend par élément dopant un élément introduit après la préparation du support alumino-silicate décrit précédemment.) et choisi dans le groupe formé par le phosphore, le bore et le silicium, de préférence phosphore et/ou bore et de manière encore plus préférée phosphore. Les teneurs massiques en phosphore, bore, silicium, calculées sous leur forme oxyde, sont comprises entre 0,2 et 2,5% et de manière préférée entre 0,2 et 1%.
- éventuellement au moins un élément du groupe VIIB (manganèse par exemple et de préférence), et une teneur pondérale comprise entre 0 et 20%, de préférence entre 0 et 10 % du composé sous forme oxyde ou métal.
- éventuellement au moins un élément du groupe VB (niobium par exemple et de préférence), et une teneur pondérale comprise entre 0 et 40%, de préférence entre 0 et 20% du composé sous forme oxyde ou métal,
- un diamètre moyen poreux, mesuré par porosimétrie au mercure, compris entre 20 et 140 Å, de préférence entre 40 et 120 Å et de manière encore plus préférée entre 50 et 100 Å,
- de préférence un rapport entre le volume V2, mesuré par porosimétrie au mercure, compris entre le $D_{moyen}$ - 30 A et le $D_{moyen}$ + 30 Å, sur le volume poreux total également mesuré par porosimétrie au mercure supérieur à 0,6, de préférence supérieur à 0,7 et de manière encore plus préférée supérieur à 0,8.
- de préférence un volume V3 compris dans les pores de diamètres supérieurs à $D_{moyen}$ + 30 Å, mesuré par porosimétrie au mercure, inférieur à 0,1 ml/g, de manière préférée inférieur à 0,06 ml/g et de manière encore plus préférée inférieur à 0,04 ml/g.
- de préférence un rapport entre le volume V5 compris entre le $D_{moyen}$ - 15 Å et le $D_{moyen}$ + 15 Å mesuré par porosimétrie au mercure, et le volume V2 compris entre le $D_{moyen}$ - 30 Å et le $D_{moyen}$ + 30 Å, mesuré par porosimétrie au mercure, supérieur à 0,6, de manière préférée supérieur à 0,7 et de manière encore plus préférée supérieur à 0,8.
- de préférence un volume V6 compris dans les pores de diamètres supérieurs à $D_{moyen}$ + 15 Å, mesuré par porosimétrie au mercure, inférieur à 0,2 ml/g, de manière préférée inférieur à 0,1 ml/g et de manière encore plus préférée inférieur à 0,05 ml/g.
- un volume poreux total, mesuré par porosimétrie au mercure, compris entre 0,1 ml/g et 0,5 ml/g, de préférence inférieur à 0,45 ml/g et de manière plus préférée inférieur à 0,4 ml/g,
- un volume poreux total, mesuré par porosimétrie azote, compris entre 0,1 ml/g et 0,5 ml/g, de préférence inférieur à 0,45 ml/g et de manière plus préférée inférieur à 0,4 ml/g,
- une surface spécifique BET comprise entre 100 et 550 $m^2$/g , de préférence comprise entre 150 et 500 $m^2$/g, de manière préférée inférieure à 350 $m^2$/g et de manière encore plus préférée inférieure à 250 $m^2$/g,
- de préférence une surface adsorption telle que le rapport entre la surface adsorption et la surface BET soit supérieur à 0,5, de manière préférée supérieur à 0,65 et de manière plus préférée supérieur à 0,8.
- un volume poreux, mesuré par porosimétrie au mercure, compris dans les pores de diamètre supérieurs à 140 Å, inférieur à 0,1 ml/g , de préférence inférieur à 0,05 ml/g et de manière encore plus préférée inférieur à 0,03 ml/g.
- un volume poreux, mesuré par porosimétrie au mercure, compris dans les pores de diamètre supérieurs à 160 Å, inférieur à 0,1 ml/g de préférence inférieur à 0,05 ml/g et de manière encore plus préférée inférieur à 0,025 ml/g.
- un volume poreux, mesuré par porosimétrie au mercure, compris dans les pores de diamètre supérieurs à 200 Å, inférieur à 0,1 ml/g, de préférence inférieur à 0,075 ml/g et de manière plus préférée inférieur à 0,05 ml/g,

- un volume poreux, mesuré par porosimétrie au mercure, compris dans les pores de diamètre supérieurs à 500 Å inférieur à 0,1 ml/g, de préférence inférieur à 0,05 ml/g et de manière plus préférée inférieur à 0,02 ml/g et strictement supérieur à 0,01 et inférieur à 0,1 ml/g.

- un diagramme de diffraction X qui contient au moins les raies principales caractéristiques d'au moins une des alumines de transition comprises dans le groupe composé par les alumines rhô, khi, kappa, êta, gamma, thêta et delta, de manière préférée qui contient au moins les raies principales caractéristiques d'au moins une des alumines de transition compris dans le groupe composé par l'alumine gamma, êta, thêta et delta, et de manière plus préférée qui contient au moins les raies principales caractéristiques de l'alumine gamma et êta, et de manière encore plus préférée qui contient les pics à un d compris entre 1,39 à 1,40 Å et à un d compris entre 1,97 Å à 2,00 Å.

- une densité de remplissage tassée des catalyseurs supérieure à 0,75 g/cm$^3$, de manière préférée supérieure à 0,85 g/cm$^3$, de manière très préférée supérieure à 0,95 cm$^3$/g et de manière encore plus préférée supérieure à 1,05 g/cm$^3$.

Lorsque l'élément dopant est le phosphore, la teneur en phosphore est avantageusement comprise entre 0,01 et 4 %poids d'oxyde, de manière très préférée comprise entre 0,01 et 2,5% poids d'oxyde, de manière plus préférée, entre 0,2 et 2,5% et de manière encore plus préférée, entre 0,2 et 2%.

De préférence, le catalyseur d'hydrocraquage/hydroisomérisation est à base de platine et/ou palladium.
De manière très préférée, le catalyseur d'hydrocraquage/hydroisomérisation contient de 0,05 à 10 % de métal noble du groupe VIII.
Un catalyseur préféré selon l'invention comprend l'association platine-palladium et une teneur en phosphore comprise entre 0,01 et 4% poids d'oxyde.
Un catalyseur très préféré selon l'invention comprend l'association platine-palladium et une teneur en phosphore comprise entre 0,01 et 2,5% poids d'oxyde.
Un catalyseur plus préféré selon l'invention comprend l'association platine-palladium et une teneur en phosphore comprise entre 0,2 et 2,5% poids d'oxyde.
Un catalyseur encore plus préféré selon l'invention comprend l'association platine-palladium et une teneur en phosphore comprise entre 0,2 et 2% poids d'oxyde.
Le catalyseur peut également contenir une proportion mineure d'au moins un élément stabilisant choisi dans le groupe formé par la zircone et le titane.

*Procédés de préparation*

Les catalyseurs selon l'invention peuvent être préparés selon toutes les méthodes bien connues de l'homme du métier.
Un procédé préféré de préparation du catalyseur selon la présente invention comprend les étapes suivantes :

Selon un mode de préparation préféré, le précurseur est obtenu par mise en forme directe de l'alumine-silice seule ou par mise en forme de l'alumine-silice avec au moins un liant, puis séchage et
calcination. Les éléments des groupes VIB et/ou VIII, et éventuellement ceux choisis parmi le phosphore, le bore, le silicium et éventuellement les éléments des groupes VB, et VIIB, sont alors éventuellement introduits par toute méthode connue de l'homme du métier, avant ou après la mise en forme et avant ou après la calcination du précurseur ou du catalyseur.

L'élément hydrogénant peut être introduit à toute étape de la préparation, de préférence lors du mélange, ou de manière très préférée après mise en forme. La mise en forme est suivie d'une calcination, l'élément hydrogénant peut également être introduit avant ou après cette calcination. La préparation se termine généralement par une calcination à une température de 250 à 600°C. Une autre des méthodes préférées selon la présente invention consiste à mettre en forme l'alumine-silice sans liant après un malaxage de cette dernière, puis passage de la pâte ainsi obtenue au travers d'une filière pour former des extrudés de diamètre compris entre 0,4 et 4 mm. La fonction hydrogénante peut être alors introduite en partie seulement (cas, par exemple, des associations d'oxydes de métaux des groupes VIB et VIII) ou en totalité, au moment du malaxage. Elle peut également être introduite par une ou plusieurs opérations d'échange ionique sur le support calciné constitué d'au moins une alumine-silice, éventuellement mise en forme avec un liant, à l'aide de solutions contenant les sels précurseurs des métaux choisis lorsque ceux-ci appartiennent au groupe VIII. Elle peut aussi être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VIB (notamment le molybdène ou le tungstène) ont été préalablement introduits au moment du malaxage du support. Elle peut enfin également être introduite, de façon très préférée par une ou plusieurs opérations d'imprégnation du support calciné constitué d'au moins une alumine-silice selon l'invention et éventuellement d'au moins un liant, par des solutions contenant les précurseurs des oxydes de métaux des groupes VI et/ou VIII, les précurseurs des oxydes de métaux de groupe VIII étant de préférence introduits après ceux du groupe VIB ou en même temps que ces derniers. D'une façon préférée, le support est imprégné par une solution aqueuse. L'imprégnation du support est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le catalyseur de la présente invention peut donc renfermer au moins un élément du groupe VIII tel que fer, cobalt, nickel, ruthénium, rhodium, palladium, osmium, iridium ou platine. Parmi les métaux du groupe VIII on préfère employer un métal choisi dans le groupe formé par le fer, le cobalt, le nickel, le platine , le palladium et le ruthénium. Le catalyseur selon l'invention peut également renfermer au moins un élément du groupe VIB, de préférence le tungstène et le molybdène. D'une manière avantageuse on utilise les associations de métaux suivantes : platine, palladium, platine-palladium, nickel-molybdène, cobalt-molybdène, fer-molybdène, fer-tungstène, nickel-tungstène, cobalt-tungstène, les associations préférées sont : platine, palladium, platine-palladium, nickel-molybdène, cobalt-molybdène, cobalt-tungstène et encore plus avantageusement platine-palladium et nickel-tungstène. Il est également possible d'utiliser des associations de trois métaux par exemple nickel-cobalt-molybdène, nickel-molybdène-tungstène, nickel-cobalt-tungstène. D'une manière avantageuse on utilise les associations de métaux suivantes : nickel-niobium-molybdène, cobalt-nioblum-molybdène, fer-niobium-molybdène, nickel-niobium-tungstène, cobalt-niobium-tungstène, fer-niobium-tungstène, les associations préférées étant : nickel-niobium-molybdène, cobalt-niobium-molybdène. Il est également possible d'utiliser des associations de quatre métaux par exemple nickel-cobalt-niobium-molybdène. On peut également utiliser des associations contenant un métal noble tel que ruthénium-niobium-molybdène, ou encore ruthénium-nickel-niobium-molybdène.

L'un au moins des éléments suivants : phosphore et/ou bore et/ou silicium et éventuellement l'(les) élément(s) choisi(s) dans le(s) groupe(s) VIIB et VB, sont introduits dans le catalyseur à tout niveau de la préparation et selon toute technique connue de l'homme du métier.

Une méthode préférée selon l'invention consiste à déposer le ou les éléments dopants choisis, par exemple le couple bore-silicium, sur le précurseur calciné ou non, de préférence calciné. Pour cela on prépare une solution aqueuse d'au moins un sel de bore tel que le biborate d'ammonium ou le pentaborate d'ammonium en milieu alcalin et en présence d'eau oxygénée et on procède à une imprégnation dite à sec, dans laquelle on remplit le volume des pores du précurseur par la solution contenant par exemple le bore. Dans le cas où l'on dépose par exemple également du silicium, on utilisera par exemple une solution d'un composé du silicium de type silicone ou émulsion d'huile silicone.

Le dépôt de bore et de silicium peut aussi être réalisé de manière simultanée en utilisant par exemple une solution contenant un sel de bore et un composé du silicium de type silicone. Ainsi, par exemple dans le cas où le précurseur est un catalyseur de type nickel-tungstène supporté sur alumine-silice, il est possible d'imprégner ce précurseur par de la solution aqueuse de biborate d'ammonium et de silicone Rhodorsil E1 P de la société Rhodia de procéder à un séchage par exemple à 120°C, puis d'imprégner par une solution de fluorure d'ammonium, de procéder à un séchage par exemple à 120°C, et de procéder à une calcination par exemple et de façon préférée sous air en lit traversé, par exemple à 500°C pendant 4 heures.

L'élément dopant choisi dans le groupe formé par le phosphore, le silicium et le bore ainsi que les éléments des groupes VIIB, VB, peuvent être introduits par une ou plusieurs opérations d'imprégnation avec excès de solution sur le précurseur calciné.

Lorsqu'au moins un élément dopant, P et/ou B et/ou Si, est introduit, sa répartition et sa localisation peuvent être déterminées par des techniques telles que la microsonde de Castaing (profil de répartition des divers éléments), la microscopie électronique par transmission couplée à une analyse X des composants du catalyseurs, ou bien encore par l'établissement d'une cartographie de répartition des éléments présents dans le catalyseur par microsonde électronique. Ces techniques permettent de mettre en évidence la présence de ces éléments exogènes ajoutés après la synthèse de l'alumine-silice selon l'invention.

Il est intéressant de préparer des catalyseurs présentant des concentrations homogènes $C_{Mo}$, $C_{Ni}$, $C_W$ et $C_P$ le long de l'extrudé. Il est également intéressant de préparer des catalyseurs présentant des concentrations $C_{Mo}$, $C_{Ni}$, $C_W$ et $C_P$ au coeur et en périphérie différente. Ces catalyseurs présentent des profils de répartition dits en « cuvette » ou en « dôme ». Un autre type de répartition est celle en croûte où les éléments de la phase active sont répartis en surface.

De façon générale, le rapport coeur/bord des concentrations $C_{Mo}$, $C_{Ni}$, $C_W$ et $C_P$ est compris entre 0,1 et 3. Dans une variante de l'invention, il est compris entre 0,8 et 1,2. Dans une autre variante de l'invention, le rapport coeur/bord des concentrations $C_P$ est compris entre 0,3 et 0,8.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole. Les acides tungsto-phosphorique ou tungsto-molybdique peuvent être employés.

La teneur en phosphore est ajustée, sans que cela limite la portée de l'invention, de telle manière à former un composé mixte en solution et/ou sur le support par exemple tungstène -phosphore ou molybdène-tungstène-phosphore. Ces composés mixtes peuvent être des hétéropolyanions. Ces composés peuvent être des hétéropolynanions d'Anderson, par exemple. La teneur massique en phosphore calculée sous la forme $P_2O_5$ est comprise entre 0,01 et 5,5%, de préférence entre 0,01 et 4%, de manière très préférée entre 0,01 et 2,5%, de manière plus préférée entre 0,2 et 2,5%, et de manière encore plus préférée entre 0,2 et 2%.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool. De nombreuses sources de silicium peuvent être employées. Ainsi, on peut utiliser l'orthosilicate d'éthyle $Si(OEt)_4$, les siloxanes, les polysiloxanes, les silicones, les émulsions de silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone ou l'acide silicique mis en suspension dans l'eau.

Les métaux du groupe VIB et du groupe VIII du catalyseur de la présente invention peuvent être présents en totalité ou partiellement sous forme métallique et/ou oxyde et/ou sulfure.

Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels.

Les sources d'éléments du groupe VIII qui peuvent être utilisées sont bien connues de l'homme du métier. Par exemple, pour les métaux non nobles on utilisera les nitrates, les sulfates, les hydroxydes, les phosphates, les halogénures par exemple, chlorures, bromures et fluorures, les carboxylates par exemple acétates et carbonates. Pour les métaux nobles on utilisera les halogénures, par exemple les chlorures, les nitrates, les acides tels que l'acide chloroplatinique, les oxychlorures tels que l'oxychlorure ammoniacal de ruthénium.

De préférence, on n'ajoute pas d'halogènes autres que celui introduit à l'imprégnation, cet halogène étant de préférence le chlore.

Préparation du support

Le demandeur a découvert que les supports alumino-silicates obtenus à partir d'un mélange à quelque étape que ce soit d'un composé d'alumine partiellement soluble en milieu acide avec un composé de silice (généralement totalement soluble) ou avec une combinaison totalement soluble d'alumine et de silice hydratées, mise en forme suivie d'un traitement hydrothermal ou thermique afin de l'homogénéiser à l'échelle micrométrique, voire à l'échelle nanométrique permettait d'obtenir un catalyseur particulièrement actif dans les procédés d'hydrocraquage. Par partiellement soluble en milieu acide, le demandeur entend que la mise en contact du composé d'alumine avant toute addition du composé de silice totalement soluble ou de la combinaison avec une solution acide par exemple d'acide nitrique ou d'acide sulfurique provoque leur dissolution partielle.

Dans un autre mode de réalisation, il est possible d'obtenir des supports selon l'invention en utilisant de la poudre de silice séchée ou hydratée.

***Sources de silice***

Les composés de silice utilisés selon l'invention peuvent avoir été choisis dans le groupe formé par l'acide silicique, les sols ou les poudres d'acide silicique, les silicates alcalins hydrosolubles, les sels cationiques de silicium, par exemple le métasilicate de sodium hydraté, le Ludox® sous forme ammoniacale ou sous forme alcaline, les silicates d'ammonium quaternaire. Le sol de silice peut être préparé selon l'une des méthodes connues de l'homme de l'art. De manière préférée, une solution d'acide orthosilicique décationisée est préparée à partir d'un silicate alcalin hydrosoluble par échange ionique sur une résine. Dans un autre mode de réalisation, les sols de silice Nyacol® ou Nyacol® Nano technologies peuvent être utilisés. Dans un autre mode de réalisation, les poudres de silice Aerosil® ou Nyasil® peuvent être utilisées.

Sources de alumine-silices totalement solubles

Lés alumines-silice hydratées totalement solubles utilisées selon l'invéntion peuvent être préparées par coprécipitation vraie en conditions opératoires stationnaires maîtrisées (pH, concentration, température, temps de séjour moyen) par réaction d'une solution basique contenant le silicium, par exemple sous forme de silicate de sodium, optionnellement de l'aluminium par exemple sous forme d'aluminate de sodium avec une solution acide contenant au moins un sel d'aluminium par exemple le sulfate d'aluminium. Au moins un carbonate ou encore du $CO_2$ peut éventuellement être rajouté au milieu réactionnel.

Par coprécipitation vraie, le demandeur entend un procédé par lequel au moins un composé d'aluminium totalement soluble en milieu basique ou acide comme décrit ci-après, au moins un composé de silicium comme décrit ci-après sont mis en contact, simultanément ou séquentiellement, en présence d'au moins un composé précipitant et/ou coprécipitant de façon à obtenir une phase mixte essentiellement constituée de alumine-silice hydratée laquelle est éventuellement homogénéisée par agitation intense, cisaillement, broyage colloïdal ou encore par combinaison de ces opérations unitaires. Par exemple, ces silices-alumines hydratées peuvent avoir été préparées selon les enseignements des brevets américains US 2 908 635; US 3 423 332, US 3 433 747, US 3 451 947, US 3 629 152, US 3 650 988.

La dissolution totale du composé de silice ou de la combinaison a été évaluée de manière approchée selon la méthode suivante. Une quantité fixée (15 g) du composé de silice ou de la combinaison hydratée est introduite dans un milieu de pH préétabli. De manière préférée, la concentration de solide rapporté par litre de suspension est 0,2 mole par litre. Le pH de la solution de dispersion est au moins de 12 et il peut être obtenu par utilisation d'une source alcaline. De manière préférée, il est intéressant d'utiliser NaOH. Le mélange est ensuite agité mécaniquement par un agitateur à turbine de type défloculeuse pendant 30 minutes à 800 t/min. Une fois, l'agitation terminée, le mélange est centrifugé 10 minutes à 3000 t/min. Le gâteau est séparé du liquide surnageant. La solution a été filtré sur un filtre de porosité 4 de diamètre 19 cm. On procède ensuite au séchage puis à la calcination à 1000°C des 2 fractions. Puis, on définit un rapport R égal en divisant la masse décantée par la masse de solide en suspension. Par totalement soluble, on entend un rapport R au moins supérieur à 0,9.

### Sources d'alumine

Les composés d'alumine utilisés selon l'invention sont partiellement solubles en milieu acide. Ils sont choisis tout ou en partie dans le groupe des composés d'alumine de formule générale $Al_2O_3$, $nH_2O$. On peut en particulier utiliser des composés hydratés d'alumine tels que : l'hydrargillite, la gibbsite, la bayerite, la boehmite, la pseudo-boehmite et les gels d'alumine amorphe ou essentiellement amorphe. On peut également mettre en oeuvre les formes déshydratées de ces composés qui sont constitués d'alumines de transition et qui comportent au moins une des phases prises dans le groupe : rhô, khi, êta, gamma, kappa, thêta, et delta, qui se différencient essentiellement par l'organisation de leur structure cristalline. L'alumine alpha appelée communément corindon peut être incorporée dans une faible proportion dans le support selon l'invention.

Cette propriété de dissolution partielle est une propriété recherchée de l'invention, elle s'applique aux poudres d'alumine hydratées, aux poudres atomisées d'alumine hydratées, aux dispersions ou suspensions d'alumine hydratées ou à l'une quelconque de leur combinaison, avant une quelconque addition d'un composé contenant tout ou en partie du silicium.

La dissolution partielle du composé d'alumine a été évaluée de manière approchée selon la méthode suivante. Une quantité précise du composé d'alumine en poudre ou en suspension est introduite dans un milieu de pH préétabli. Le mélange est ensuite agité mécaniquement. Une fois, l'agitation terminée, le mélange est laissé sans agitation durant 24 heures. De manière préférée, la concentration de solide en $Al_2O_3$ rapportée par litre de suspension est 0,5 mole par litre. Le pH de la solution de dispersion est de 2 et est obtenu soit par utilisation de $HNO_3$, soit de HCl, soit de $HClO_4$. De manière préférée, il est intéressant d'utiliser $HNO_3$. La répartition des fractions sédimentées et dissoutes a été suivie par dosage de l'aluminium par absorption UV. Les surnageants ont été ultrafiltrés (membrane de polyetherssulfones, Millipore NMWL : 30 000) et digérés dans de l'acide concentré. La quantité d'aluminium dans le surnageant correspond au composé d'alumine non sédimentée et à l'aluminium dissous et la fraction ultrafiltrée à l'aluminium dissous uniquement. La quantité de particules sédimentées est déduite de la concentration théorique en aluminium dans la dispersion (en considérant que tout le solide introduit est dispersé) et des quantités de boehmite réellement dispersées et d'aluminium en solution.

Les précurseurs d'alumine utilisés selon la présente invention se distinguent donc de ceux utilisés dans le cas des co-précipitations vraies, qui sont entièrement solubles en milieu acide : sels cationiques d'alumine, par exemple le nitrate d'aluminium. Les méthodes faisant partie de l'invention se distinguent des co-précipitations vraies car l'un des éléments, en l'occurrence le composé d'aluminium, est partiellement soluble.

Pour mettre en oeuvre l'alumine, tout composé d'alumine de formule générale $Al_2O_3$, $nH_2O$ peut être utilisé. Sa surface spécifique est comprise entre 150 et 600 $m^2$/g. On peut en particulier utiliser des composés hydratés d'alumine tels que : l'hydrargillite, la gibbsite, la bayerite, la boehmite, la pseudo-boehmite et les gels d'alumine amorphe ou essentiellement amorphe. On peut également mettre en oeuvre les formes déshydratées de ces composés qui sont constitués d'alumines de transition et qui comportent au moins une des phases prises dans le groupe : rho, khi, eta, gamma, kappa, thêta, delta et alpha, qui se différencient essentiellement par l'organisation de leur structure cristalline.

Lors de traitements thermiques, ces différentes formes sont susceptibles d'évolution entre elles, selon une filiation complexe qui dépend des conditions opératoires du traitement. On peut également utiliser dans des proportions mesurées l'alumine alpha appelée communément corindon.

L'hydrate d'aluminium $Al_2O_3$, $nH_2O$ utilisé de manière plus préférentielle est la boehmite, la pseudo-boehmite et les gels d'alumine amorphe ou essentiellement amorphe. Un mélange de ces produits sous quelque combinaison que ce soit peut être également utilisé.

La boehmite est généralement décrite comme un monohydrate d'aluminium de formule $Al_2O_3$, $nH_2O$ qui englobe en réalité un large continuum de matériaux de degré d'hydratation et d'organisation variables avec des frontières plus ou moins bien définies : la boehmite gélatineuse la plus hydratée, avec n pouvant être supérieur à 2, la pseudo-boehmite ou la boehmite micro-cristalline avec n compris entre 1 et 2, puis la boehmite cristalline et enfin la boehmite bien cristallisée en gros cristaux avec n voisin de 1. La morphologie du monohydrate d'aluminium peut varier dans de larges limites entre ces deux formes extrêmes aciculaire ou prismatique. Tout un ensemble de forme variables peut être utilisé entre ces deux formes : chaîne, bateaux, plaquettes entrelacées.

La préparation et/ou la mise en forme de l'hydrate d'aluminium peuvent ainsi constituer la première étape de la préparation de ces catalyseurs. De nombreux brevets relatent la préparation et/ou la mise en forme de supports à base d'alumine de transition issues de monohydrate d'aluminium: US 3 520 654 ; US 3 630 670 ; US 3 864 461 ; US 4 154 812 ; US 4 313 923 ; DE 3243193 ; US 4 371 513..

Des hydrates d'aluminium relativement purs peuvent être utilisés sous forme de poudre, amorphes ou cristallisés ou cristallisés contenant une partie amorphe. L'hydrate d'aluminium peut également être introduit sous forme de suspensions ou dispersions aqueuses. Les suspensions ou dispersions aqueuses d'hydrate d'aluminium mise en oeuvre selon l'invention peuvent être gélifiables ou coagulables. Les dispersions ou suspensions aqueuses peuvent également être obtenues ainsi qu'il est bien connu de l'homme de l'art par peptisation dans l'eau ou l'eau acidulée d'hydrates d'aluminium.

La dispersion d'hydrate d'aluminium peut être réalisée par tout procédé connu de l'homme de l'art: dans un réacteur en batch, un mélangeur en continu, un malaxeur, un broyeur colloïdal. Un tel mélange peut être également réalisé dans un réacteur à écoulement piston et, notamment dans un mélangeur statique. On peut citer les réacteurs Lightnin.

En outre, on peut également mettre en oeuvre comme source d'alumine une alumine ayant été soumise au préalable à un traitement susceptible d'améliorer son degré de dispersion. A titre d'exemple, on pourra améliorer la dispersion de la source d'alumine par un traitement d'homogénéisation préliminaire. Par homogénéisation, on peut utiliser au moins un des traitements d'homogénéisation décrit dans le texte qui suit.

Les dispersions ou suspensions aqueuses d'alumine que l'on peut mettre en oeuvre sont notamment les suspensions ou dispersions aqueuses de boehmites fines ou ultra-fines qui sont composés de particules ayant des dimensions dans le domaine colloïdal.

Les boehmites fines ou ultra-fines mises en oeuvre selon la résente invention peuvent notamment avoir été obtenues selon le brevet français FR - 1 261 182 et FR - 1 381 282 ou dans la demande de brevet européen EP 15 196.

On peut mettre en oeuvre également les suspensions ou dispersions aqueuses obtenues à partir de pseudo-boehmite, de gels d'alumine amorphe, de gels d'hydroxyde d'aluminium ou d'hydrargillite ultra-fine.

Le monohydrate d'aluminium peut être acheté parmi une variété de sources commerciales d'alumine telle que notamment les PURAL®, CATAPAL®, DISPERAL®, DISPAL® commercialisée par la société SASOL ou encore HIQ® commercialisée par ALCOA, ou selon les méthodes connues de l'homme de l'art : elle peut être préparée par déshydratation partielle de trihydrate d'aluminium par des méthodes conventionnelles ou elle peut être préparée par précipitation. Lorsque ces alumines se présentent sous forme d'un gel, elles sont peptisées par l'eau ou une solution acidulée. Dans la précipitation, la source acide peut-être par exemple choisie parmi au moins un des composés suivants : le chlorure d'aluminium, le sulfate d'aluminium, le nitrate d'aluminium. La source basique d'aluminium peut être choisie parmi les sels basiques d'aluminium tels que l'aluminate de sodium et l'aluminate de potassium.

Comme agents précipitants, l'hydroxyde de sodium, le carbonate de sodium, la potasse et l'ammoniaque peuvent être utilisés. Les agents précipitants sont choisis de telle manière que la source d'alumine selon la présente invention et ces agents soient précipités ensemble.

Selon la nature acide ou basique du composé de départ à base d'aluminium, on précipite l'hydrate d'aluminium à l'aide d'une base ou d'un acide choisi, par exemple parmi l'acide chlorhydrique, l'acide sulfurique, la soude ou un composé basique ou acide de l'aluminium tel que cités ci-dessus. Les deux réactifs peuvent être le sulfate d'aluminium et l'aluminate de soude. Pour un exemple de préparation de alpha-monohydrate d'aluminium utilisant le sulfate d'aluminium et l'aluminate de soude, on peut se référer notamment au brevet US 4 154 812.

La pseudo-boehmite peut notamment avoir été préparée selon le procédé décrit dans le brevet américain US 3 630 670 par réaction d'une solution d'aluminate alcalin avec une solution d'un acide minéral. La pseudo-boehmite peut notamment avoir été préparée selon le procédé décrit dans le brevet américain US 3 630 670 par réaction d'une solution d'aluminate alcalin avec une solution d'un acide minéral. Elle peut également avoir été préparée tel que décrit dans le brevet français FR 1 357 830.

Les gels d'alumine amorphe peuvent notamment avoir été préparés selon les procédés décrits dans l'article "Alcoa paper n°19 (1972) pages 9 à 12" et notamment par réaction d'aluminate, d'acide ou d'un sel d'aluminium ou par hydrolyse d'alcoolates d'aluminium ou par hydrolyse de sels basiques d'aluminium.

Les gels d'hydroxyde d'aluminium peuvent notamment être ceux qui ont été préparés selon les procédés décrits dans les brevets américains US 3 268 295 et US 3 245 919.

Les gels d'hydroxyde d'aluminium peuvent notamment être ceux préparés selon les procédés décrits dans le brevet WO 00/01617, par mélange d'une source acide d'aluminium et d'une base ou d'une source basique d'aluminium et d'un acide de manière à précipiter un monohydrate d'alumine, les étapes suivantes étant :

2. mûrissement
3. filtration
4. lavage, et
5. séchage,

procédés caractérisés en ce que le mélange de l'étape une est réalisé sans rétromélange.

L'hydrargilite ultra-fine peut notamment avoir été préparée selon le procédé décrit dans le brevet US 1 371 808, par évolution à une température comprise entre la température ambiante et 60°C de gels d'alumine sous forme de gâteau et contenant par rapport à l'alumine compté en molécules d'$Al_2O_3$ 0,1 ions acides monovalents.

On peut également mettre en oeuvre les suspensions ou dispersions aqueuses de boehmite ou de pseudo-boehmite ultra-pures préparées selon un procédé dans lequel on effectue la réaction d'un aluminate alcalin avec de l'anhydride carbonique pour former un précipité d'hydroxycarbonate d'aluminium amorphe, on sépare le précipité obtenu par filtration puis on lave celui-ci (le procédé est notamment décrit dans le brevet américain US 3 268 295). Ensuite,

a) dans une première étape, on mélange le précipité lavé d'hydroxycarbonate d'aluminium amorphe avec une solution acide, d'une base ou d'un sel ou de leurs mélanges; ce mélange est effectué en versant la solution sur l'hydroxycarbonate, le pH du milieu ainsi constitué étant inférieur à 11,
b) dans une deuxième étape, on chauffe le milieu réactionnel ainsi constitué à une température inférieure à 90°C pendant un temps d'au moins 5 minutes
c) dans une troisième étape, on chauffe le milieu résultant de la deuxième étape à une température comprise entre 90°C et 250°C.

Les dispersions ou suspensions de boehmite et pseudo-boehmite obtenus selon ce procédé présentent une teneur en alcalins inférieure à 0,005% exprimée sous forme de rapport pondéral oxyde du métal alcalin /$Al_2O_3$.

Lorsqu'on désire fabriquer des supports de catalyseurs très purs, on utilise de préférence des suspensions ou dispersions de boehmites ou de pseudo-boehmites ultra-pures qui ont été obtenues selon le procédé qui a été décrit ci-dessus, ou les gels d'hydroxyde d'aluminium qui ont été préparés à partir de l'hydrolyse des alcoolates d'aluminium selon un procédé du type décrit dans le brevet américain US 2 892 858.

On décrit sommairement le procédé de fabrication qui conduit à de tels gels d'hydroxyde d'aluminium de type boehmite obtenue comme sous-produit dans la fabrication de l'alcool par hydrolyse d'un alcoolate ou alcoxyde d'aluminium (synthèse de Ziegler). Les réactions de synthèse d'alcools Ziegler sont décrites notamment dans le brevet américain US 2 892 858. Selon ce procédé, on prépare tout d'abord le triéthylaluminium à partir d'aluminium, d'hydrogène et d'éthylène, la réaction étant réalisée en deux étapes avec recyclage partiel du triéthylaluminium.

On ajoute de l'éthylène dans l'étape de polymérisation et on oxyde ensuite le produit obtenu en alcoolate d'aluminium, les alcools étant obtenus par hydrolyse.

Les gels d'hydroxyde d'aluminium peuvent également être ceux qui ont été préparés selon les procédés décrits dans les brevets américains US 4 676 928-A et US 6 030 599..

L'alumine hydratée obtenue comme sous-produit de la réaction de Ziegler est notamment décrite dans un bulletin de la société CONOCO du 19 janvier 1971..

La dimension des particules d'alumine constituant la source d'alumine peut varier dans de larges limites. Elle est généralement comprise entre 1 et 100 microns.

Méthodes

Le support peut être avantageusement préparé par l'une des méthodes décrites ci-après.

A titre d'exemple, une méthode de préparation d'une alumine-silice faisant partie de l'invention consiste à préparer à partir d'un silicate alcalin hydrosoluble une solution d'acide orthosilicique ($H_2SiO_4$, $H_2O$) décationisée par échange ionique puis à l'ajouter simultanément à un sel cationique d'aluminium en solution par exemple le nitrate et à de l'ammoniaque dans des conditions opératoires contrôlées ; ou encore ajouter la solution d'acide orthosilicique au sel cationique d'aluminium en solution et à coprécipiter la solution obtenue obtenue par de l'ammoniaque dans des conditions opératoires contrôlées conduisant à un produit homogène. Cet hydrogel de silice-alumine est mélangé avec de la poudre ou une suspension d'hydrate d'aluminium. Après filtration et lavage, séchage avec mise en forme puis calcination préférentiellement sous air, en four rotatif, à température élevée et pendant un temps suffisant pour favoriser les interactions entre l'alumine et la silice, généralement au moins 2 heures, un support répondant aux caractéristiques de l'invention est obtenu. Une autre méthode de préparation d'alumine-silice selon l'invention consiste à précipiter l'hydrate d'alumine comme ci-avant, à le filtrer et le laver puis à le mélanger avec l'acide orthosilicique aqueux de façon à obtenir une suspension, laquelle est intimement homogénéisée par forte agitation et cisaillement. Une turbine Ultraturrax ou encore une turbine Staro peut être utilisée, ou encore un broyeur colloïdal par exemple, un broyeur colloïdal Staro. La suspension homogène est alors séchée par atomisation comme ci-avant puis calcinée entre 500 et 1200°C pendant au moins 3 heures : un support silice-alumine utilisable dans le procédé selon l'invention est obtenu.

Une autre méthode faisant partie de l'invention consiste à préparer comme ci-avant une solution décationisée d'acide orthosilicique puis à l'ajouter simultanément ou consécutivement à un composé d'alumine, par exemple un hydrate d'aluminium en poudre ou en suspension acidulée. Afin d'augmenter le diamètre des pores du support silice-alumine final, au moins un composé basique peut éventuellement être rajouté au milieu réactionnel. Après une homogénéisation poussée de la suspension par agitation, ajustement éventuel par filtration de la teneur en matière sèche puis éventuellement ré-homogénéisation, le produit est séché avec mise en forme simultanément ou consécutivement, puis calciné comme ci-avant.

Une autre méthode faisant également partie de l'invention consiste à préparer une suspension ou une dispersion aqueuse d'alumine, par exemple un monohydrate d'aluminium puis à l'ajouter simultanément ou consécutivement à un composé de silice, par exemple un silicate de sodium. Afin d'augmenter le diamètre des pores du support silice-alumine final, au moins un composé basique peut éventuellement être rajouté au milieu réactionnel. Le support est obtenu par filtration et lavage, éventuellement lavage par une solution ammoniacale pour extraire par échange ionique le sodium résiduel, séchage avec mise en forme simultanément ou consécutivement. Après séchage avec mise en forme puis calcination comme ci-avant, un support répondant aux caractéristiques de l'invention est obtenu. La taille des particules d'alumine utilisée est de préférence comprise entre 1 et 100 microns pour obtenir une bonne homogénéisation du support silice-alumine selon l'invention.

Pour augmenter le diamètre des mésopores du support silice-alumine, il peut être particulièrement avantageux comme nous l'enseigne le brevet américain US 4 066 574 de préparer une suspension ou une dispersion aqueuse d'alumine, par exemple un monohydrate d'aluminium puis de neutraliser par une solution basique, par exemple de l'ammoniaque, puis à l'ajouter simultanément ou consécutivement à un composé de silice par exemple une solution décationisée d'acide orthosilicique. Après une homogénéisation poussée de la suspension par agitation intense, ajustement éventuel par filtration de la teneur en matière sèche puis ré-homogénéisation, le produit est séché avec mise en forme simultanément ou consécutivement, puis calciné comme ci-avant. Cette méthode fait également partie des méthodes utilisées selon l'invention.

Dans l'exposé des méthodes précitées, on emploie homogénéisation pour décrire la remise en solution d'un produit contenant une fraction solide par exemple une suspension, une poudre, un précipité filtré, puis sa dispersion sous agitation intense. L'homogénéisation d'une dispersion est un procédé bien connu de l'homme du métier. La dite-homogénéisation peut être réalisée par tout procédé connu de l'homme de l'art: à titre d'exemple dans un réacteur en batch, un mélangeur en continu, un malaxeur. Un tel mélange peut être réalisé dans un réacteur à écoulement piston et, notamment dans un réacteur statique. On peut citer les réacteurs Lightnin. Une turbine Ultraturrax® ou encore une turbine Staro® peut être utilisée, ou encore un broyeur colloïdal par exemple, un broyeur colloïdal Staro. Les broyeurs colloïdaux commerciaux IKA® peuvent être aussi utilisés.

Dans l'ensemble des méthodes précitées, il peut être éventuellement souhaitable d'ajouter, lors d'une étape quelconque de la préparation, une proportion mineure d'au moins un élément stabilisant choisi dans le groupe formé par la zircone et le titane.

Mise en forme des supports et catalyseurs

Le support peut être obtenu par mise en forme de l'alumine-silice par toute technique connue de l'homme du métier. La mise en forme peut être réalisée par exemple par extrusion, par pastillage, par la méthode de la coagulation en goutte (oil-drop), par granulation au plateau tournant ou par toute autre méthode bien connue de l'homme du métier.

La mise en forme peut également être réalisée en présence des différents constituants du catalyseur et extrusion de la pâte minérale obtenue, par pastillage, mise en forme sous forme de billes au drageoir tournant ou au tambour, coagulation en goutte, oil-drop, oil-up, ou tout autre procédé connu d'agglomération d'une poudre contenant de l'alumine et éventuellement d'autres ingrédients choisis parmi ceux mentionnés ci-dessus.

Les éléments constitutifs de la matrice du support peuvent également être introduits partiellement ou en totalité sous forme de poudre.

Les catalyseurs utilisés selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Par ailleurs, ces supports mis en oeuvre selon la présente invention peuvent avoir été traités ainsi qu'il est bien connu de l'homme de l'art par des additifs pour faciliter la mise en forme et/ou améliorer les propriétés mécaniques finales des supports alumino-silicates. A titre d'exemple d'additifs, on peut citer notamment la cellulose, la carboxyméthyl-cellulose, la carboxy-ethyl-cellulose, du tall-oil, les gommes xanthaniques, des agents tensio-actifs, des agents flocculants comme les polyacrylamides, le noir de carbone, les amidons, l'acide stéarique, l'alcool polyacrylique, l'alcool polyvinylique, des biopolymères, le glucose, les polyéthylènes glycols, etc.

Le réglage de la porosité caractéristiques des supports de l'invention est opéré partiellement lors de cette étape de mise en forme des particules de supports.

La mise en forme peut être réalisée en utilisant les techniques de mise en forme des catalyseurs, connues de l'homme de l'art, telles que par exemple: extrusion, dragéification, séchage par atomisation ou encore pastillage.

On peut ajouter ou retirer de l'eau pour ajuster la viscosité de la pâte à extruder. Cette étape peut être réalisée à tout stade de l'étape de malaxage. Dans le cas de supports alumino-silicates, il peut être avantageux de diminuer la quantité d'eau de la pâte afin d'accroître la puissance mécanique fournie à la pâte. Cette action se traduit généralement par une diminution du volume total pour une teneur en acide optimale.

Pour ajuster la teneur en matière solide de la pâte à extruder afin de la rendre extrudable, on peut également ajouter un composé majoritairement solide et de préférence un oxyde ou un hydrate. On utilisera de manière préférée un hydrate et de manière encore plus préférée un hydrate d'aluminium. La perte au feu de cet hydrate sera supérieure à 15%.

La teneur en acide ajouté au malaxage avant la misé en forme est inférieure à 30%, de préférence comprise entre 0,5 et 20% poids de la masse anhydre en silice et alumine engagée dans la synthèse.

L'extrusion peut être réalisée par n'importe quel outil conventionnel, disponible commercialement. La pâte issue du malaxage est extrudée à travers une filière, par exemple à l'aide d'un piston ou d'une mono-vis ou double vis d'extrusion. Cette étape d'extrusion peut être réalisée par toute méthode connue de l'homme de métier.

Les extrudés de support selon l'invention ont généralement une résistance à l'écrasement d'au moins 70 N/cm et de manière préférée supérieure ou égale à 100 N/cm.

Calcination du support

Le séchage est effectué par toute technique connue de l'homme du métier. Pour obtenir le support de la présente invention, il est préférable de calciner de préférence en présence d'oxygène moléculaire, par exemple en effectuant un balayage d'air, à une température inférieure ou égale à 1100°C. Au moins une calcination peut être effectuée après l'une quelconque des étapes de la préparation. Ce traitement par exemple peut être effectué en lit traversé, en lit léché ou en atmosphère statique. Par exemple, le four utilisé peut être un four rotatif tournant ou être un four vertical à couches traversées radiales. Les conditions de calcination: température et durée dépendent principalement de la température maximale d'utilisation du catalyseur. Les conditions préférées de calcination se situant entre plus d'une heure à 200°C à moins d'une heure à 1100°C. La calcination peut être opérée en présence de vapeur d'eau. La calcination finale peut être éventuellement effectuée en présence d'une vapeur acide ou basique. Par exemple, la calcination peut être réalisée sous pression partielle d'ammoniaque.

Traitements post-synthèse

Des traitements post-synthèse peuvent être effectués, de manière à améliorer les propriétés du support, notamment son homogénéité telle que définie précédemment.

Selon un mode de réalisation préféré, le traitement post-synthèse est un traitement hydrothermal. Le traitement hydrothermal est effectué par toute technique connue de l'homme du métier. Par traitement hydrothermal, on entend mise en contact à n'importe quel étape de l'élaboration du support mixte avec de l'eau en phase vapeur ou en phase liquide. Par traitement hydrothermal, on peut entendre notamment mûrissement, steaming (traitement à la vapeur), autoclavage, calcination sous air humide, réhydratation. Sans que cela réduise la portée de l'invention, un tel traitement a pour effet de rendre mobile le composant silice.

Selon l'invention, le mûrissement peut avoir lieu avant ou après la mise en forme. Selon un mode préféré de l'invention, le traitement hydrothermal se fait par steaming (traitement à la vapeur) dans un four en présence de vapeur d'eau. La température pendant le steaming (traitement à la vapeur) peut être comprise entre 600 et 1100 °C et de préférence supérieure à 700°C pendant une période de temps comprise entre 30 minutes et 3 heures. La teneur en vapeur d'eau est supérieure à 20 g d'eau par kg d'air sec et de préférence supérieure à 40 g d'eau par kg d'air sec et de manière préférée supérieure à 100 g d'eau par kg d'air sec. Un tel traitement peut, le cas échéant, remplacer totalement ou en partie le traitement de calcination.

Le support peut ainsi être avantageusement soumis à un traitement hydrothermal en atmosphère confinée. On entend par traitement hydrothermal en atmosphère confinée un traitement par passage à l'autoclave en présence d'eau sous une température supérieure à la température ambiante.

Au cours de ce traitement hydrothermal, on peut traiter de différentes manières l'alumine-silice mise en forme. Ainsi, on peut imprégner l'alumine silice d'acide, préalablement à son passage à l'autoclave, l'autoclavage de l'alumine-silice étant fait soit en phase vapeur, soit en phase liquide, cette phase vapeur ou liquide de l'autoclave pouvant être acide ou non. Cette imprégnation, préalable à l'autoclavage, peut être acide ou non. Cette imprégnation, préalable à l'autoclavage peut être effectuée à sec ou par immersion de l'alumine-silice dans une solution aqueuse acide. Par imprégnation à sec, on entend mise en contact de l'alumine avec un volume de solution inférieur ou égal au volume poreux total de l'alumine traitée. De préférence, l'imprégnation est réalisée à sec.

L'autoclave est de préférence un autoclave à panier rotatif tel que celui défini dans la demande brevet EP-A-0 387 109.

La température pendant l'autoclavage peut être comprise entre 100 et 250°C pendant une période de temps comprise entre 30 minutes et 3 heures.

Modes de réalisation du procédé selon l'invention

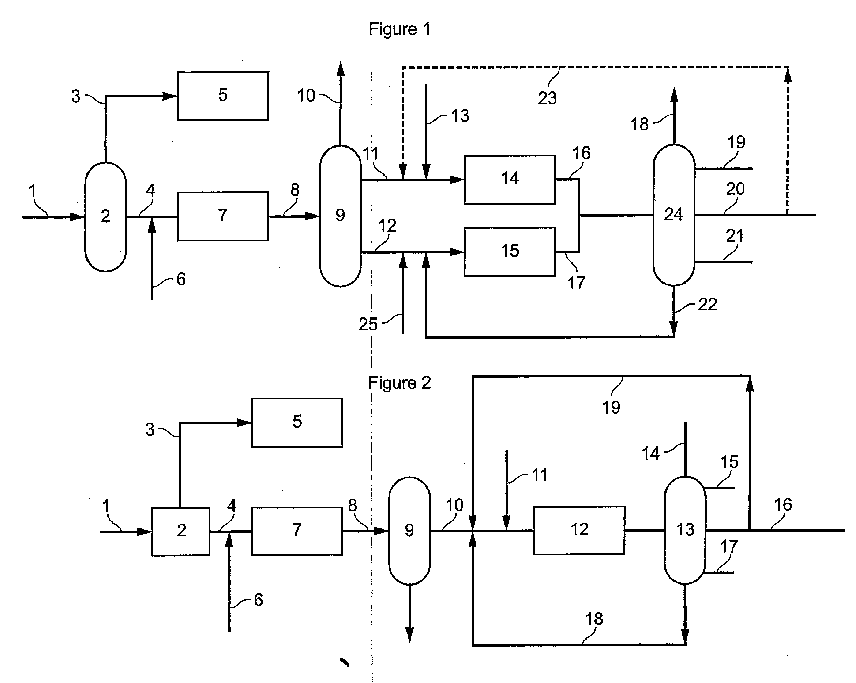

L'invention est ci-après décrite dans des modes préférés de réalisation et à partir des figures 1 à 6. Un mode de réalisation de l'invention comprend les étapes suivantes :

a) séparation d'une seule fraction dite lourde à point d'ébullition initial compris entre 120-200°C,
b) hydrotraitement d'une partie au moins de ladite fraction lourde,
c) fractionnement en au moins 3 fractions :

- au moins une fraction intermédiaire ayant un point d'ébullition initial T1 compris entre 120 et 200°C, et un point d'ébullition final T2 supérieur à 300°C et inférieur à 410°C,
- au moins une fraction légère bouillant au-dessous de la fraction intermédiaire,
- au moins une fraction lourde bouillant au-dessus de la fraction intermédiaire.

d) passage d'une partie au moins de ladite fraction intermédiaire dans un procédé selon l'invention sur un catalyseur non zéolitique d'hydroisomérisation / hydrocraquage,
e) passage dans un procédé selon l'invention sur un catalyseur non zéolitique d'hydroisomérisation / hydrocraquage d'une partie au moins de ladite fraction lourde,
f) distillation des fractions hydrocraquées / hydroisomérisées pour obtenir des distillats moyens, et recyclage de la fraction résiduelle bouillant au-dessus desdits distillats moyens dans l'étape (e) sur le catalyseur traitant la fraction lourde.

La description de ce mode de réalisation sera faite en se référant à la figure 1 sans que la figure 1 limité l'interprétation.

Etape (a)

L'effluent issu de l'unité de synthèse Fischer-Tropsch arrivant par la conduite 1 est fractionné (par exemple par distillation) dans un moyen de séparation (2) en au moins deux fractions : au moins une fraction légère et une fraction lourde à point d'ébullition initial égal à une température comprise entre 120 et 200°C et de préférence entre 130 et 180°C et de manière encore plus préférée à une température d'environ 150°C, en d'autres termes le point de coupe est situé entre 120 et 200°C. La fraction légère de la figure 1 sort par la conduite (3) et la fraction lourde par la conduite (4).

Ce fractionnement peut être réalisé par des méthodes bien connues de l'homme du métier telles que le flash, la distillation etc... A titre d'exemple non limitatif, l'effluent issu de l'unité de synthèse Fischer-Tropsch sera soumis à un flash, une décantation pour éliminer l'eau et une distillation afin d'obtenir au moins les 2 fractions décrites ci-dessus.

La fraction légère n'est pas traitée selon le procédé de l'invention mais peut par exemple constituer une bonne charge pour la pétrochimie et plus particulièrement pour une unité (5) de vapocraquage. La fraction lourde précédemment décrite est traitée selon le procédé de l'invention.

Etape (b)

Cette fraction est admise en présence d'hydrogène (conduite 6) dans une zone (7) contenant un catalyseur d'hydrotraitement qui a pour objectif de réduire la teneur en composés oléfiniques et insaturés ainsi que d'hydrotraiter les composés oxygénés (alcools) présents dans la fraction lourde décrite ci-dessus.

Les catalyseurs utilisés dans cette étape (b) sont des catalyseurs d'hydrotraitement non craquants ou peu craquants comportant au moins un métal du groupe VIII et/ou du groupe VI de la classification périodique des éléments.

Avantageusement, au moins un élément choisi parmi P, B, Si est déposé sur le support.

Ces catalyseurs peuvent être préparés par toutes les méthodes connues de l'homme de l'art ou bien peuvent être acquis auprès de sociétés spécialisées dans la fabrication et la vente de catalyseurs. Dans le réacteur d'hydrotraitement (7), la chargé est mise en contact en présence d'hydrogène et du catalyseur à des températures et des pressions opératoires permettant de réaliser l'hydrodeoxygénation (HDO) des alcools et l'hydrogénation des oléfines présents dans la charge. Les températures réactionnelles utilisées dans le réacteur d'hydrotraitement sont comprises entre 100 et 350°C, de préférence entre 150 et 300°C, de façon encore plus préférée entre 150 et 275°C et mieux encore entre 175 et 250°C. La gamme de pression totale utilisée varie de 5 à 150 bars, de préférence entre 10 et 100 bars et de manière encore plus préférée entre 10 et 90 bars. L'hydrogène qui alimente le réacteur d'hydrotraitement est introduit à un débit tel que le rapport volumique hydrogène/hydrocarbures soit compris entre 100 à 3000 Nl/l/h, de préférence entre 100 et 2000Nl/l/h et de façon encore plus préférée entre 250 et 1500 Nl/l/h. Le débit de charge est tel que la vitesse volumique horaire est comprise entre 0,1 et 10h$^{-1}$, de préférence entre 0,2 et 5h$^{-1}$ et de manière encore plus préférée entre 0,2 et 3h$^{-1}$. Dans ces conditions, la teneur en molécules insaturées et oxygénées est réduite à moins de 0,5% et à environ moins de 0,1% en général. L'étape d'hydrotraitement est conduite dans des conditions telles que la conversion en produits ayant des points d'ébullition supérieurs ou égaux à 370°C en des produits ayant des points d'ébullition inférieurs à 370°C est limitée à 30% poids, de préférence est inférieure à 20% et de façon encore plus préférée est inférieure à 10%.

Étape (c)

L'effluent issu du réacteur d'hydrotraitement est amené par une conduite (8) dans une zone de fractionnement (9) où il est fractionné en au moins trois fractions :

- au moins une fraction légère (sortant par la conduite 10) dont les composés constituants ont des points d'ébullition inférieurs à une température T1 comprise entre 120 et 200°C, et de préférence entre 130 et 180°C et de manière encore plus préférée à une température d'environ 150°C. En d'autres termes le point de coupe est situé entre 120 et 200°C.
- au moins une fraction intermédiaire (conduite 11) comportant les composés dont les points d'ébullition sont compris entre le point de coupe T1, précédemment défini, et une température T2 supérieure à 300°C, de manière encore plus préférée supérieure à 350°C et inférieure à 410°C ou mieux à 370°C.
- au moins une fraction dite lourde (conduite 12) comportant les composés ayant des points d'ébullition supérieurs au point de coupe T2 précédemment défini.

Le fractionnement est obtenu ici par distillation, mais il peut être réalisé en une ou plusieurs étapes et par d'autres moyens que la distillation.

Ce fractionnement peut être réalisé par des méthodes bien connues de l'homme du métier telles que le flash, la distillation etc...

Les fractions intermédiaires et lourdes précédemment décrites sont traitées selon le procédé de l'invention.

Étape (d)

Une partie au moins de ladite fraction intermédiaire est alors introduite (conduite 11), ainsi qu'éventuellement un flux d'hydrogène, (conduite 13) dans la zone (14) contenant le catalyseur d'hydroisomérisation / d'hydrocraquage du procédé selon la présente invention.

Les conditions opératoires dans lesquelles est effectuée cette étape (d) sont :

La pression est maintenue entre 2 et 150 bars et de préférence entre 5 et 100 bars et avantageusement de 10 à 90 bars, la vitesse spatiale est comprise entre 0,1 h$^{-1}$ et 10 h$^{-1}$ et de préférence entre 0,2 et 7h$^{-1}$ est avantageusement entre 0,5 et 5,0h$^{-1}$. Le taux d'hydrogène est compris entre 100 et 2000 Normaux litres d'hydrogène par litre de charge et par heure et préférentiellement entre 150 et 1500 litres d'hydrogène par litre de charge.

La température utilisée dans cette étape est comprise entre 200 et 450°C et préférentiellement de 250°C à 450°C avantageusement de 300 à 450°C, et encore plus avantageusement supérieure à 320°C ou par exemple entre 320-420°C.

L'étape (d) d'hydroisomérisation et d'hydrocraquage est avantageusement conduite dans des conditions telles que la conversion par passe en produits à points d'ébullition supérieurs ou égaux à 150°C en des produits ayant des points d'ébullition inférieurs à 150°C est la plus faible possible, de préférence inférieure à 50%, de manière encore plus préférée inférieure à 30%, et permet d'obtenir des distillats moyens (gazole et kérosène) ayant des propriétés à froid (point d'écoulement et de congélation) suffisamment bonnes pour satisfaire aux spécifications en vigueur pour ce type de carburant.

Ainsi dans cette étape (d), on cherche à favoriser l'hydroisomérisation plutôt que l'hydrocraquage.

Étape (e)

Une partie au moins de ladite fraction lourde est introduite via la ligne (12) dans une zone (15) où elle est mise, en présence d'hydrogène (25), au contact d'un catalyseur d'hydroisomérisation/hydrocraquage selon le procédé de la présente invention afin de produire une coupe distillat moyen (kérosène + gazole) présentant de bonnes propriétés à froid.

Le catalyseur utilisé dans la zone (15) de l'étape (e) pour réaliser les réactions d'hydrocraquage et d'hydroisomérisation de la fraction lourde, définie selon l'invention, est du même type que celui présent dans le réacteur (14). Cependant, il est à noter que les catalyseurs mis en oeuvre dans les réacteurs (14) et (15) peuvent être identiques ou différents.

Durant cette étape (e) la fraction entrant dans le réacteur subit au contact du catalyseur et en présence d'hydrogène essentiellement des réactions d'hydrocraquage qui, accompagnés de réactions d'hydroisomérisation des n-paraffines, vont permettre d'améliorer la qualité des produits formés et plus particulièrement les propriétés à froid du kérosène et du gazole, et également d'obtenir de très bons rendements en distillats. La conversion en produits ayant des points d'ébullition supérieurs ou égal à 370°C en produits à points d'ébullition inférieurs à 370°C est supérieure à 80% poids, souvent d'au moins 85% et de préférence supérieure ou égal à 88%. Par contre, les conversions des produits à point d'ébullition supérieurs ou égaux à 260°C en produits à points d'ébullition inférieurs à 260°C est d'au plus 90% poids, généralement d'au plus 70% ou 80%, et de préférence d'au plus 60% poids. Étape (f)

Les effluents en sortie des réacteurs (14) et (15) sont envoyés par les conduites (16) et (17) dans un train de distillation, qui intègre une distillation atmosphérique et éventuellement une distillation sous vide, et qui a pour but de séparer d'une part les produits légers inévitablement formés lors des étapes (d) et (e) par exemple les gaz ($C_1$-$C_4$) (conduite 18) et une coupe essence (conduite 19), et de distiller au moins une coupe gazole (conduite 21) et kérosène (conduite 20). Les fractions gazole et kérosène peuvent être recyclées (conduite 23) en partie, conjointement ou de façon séparée, en tête du réacteur (14) d'hydroisomérisation /hydrocraquage étape (d).

Il est également distillé une fraction (conduite 22) bouillant au-dessus du gazole, c'est à dire dont les composés qui la constituent ont des points d'ébullition supérieurs à ceux des distillats moyens (kérosène + gazole). Cette fraction, dite fraction résiduelle, présente généralement un point d'ébullition initial d'au moins 350°C, de préférence supérieure à 370°C. Cette fraction est avantageusement recyclée en tête du réacteur (15) via la conduite (26) d'hydroisomérisation /hydrocraquage de la fraction lourde (étape e).

Il peut être également avantageux de recycler une partie du kérosène et/ou du gazole dans l'étape (d), l'étape (e) ou les deux. De façon préférée, l'une au moins des fractions kérosène et/ou gazole est recyclée en partie dans l'étape (d) (zone 14). On a pu constater qu'il est avantageux de recycler une partie du kérosène pour améliorer ses propriétés à froid.

Avantageusement et dans le même temps, la fraction non hydrocraquée est recyclée en partie dans étape (e) (zone 15).

Il va sans dire que les coupes gazole et kérosène sont de préférence récupérées séparément, mais les points de coupe sont ajustés par l'exploitant en fonction de ses besoins.

Sur la figure 1, on a représenté une colonne (24) de distillation, mais deux colonnes peuvent être utilisées pour traiter séparément les coupes issues de zones (14) et (15).

Sur la figure 1, on a représenté seulement le recyclage du kérosène sur le catalyseur du réacteur (14). Il va sans dire qu'on peut aussi bien recycler une partie du gazole (séparément ou avec le kérosène) et de préférence sur le même catalyseur que le kérosène.

Un autre mode de réalisation de l'invention comprend les étapes suivantes :

a) séparation d'au moins une fraction légère de la charge de façon à obtenir une seule fraction dite lourde à point d'ébullition initial compris entre 120-200°C,
b) éventuel hydrotraitement de ladite fraction lourde, éventuellement suivi d'une étape
c) d'enlèvement d'au moins une partie de l'eau,

d) passage dans un procédé selon l'invention d'une partie au moins de ladite fraction éventuellement hydrotraitée, la conversion sur le catalyseur d'hydroisomérisation/hydrocraquage des produits à points d'ébullition supérieurs ou égaux à 370°C en produits à points d'ébullition inférieures à 370°C est supérieure à 80% pds,

e) distillation de la fraction hydrocraquée/hydroisomérisée pour obtenir des distillats moyens, et recyclage dans l'étape d) de la fraction résiduelle bouillant au-dessus desdits distillats moyens.

La description de ce mode de réalisation sera faite en se référant à la figure 2 sans que la figure 2 limite l'interprétation.

Étape (a)

L'effluent issu de l'unité de synthèse Fischer-Tropsch arrivant par la conduite 1 est fractionné (par exemple par distillation) dans un moyen de séparation (2) en au moins deux fractions : au moins une fraction légère et une fraction lourde à point d'ébullition initial égal à une température comprise entre 120 et 200°C et de préférence entre 130 et 180°C et de manière encore plus préférée à une température d'environ 150°C, en d'autres termes le point de coupe est situé entre 120 et 200°C. La fraction légère de la figure 1 sort par la conduite (3) et la fraction lourde par la conduite (4).

Ce fractionnement peut être réalisé par des méthodes bien connues de l'homme du métier telles que le flash, la distillation etc...

La fraction légère n'est pas traitée selon le procédé de l'invention mais peut par exemple constituer une bonne charge pour la pétrochimie et plus particulièrement pour une unité (5) de vapocraquage. La fraction lourde précédemment décrite est traitée selon le procédé de l'invention.

Étape (b)

Eventuellement, cette fraction est admise en présence d'hydrogène (conduite 6) dans une zone (7) contenant un catalyseur d'hydrotraitement qui a pour objectif de réduire la teneur en composés oléfiniques et insaturés ainsi que d'hydrotraiter les composés oxygénés (alcools) présents dans la fraction lourde décrite ci-dessus.

Les catalyseurs utilisés dans cette étape (b) sont des catalyseurs d'hydrotraitement non craquants ou peu craquants comportant au moins un métal du groupe VIII et/ou du groupe VI de la classification périodique des éléments.

Avantageusement, au moins un élément choisi parmi P, B, Si est déposé sur le support. Ces catalyseurs peuvent être préparés par toutes les méthodes connues de l'homme de l'art ou bien peuvent être acquis auprès de sociétés spécialisées dans la fabrication et la vente de catalyseurs. Dans le réacteur d'hydrotraitement (7), la charge est mise en contact en présence d'hydrogène et du catalyseur à des températures et des pressions opératoires permettant de réaliser l'hydrodeoxygénation (HDO) des alcools et l'hydrogénation des oléfines présents dans la charge. Les températures réactionnelles utilisées dans le réacteur d'hydrotraitement sont comprises entre 100 et 350°C, de préférence entre 150 et 300°C, de façon encore plus préférée entre 150 et 275°C et mieux encore entre 175 et 250°C. La gamme de pression totale utilisée varie dé 5 à 150 bars, de préférence entre 10 et 100 bars et de manière encore plus préférée entre 10 et 90 bars. L'hydrogène qui alimente le réacteur d'hydrotraitement est introduit à un débit tel que le rapport volumique hydrogène/hydrocarbures soit compris entre 100 à 3000 Nl/l/h, de préférence entre 100 et 2000Nl/l/h et de façon encore plus préférée entre 250 et 1500 Nl/l/h. Le débit de charge est tel que la vitesse volumique horaire est comprises entre 0,1 et 10h$^{-1}$, de préférence entre 0,2 et 5h$^{-1}$ et de manière encore plus préférée entre 0,2 et 3h$^{-1}$. Dans ces conditions, la teneur en molécules insaturées et oxygénées est réduite à moins de 0,5% et à environ moins de 0,1% en général. L'étape d'hydrotraitement est conduite dans des conditions telles que la conversion en produits ayant des points d'ébullition supérieurs ou égaux à 370°C en des produits ayant des points d'ébullition inférieurs à 370°C est limitée à 30% pds, de préférence est inférieure à 20% et de façon encore plus préférée est inférieure à 10%.

Étape (c)

L'effluent (conduite 8) issu du réacteur (7) d'hydrotraitement est éventuellement introduit dans une zone (9) d'enlèvement d'eau qui a pour but d'éliminer au moins en partie l'eau produite lors des réactions d'hydrotraitement. Cette élimination d'eau peut s'effectuer avec ou sans élimination de la fraction gazeuse C$_4$ moins qui est généralement produite lors de l'étape d'hydrotraitement. On entend par élimination de l'eau, l'élimination de l'eau produite par les réactions d'hydrodeoxygénation (HDO) des alcools mais on peut aussi y inclure l'élimination au moins en partie de l'eau de saturation des hydrocarbures. L'élimination de l'eau peut être réalisée par toutes les méthodes et techniques connues de l'homme du métier, par exemple par séchage, passage sur un dessicant, flash, décantation...

Étape (d)

La fraction lourde (éventuellement hydrotraitée) ainsi séchée est alors introduite (conduite 10) ainsi qu'éventuellement un flux d'hydrogène (conduite 11), dans la zone (12) contenant le catalyseur d'hydroisomérisation / hydrocraquage. Une autre éventualité du procédé aussi selon l'invention consiste à envoyer la totalité de l'effluent sortant du réacteur d'hydrotraitement (sans séchage) dans le réacteur contenant le catalyseur d'hydroisomérisation / hydrocraquage et de préférence en même temps qu'un flux d'hydrogène.

Avant utilisation dans la réaction, le métal contenu dans le catalyseur doit être réduit. Une des méthodes préférées pour conduire la réduction du métal est le traitement sous hydrogène à une température comprise entre 150°C et 650°C et une pression totale comprise entre 0,1 et 25 Mpa. Par exemple, une réduction consiste en un palier à 150°C de 2 heures puis une montée en température jusqu'à 450°C à la vitesse de 1°C/min puis un palier de 2 heures à 450°C ; durant toute cette étape de réduction, le débit d'hydrogène est de 1000 litres hydrogène/ litre catalyseur. Notons également que toute méthode de réduction ex-situ est convenable.

Les conditions opératoires dans lesquelles est effectuée cette étape (d) sont :

La pression est maintenue entre 2 et 150 bars et de préférence entre 5 et 100 bars et avantageusement de 10 à 90 bars, la vitesse spatiale est comprise entre 0,1 $h^{-1}$ et 10 $h^{-1}$ et de préférence entre 0,2 et 7$h^{-1}$ est avantageusement entre 0,5 et 5,0$h^{-1}$. Le taux d'hydrogène est compris entre 100 et 2000 Normaux litres d'hydrogène par litre de charge et par heure et préférentiellement entre 150 et 1500 litres d'hydrogène par litre de charge.

La température utilisée dans cette étape est comprise entre 200 et 450°C et préférentiellement de 250°C à 450°C avantageusement de 300 à 450°C, et encore plus avantageusement supérieure à 320°C ou par exemple entre 320-420°C.

L'étape d'hydroisomérisation et d'hydrocraquage est conduite dans des conditions telles que la conversion par passe en produits à points d'ébullition supérieurs ou égaux à 370°C en des produits ayant des points d'ébullition inférieurs à 370°C est supérieure à 80% poids, et de façon encore plus préférée d'au moins 85%, de préférence supérieure à 88%, de manière à obtenir des distillats moyens (gazole et kérosène) ayant des propriétés à froid suffisamment bonnes (point d'écoulement, point de congélation) pour satisfaire aux spécifications en vigueur pour ce type de carburant.

Les deux étapes, hydrotraitement ét hydroisomérisation-hydrocraquage, peuvent être réalisées sur les deux types de catalyseurs dans deux ou plusieurs réacteurs différents, ou/et dans un même réacteur.

Étape (e)

L'effluent (fraction dite hydrocraquée / hydroisomérisée) en sortie du réacteur (12), étape (d), est envoyé dans un train de distillation (13), qui intègre une distillation atmosphérique et éventuellement une distillation sous vide, qui a pour but de séparer les produits de conversion de point d'ébullition inférieur à 340°C et de préférence inférieur à 370°C et incluant notamment ceux formés lors de l'étape (d) dans le réacteur (12), et de séparer la fraction résiduelle dont le point initial d'ébullition est généralement supérieur à au moins 340°C et de préférence supérieur ou égal à au moins 370°C. Parmi les produits de conversion et hydroisomérisés, il est séparé outre les gaz légers C1-C4 (conduite 14) au moins une fraction essence (conduite 15), et au moins une fraction distillat moyen kérosène (conduite 16) et gazole (conduite 17). La fraction résiduelle dont le point initial d'ébullition est généralement supérieur à au moins 340°C et de préférence supérieur ou égal à au moins 370°C est recyclée (conduite18) en tête du réacteur (12) d'hydroisomérisation et d'hydrocraquage.

Il peut être également avantageux de recycler (conduite 19) dans l'étape (d) (réacteur 12) une partie du kérosène et/ou du gazole ainsi obtenus.

Un autre mode de réalisation de l'invention comprend les étapes suivantes :

a) Fractionnement (étape a) de la charge en au moins 3 fractions :

- au moins une fraction intermédiaire ayant un point d'ébullition initial T1 compris entre 120 et 200°C, et un point d'ébullition final T2 supérieur à 300°C et inférieur à 410°C,
- au moins une fraction légère bouillant au-dessous de la fraction intermédiaire,
- au moins une fraction lourde bouillant au-dessus de la fraction intermédiaire.

b) Hydrotraitement (étape b) d'au moins une partie de ladite fraction intermédiaire, puis passage (étape d) dans un procédé de traitement d'au moins une partie de la fraction hydrotraitée sur un catalyseur d'hydrocraquage/hydroisomérisation.

f) Passage (étape f) dans un procédé de traitement d'une partie au moins de ladite fraction lourde sur un catalyseur d'hydrocraquage/hydroisomérisation avec une conversion des produits 370°C$^+$ en produits 370°C moins supérieure à 80% poids.

e) et g) Distillation (étapes e et g) d'au moins une partie des fractions hydrocraquées / hydroisomérisées pour obtenir des distillats moyens.

et l'un au moins desdits procédés de traitement des étapes d) et f) est le procédé de l'invention.

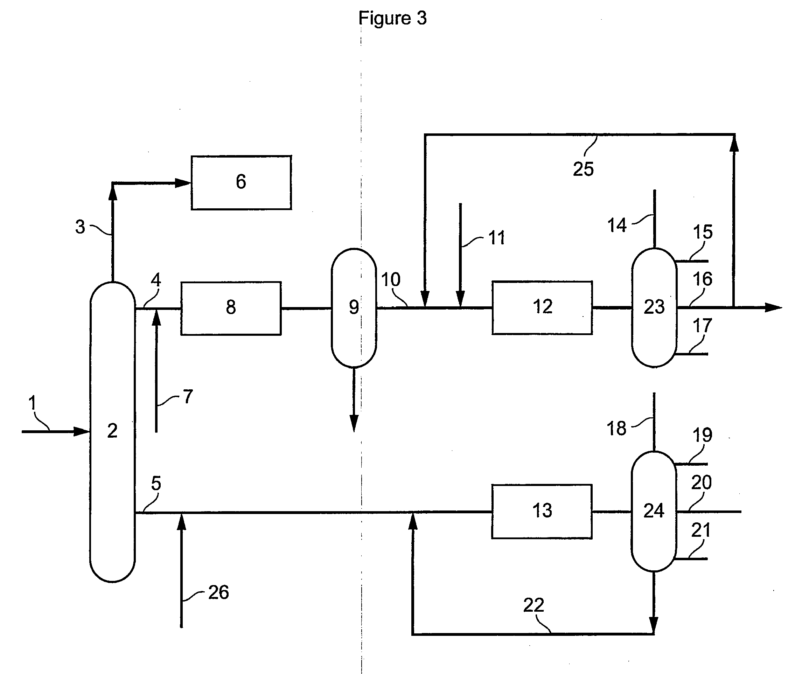

La description de ce mode de réalisation sera faite en se référant à la figure 3 sans que la figure 3 limite l'interprétation.

Étape (a)

L'effluent issu de l'unité de synthèse Fischer-Tropsch arrivant par la conduite (1) est fractionné dans un zone de fractionnement (2) en au moins trois fractions :

- au moins une fraction légère (sortant par la conduite 3) dont les composés constituants ont des points d'ébullition inférieurs à une température T1 comprise entre 120 et 200°C, et de préférence entre 130 et 180°C et de manière encore plus préférée à une température d'environ 150°C. En d'autres termes le point de coupe est situé entre 120 et 200°C.
- au moins une fraction intermédiaire (conduite 4) comportant les composés dont les points d'ébullition sont compris entre le point de coupe T1, précédemment défini, et une température T2 supérieure à 300°C, de manière encore plus préférée supérieure à 350°C et inférieure à 410°C ou mieux à 370°C.
- au moins une fraction dite lourde (conduite 5) comportant les composés ayant des points d'ébullition supérieurs au point de coupe T2 précédemment défini.

Une coupe entre un point d'ébullition T1 comprise entre 120 - 200°C et T2 supérieure à 300°C et inférieure à 370°C est préférée. La coupe à 370°C est encore plus préférée c'est à dire la fraction lourde est une coupe 370°C+.

Le fait de couper à 370°C permet de séparer au moins 90% pds des oxygénés et des oléfines, et le plus souvent au moins 95% pds. La coupe lourde à traiter est alors purifiée et une élimination des hétéroatomes ou insaturés par hydrotraitement n'est alors pas nécessaire.

Le fractionnement est obtenu ici par distillation, mais il peut être réalisé en une ou plusieurs étapes et par d'autres moyens que la distillation.

Ce fractionnement peut être réalisé par des méthodes bien connues de l'homme du métier telles que le flash, la distillation etc...

La fraction légère n'est pas traitée selon le procédé de l'invention mais peut par exemple constituer une bonne charge pour une unité pétrochimique et plus particulièrement pour un vapocraqueur (installation 6 de vapocraquage).

Les fractions plus lourdes précédemment décrites sont traitées selon le procédé de l'invention.

Étape (b)

Ladite fraction intermédiaire est admise via la ligne (4), en présence d'hydrogène amené par la tubulure (7), dans une zone d'hydrotraitement (8) contenant un catalyseur d'hydrotraitement. L'objectif de cet hydrotraitement est de réduire la teneur en composés oléfiniques et insaturés ainsi que d'hydrotraiter les-composés-oxygénés (alcools) présents.

Les catalyseurs utilisés dans cette étape (b) sont des catalyseurs d'hydrotraitement non craquants ou peu craquants comportant au moins un métal du groupe VIII et/ou du groupe VI de la classification périodique des éléments.

Avantageusement, au moins un élément choisi parmi P, B, Si est déposé sur le support.

Ces catalyseurs peuvent être préparés par toutes les méthodes connues de l'homme de l'art ou bien peuvent être acquis auprès de sociétés spécialisées dans la fabrication et la vente de catalyseurs.

Dans le réacteur d'hydrotraitement (8), la charge est mise en contact en présence d'hydrogène et du catalyseur à des températures et des pressions opératoires permettant de réaliser l'hydrodeoxygénation (HDO) des alcools et l'hydrogénation des oléfines présents dans la charge. Les températures réactionnelles utilisées dans le réacteur d'hydrotraitement sont comprises entre 100 et 350, de préférence entre 150 et 300°C, de façon encore plus préférée entre 150 et 275°C et mieux encore entre 175 et 250°C. La gamme de pression totale utilisée varie de 5 à 150 bars, de préférence entre 10 et 100 bars et de manière encore plus préférée entre 10 et 90 bars. L'hydrogène qui alimente le réacteur d'hydrotraitement est introduit à un débit tel que le rapport volumique hydrogène/hydrocarbures soit compris entre 100 à 3000 Nl/l/h, de préférence entre 100 et 2000Nl/l/h et de façon encore plus préférée entre 250 et 1500 Nl/l/h. Le débit de charge est tel que la vitesse volumique horaire est comprises entre 0,1 et 10h$^{-1}$, de préférence entre 0,2 et 5h$^{-1}$ et de manière encore plus préférée entre 0,2 et 3h$^{-1}$. Dans ces conditions, la teneur en molécules insaturées et oxygénées est réduite à moins de 0,5% et à environ moins de 0,1% en général. L'étape d'hydrotraitement est conduite dans des conditions telles que la conversion en produits ayant des points d'ébullition supérieurs ou égaux à 370°C en des produits ayant des points d'ébullition inférieurs à 370°C est limitée à 30% pds, de préférence est inférieure à 20% et de façon encore plus préférée est inférieure à 10%.

<u>Étape (c)</u>

L'effluent issu du réacteur d'hydrotraitement est éventuellement introduit dans une zone (9) d'enlèvement d'eau qui a pour but d'éliminer au moins une partie de l'eau produite lors des réactions d'hydrotraitement. Cette élimination d'eau peut s'effectuer avec ou sans élimination de la fraction gazeuse $C_4$ moins qui est généralement produite lors de l'étape d'hydrotraitement. On entend par élimination de l'eau, l'élimination de l'eau produite par les réactions d'hydrodeoxygénation (HDO) des alcools, mais on peut aussi y inclure l'élimination au moins en partie de l'eau de saturation des hydrocarbures. L'élimination de l'eau peut être réalisée par toutes les méthodes et techniques connues de l'homme du métier, par exemple par séchage, passage sur un dessicant, flash, décantation....

<u>Étape (d)</u>

La fraction ainsi éventuellement séchée est alors introduite (conduite 10), ainsi qu'éventuellement un flux d'hydrogène, (conduite 11) dans la zone (12) contenant le catalyseur d'hydroisomérisation / d'hydrocraquage. Une autre éventualité du procédé aussi selon l'invention consiste à envoyer la totalité de l'effluent sortant du réacteur d'hydrotraitement (sans séchage) dans le réacteur contenant le catalyseur d'hydroisomérisation / d'hydrocraquage et de préférence en même temps qu'un flux d'hydrogène.

Les conditions opératoires dans lesquelles est effectuée cette étape (d) sont :

La pression est maintenue entre 2 et 150 bars et de préférence entre 5 et 100 bars et avantageusement de 10 à 90 bars, la vitesse spatiale est comprise entre 0,1 h$^{-1}$ et 10 h$^{-1}$ et de préférence entre 0,2 et 7h$^{-1}$ est avantageusement entre 0,5 et 5,0h$^{-1}$. Le taux d'hydrogène est compris entre 100 et 2000 Normaux litres d'hydrogène par litre de charge et par heure et préférentiellement entre 150 et 1500 litres d'hydrogène par litre de charge.
La température utilisée dans cette étape est comprise entre 200 et 450°C et préférentiellement de 250°C à 450°C avantageusement de 300 à 450°C, et encore plus avantageusement supérieure à 320°C ou par exemple entre 320-420°C.

Les deux étapes, hydrotraitement et hydroisomérisation-hydrocraquage, peuvent être réalisées sur les deux types de catalyseurs dans deux ou plusieurs réacteurs différents, ou/et dans un même réacteur.

L'étape (d) d'hydroisomérisation et d'hydrocraquage est avantageusement conduite dans des conditions telles que la conversion par passe en produits à points d'ébullition supérieurs ou égaux à 150°C en des produits ayant des points d'ébullition inférieurs à 150°C est la plus faible possible, de préférence inférieure à 50%, de manière encore plus préférée inférieure à 30%, et permet d'obtenir des distillats moyens (gazole et kérosène) ayant des propriétés à froid (point d'écoulement et de congélation) suffisamment bonnes pour satisfaire aux spécifications en vigueur pour ce type de carburant.

Ainsi dans cette étape (d), on cherche à favoriser l'hydroisomérisation plutôt que l'hydrocraquage.

<u>Étape (f)</u>

Ladite fraction lourde dont les points d'ébullition sont supérieurs au point de coupe T2, précédemment défini, est introduite via la ligne (5) dans une zone (13) où elle est mise, en présence d'hydrogène (26), au contact d'un catalyseur non zéolitique d'hydroisomérisation/hydrocraquage afin de produire une coupe distillat moyen (kérosène + gazole) présentant de bonnes propriétés à froid.

Le catalyseur utilisé dans la zone (13) de l'étape (f) pour réaliser les réactions d'hydrocraquage et d'hdydroisomérisation de la fraction lourde, définie selon l'invention, est du même type que celui présent dans le réacteur (12). Cependant, il est à noter que les catalyseurs mis en oeuvre dans les réacteurs (12) et (13) peuvent être identiques ou différents.

Durant cette étape (f) la fraction entrant dans le réacteur subit au contact du catalyseur et en présence d'hydrogène essentiellement des réactions d'hydrocraquage qui, accompagnés de réactions d'hydroisomérisation des n-paraffines, vont permettre d'améliorer la qualité des produits formés et plus particulièrement les propriétés à froid du kérosène et du gazole, et également d'obtenir de très bons rendements en distillats. La conversion en produits ayant des points d'ébullition supérieurs ou égal à 370°C en produits à points d'ébullition inférieurs à 370°C est supérieure à 80% poids, souvent d'au moins 85% et de préférence supérieure ou égal à 88%. Par contre, les conversions des produits à point d'ébullition supérieurs ou égaux à 260°C en produits à points d'ébullition inférieurs à 260°C est d'au plus 90% poids, généralement d'au plus 70% ou 80%, et de préférence d'au plus 60% poids. Dans cette étape (f), on cherchera donc à favoriser l'hydrocraquage, mais de préférence en limitant le craquage du gazole.

Étape (g)

L'effluent en sortie du réacteur (12), étape (d) est envoyé dans un train de distillation, qui intègre une distillation atmosphérique et éventuellement une distillation sous vide, et qui a pour but de séparer d'une part les produits légers inévitablement formés lors de l'étape (d) par exemple les gaz ($C_1$-$C_4$) (conduite 14) et une coupe essence (conduite 19), et de distiller au moins une coupe gazole (conduite 17) et kérosène (conduite 16). Les fractions gazole et kérosène peuvent être recyclées (conduite 25) en partie, conjointement ou de façon séparée, en tête du réacteur (12) d'hydroisomérisation /hydrocraquage étape (d).

L'effluent en sortie de l'étape (f), est soumis à une étape de séparation dans un train de distillation de manière à séparer d'une part les produits légers inévitablement formés lors de l'étape (f) par exemple les gaz ($C_1$-$C_4$) (conduite 18) et une coupe essence (conduite 19), à distiller une coupe gazole (conduite 21) et kérosène (conduite 20) et à distiller la fraction (conduite 22) bouillant au-dessus de gazole, c'est à dire dont les composés qui la constituent ont des points d'ébullition supérieurs à ceux des distillats moyens (kérosène + gazole). Cette fraction, dite fraction résiduelle, présente généralement un point d'ébullition initial d'au moins 350°C, de préférence supérieure à 370°C. Cette fraction non hydrocraquée est avantageusement recyclée en tête du réacteur (conduite 13) d'hydroisomérisation /hydrocraquage étape (f).

Il peut être également avantageux de recycler une partie du kérosène et/ou du gazole dans l'étape (d), l'étape (f) ou les deux. De façon préférée, l'une au moins des fractions kérosène et/ou gazole est recyclée en partie (conduite 25) dans l'étape (d) (zone 12). On a pu constater qu'il est avantageux de recycler une partie du kérosène pour améliorer ses propriétés à froid. Avantageusement et dans le même temps, la fraction non hydrocraquée est recyclée en partie dans l'étape (f) (zone 13).

Il va sans dire que les coupes gazole et kérosène sont de préférence récupérées séparément, mais les points de coupe sont ajustés par l'exploitant en fonction de ses besoins.

Sur la figure 3, on a représenté 2 colonnes (23) et (24) de distillation, mais une seule peut être utilisée pour traiter l'ensemble des coupes issues de zones (12) et (13).

Sur la figure 3, on a représenté seulement le recyclage du kérosène sur le catalyseur du réacteur (12). Il va sans dire qu'on peut aussi bien recycler une partie du gazole (séparément ou avec le kérosène) et de préférence sur le même catalyseur que le kérosène. On peut également recycler une partie du kérosène et/ou du gazole produits dans les lignes (20) (21).

Un autre mode de réalisation de l'invention comprend les étapes suivantes :

a) éventuel fractionnement de la charge en au moins une fraction lourde à point d'ébullition initial compris entre 120 et 200°C, et au moins une fraction légère bouillant en-dessous de ladite fraction lourde,
b) éventuel hydrotraitement d'une partie au moins de la charge ou de la fraction lourde, éventuellement suivi d'une étape c)
c) élimination d'au moins une partie de l'eau,
d) passage d'une partie au moins de l'effluent ou de la fraction éventuellement hydrotraité dans un procédé de traitement sur un premier catalyseur d'hydroisomérisation / hydrocraquage contenant au moins un métal noble du groupe VIII,
e) distillation de l'effluent hydroisomérisé / hydrocraqué pour obtenir des distillats moyens (kérosène, gasoil) et une fraction résiduelle bouillant au-dessus des distillats moyens,
f) sur un second catalyseur d'hydroisomérisation / hydrocraquage contenant au moins un métal noble du groupe VIII, passage dans un procédé de traitement d'au moins une partie de ladite fraction lourde résiduelle et/ou d'une partie desdits distillats moyens, et distillation de l'effluent résultant pour obtenir des distillats moyens,

et l'un au moins desdits procédés de traitement de l'étape d) et f) est celui de l'invention.

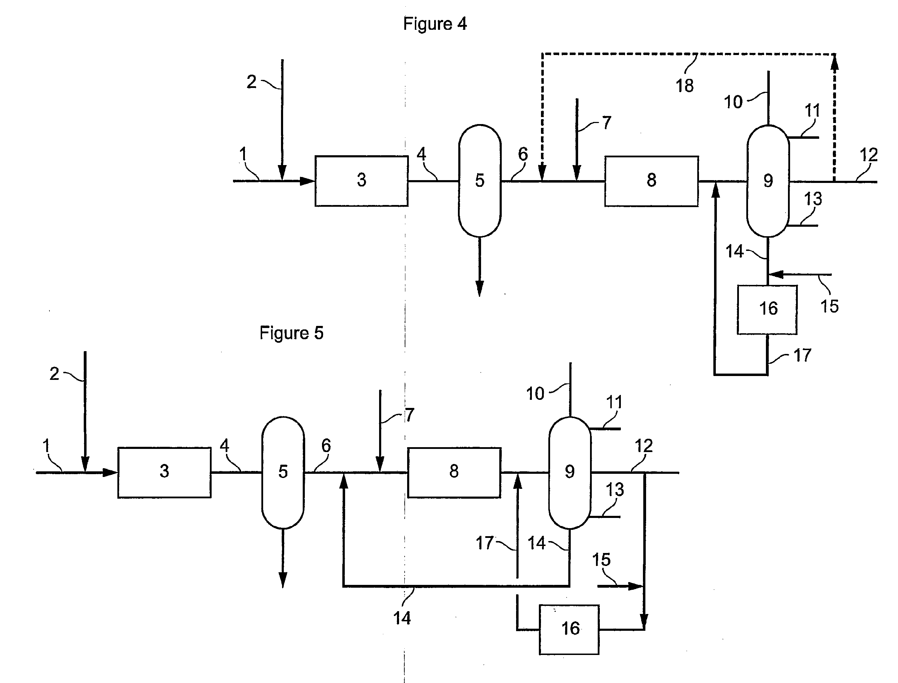

La description de ce mode de réalisation sera faite en se référant aux figures 4 et 5, sans que ces figures limitent l'interprétation.

Étape a)

Lorsque cette étape est mise en oeuvre, l'effluent issu de l'unité de synthèse Fischer-Tropsch est fractionné (par exemple par distillation) en au moins deux fractions : au moins une fraction légère et au moins une fraction lourde à point d'ébullition initial égal à une température comprise entre 120 et 200°C et de préférence entre 130 et 180°C et de manière encore plus préférée à une température d'environ 150°C, en d'autres termes le point de coupe est situé entre 120 et 200C.

La fraction lourde présente généralement des teneurs en paraffines d'au moins 50% poids.

Ce fractionnement peut être réalisé par des méthodes bien connues de l'homme du métier telles que le flash, la distillation etc... A titre d'exemple non limitatif, l'effluent issu de l'unité de synthèse Fischer-Tropsch sera soumis à un flash, une décantation pour éliminer l'eau et une distillation afin d'obtenir au moins les 2 fractions décrites ci-dessus.

La fraction légère n'est pas traitée selon le procédé de l'invention mais peut par exemple constituer une bonne charge pour la pétrochimie et plus particulièrement pour une unité de vapocraquage. Au moins une fraction lourde précédemment décrite est traitée selon le procédé de l'invention.

Étape b)

Eventuellement, cette fraction ou une partie au moins de la charge initiale, est admise via la ligne (1) en présence d'hydrogène (amené par la conduite (2)) dans une zone (3) contenant un catalyseur d'hydrotraitement qui a pour objectif de réduire la teneur en composés oléfiniques et insaturés ainsi que d'hydrotraiter les composés oxygénés (alcools) présents dans la fraction lourde décrite ci-dessus.

Les catalyseurs utilisés dans cette étape (b) sont des catalyseurs d'hydrotraitement non craquants ou peu craquants comportant au moins un métal du groupe VIII et/ou du groupe VI de la classification périodique des éléments.

Avantageusement, au moins un élément choisi parmi P, B, Si est déposé sur le support.

Ces catalyseurs peuvent être préparés par toutes les méthodes connues de l'homme de l'art ou bien peuvent être acquis auprès de sociétés spécialisées dans la fabrication et la vente de catalyseurs.

Dans le réacteur d'hydrotraitement (3), la charge est mise en contact en présence d'hydrogène et du catalyseur à des températures et des pressions opératoires permettant de réaliser l'hydrodeoxygénation (HDO) des alcools et l'hydrogénation des oléfines présents dans la charge. Les températures réactionnelles utilisées dans le réacteur d'hydrotraitement sont comprises entre 100 et 350, de préférence entre 150 et 300°C, de façon encore plus préférée entre 150 et 275°C et mieux encore entre 175 et 250°C. La gamme de pression totale utilisée varie de 5 à 150 bars, de préférence entre 10 et 100 bars et de manière encore plus préférée entre 10 et 90 bars. L'hydrogène qui alimente le réacteur d'hydrotraitement est introduit à un débit tel que le rapport volumique hydrogène/hydrocarbures soit compris entre 100 à 3000 Nl/l/h, de préférence entre 100 et 2000Nl/l/h et de façon encore plus préférée entre 250 et 1500 Nl/l/h. Le débit de charge est tel que la vitesse volumique horaire est comprises entre 0,1 et 10h$^{-1}$, de préférence entre 0,2 et 5h$^{-1}$ et de manière encore plus préférée entre 0,2 et 3h$^{-1}$. Dans ces conditions, la teneur en molécules insaturées et oxygénées est réduite à moins de 0,5% et à environ moins de 0,1% en général. L'étape d'hydrotraitement est conduite dans des conditions telles que la conversion en produits ayant des points d'ébullition supérieurs ou égaux à 370°C en des produits ayant des points d'ébullition inférieurs à 370°C est limitée à 30% pds, de préférence est inférieure à 20% et de façon encore plus préférée est inférieure à 10%.

Étape c)

L'effluent (conduite 4) issu du réacteur (3) d'hydrotraitement est éventuellement introduit dans une zone (5) d'enlèvement d'eau qui a pour but d'éliminer au moins en partie l'eau produite lors des réactions d'hydrotraitement. Cette élimination d'eau peut s'effectuer avec ou sans élimination de la fraction gazeuse C$_4$ moins qui est généralement produite lors de l'étape d'hydrotraitement. On entend par élimination de l'eau, l'élimination de l'eau produite par les réactions d'hydrodéoxygénation (HDO) des alcools mais on peut aussi y inclure l'élimination au moins en partie de l'eau de saturation des hydrocarbures. L'élimination de l'eau peut être réalisée par toutes les méthodes et techniques connues de l'homme du métier, par exemple par séchage, passage sur un dessicant, flash, décantation.

Étape d)

Une partie au moins et de préférence la totalité de la fraction hydrocarbonée (une partie au moins de la charge ou une partie au moins de la fraction lourde de l'étape a) ou une partie au moins de la fraction ou de la charge hydrotraitée et éventuellement séchée) est alors introduite (conduite 6) ainsi qu'éventuellement un flux d'hydrogène (conduite 7) dans la zone (8) contenant ledit premier catalyseur d'hydroisomérisation / hydrocraquage. Une autre éventualité du procédé aussi selon l'invention consiste à envoyer une partie ou la totalité de l'effluent sortant du réacteur d'hydrotraitement (sans séchage) dans le réacteur contenant le catalyseur d'hydroisomérisation / d'hydrocraquage et de préférence en même temps qu'un flux d'hydrogène.

Avant utilisation dans la réaction, le métal contenu dans le catalyseur doit être réduit. Une des méthodes préférées pour conduire la réduction du métal est le traitement sous hydrogène à une température comprise entre 150°C et 650°C et une pression totale comprise entre 0,1 et 25 Mpa. Par exemple, une réduction consiste en un palier à 150°C de 2 heures puis une montée en température jusqu'à 450°C à la vitesse de 1°C/min puis un palier de 2 heures à 450°C ; durant toute cette étape de réduction, le débit d'hydrogène est de 1000 litres hydrogène/ litre catalyseur. Notons également que toute méthode de réduction ex-situ est convenable.

Les conditions opératoires dans lesquelles est effectuée cette étape (d) sont :

La pression est maintenue entre 2 et 150 bars et de préférence entre 5 et 100 bars et avantageusement de 10 à 90 bars, la vitesse spatiale est comprise entre 0,1 h$^{-1}$ et 10 h$^{-1}$ et de préférence entre 0,2 et 7h$^{-1}$ est avantageusement entre 0,5 et 5,0h$^{-1}$. Le taux d'hydrogène est compris entre 100 et 2000 Normaux litres d'hydrogène par litre de charge et par heure et préférentiellement entre 150 et 1500 litres d'hydrogène par litre de charge.

La température utilisée dans cette étape est comprise entre 200 et 450°C et préférentiellement de 250°C à 450°C avantageusement de 300 à 450°C, et encore plus avantageusement supérieure à 320°C ou par exemple entre 320-420°C.

Les deux étapes, hydrotraitement et hydroisomérisation-hydrocraquage, peuvent être réalisées sur les deux types de catalyseurs dans deux ou plusieurs réacteurs différents, ou/et dans un même réacteur.

Étape e)

L'effluent hydroisomérisé / hydrocraqué en sortie du réacteur (8), étape (d), est envoyé dans un train de distillation (9) qui intègre une distillation atmosphérique et éventuellement une distillation sous vide qui a pour but de séparer les produits de conversion de point d'ébullition inférieur à 340°C et de préférence inférieur à 370°C et incluant notamment ceux formés lors de l'étape (d) dans le réacteur (8), et de séparer la fraction résiduelle dont le point initial d'ébullition est généralement supérieur à au moins 340°C et de préférence supérieur ou égal à au moins 370°C. Parmi les produits de conversion et hydroisomérisés il est séparé, outre les gaz légers C1-C4 (conduite 10) au moins une fraction essence (conduite 11), et au moins une fraction distillat moyen kérosène (conduite 12) et gazole (conduite 13).

Étape f)

Le procédé selon l'invention utilise une seconde zone (16) contenant un catalyseur d'hydroisomérisation / hydrocraquage (dit second catalyseur). Il passe sur ce catalyseur, en présence d'hydrogène (conduite 15) un effluent choisi parmi une partie du kérosène produit (conduite 12), une partie du gazole (conduite 13) et la fraction résiduelle et de préférence, la fraction résiduelle dont le point initial d'ébullition est généralement supérieur à au moins 370°C. Le catalyseur présent dans le réacteur (16) de l'étape (f) du procédé selon l'invention est de la même façon que pour l'étape d), de type acide non zéolitique et à base d'au moins un métal noble du groupe VIII ; cependant il peut être identique ou différent de celui de l'étape d).

Durant cette étape la fraction entrant dans le réacteur (16) subit aucontact du catalyseur et en présence d'hydrogène des réactions d'hydroisomérisation et/ou d'hydrocraquage qui vont permettre d'améliorer la qualité des produits formés et plus particulièrement les propriétés à froid du kérosène et du gazole, et d'obtenir des rendements en distillat amélioré par rapport à l'art antérieur.

Le choix des conditions opératoires permet d'ajuster finement la qualité des produits (distillats moyens) et en particulier les propriétés à froid.

Les conditions opératoires dans lesquelles est effectuée cette étape (f) sont :

La pression est maintenue entre 2 et 150 bars et de préférence entre 5 et 100 bars et avantageusement de 10 à 90 bars, la vitesse spatiale est comprise entre 0,1 h$^{-1}$ et 10 h$^{-1}$ et de préférence entre 0,2 et 7h$^{-1}$ est avantageusement entre 0,5 et 5,0h$^{-1}$. Le taux d'hydrogène est compris entre 100 et 2000 Normaux litres d'hydrogène par litre de charge et par heure et préférentiellement entre 150 et 1500 litres d'hydrogène par litre de charge.

La température utilisée dans cette étape est comprise entre 200 et 450°C et préférentiellement de 250°C à 450°C avantageusement de 300 à 450°C, et encore plus avantageusement supérieure à 320°C ou par exemple entre 320-420°C.

L'exploitant ajustera les conditions opératoires sur le premier et second catalyseur d'hydrocraquage/hydroisomérisation de façon à obtenir les qualités de produits et les rendements souhaités.

Ainsi, de façon générale, sur le premier catalyseur, la conversion par passe en produits à points d'ébullition supérieurs ou égaux à 150°C en des produits à points d'ébullition inférieurs à 150°C est inférieure à 50%pds, de préférence inférieure à 30% pds. Ces conditions permettent au particulier d'ajuster le rapport kérosène/gazole produits ainsi que les produits à froid des distillats moyens, et plus particulièrement du kérosène.

Egalement de façon générale, sur le second catalyseur, lorsque la fraction résiduelle est traitée, la conversion par passe en produits à points d'ébullition supérieurs ou égaux à 370°C en produits à points d'ébullition inférieurs à 370°C, est supérieure à 40% pds, de préférence supérieure à 50% pds, ou mieux à 60% pds. Il peut même s'avérer avantageux d'avoir des conversions d'au moins 80% pds.

Lorsqu'une partie du kérosène et/ou du gazole est traitée sur le second catalyseur, la conversion par passe en produits à points d'ébullition supérieurs ou égaux à 150°C en des produits à points d'ébullition inférieurs à 150°C est inférieure à 50% pds, de préférence inférieure à 30% pds.

De façon générale les conditions opérations appliquées dans les réacteurs (8) et (16) peuvent être différentes ou identiques. De façon préférée les conditions opératoires utilisées dans les 2 réacteurs d'hydroisomérisation / hydrocraquage sont choisies différentes en termes de pression opératoire, température, temps de contact (vvh) et rapport $H_2$/charge. Ce mode de réalisation permet à l'exploitant d'ajuster les qualités et/ou rendements en kérosène et gazole.

L'effluent issu du réacteur (16) est ensuite envoyé via la ligne (17) dans le train distillation de manière à séparer les produits de conversion, essence, kérosène et gazole.

Sur la figure 4, il est représenté un mode de réalisation avec la fraction résiduelle (conduite 14) passant dans la zone (16) d'hydroisomérisation / hydrocraquage (étape f), l'effluent obtenu étant envoyé (conduite 17) dans la zone (9) de séparation.

Avantageusement, dans le même temps, le kérosène et/ou le gazole peut être en partie recyclé (conduite 18) dans la zone (8) d'hydroisomérisation / hydrocraquage (étape d) sur le premier catalyseur.

Sur la figure 5, une partie du kérosène et/ou du gazole produits passent dans la zone (16) d'hydroisomérisation / hydrocraquage (étape f), l'effluent obtenu étant envoyé (conduite 17) dans la zone (9) de séparation.

Dans le même temps, la fraction résiduelle (conduite 14) est recyclée dans la zone (8) d'hydroisomérisation / hydrocraquage (étape d) sur le premier catalyseur.

On a pu constater qu'il est avantageux de recycler une partie du kérosène sur un catalyseur d'hydrocraquage / hydroisomérisation pour améliorer ses propriétés à froid.

Sur les figures 4 et 5, on a représenté seulement le recyclage du kérosène. Il va sans dire qu'on peut aussi bien recycler une partie du gazole (séparément ou avec le kérosène) et de préférence sur le même catalyseur que le kérosène.

L'invention peut également être utilisée dans d'autres modes de réalisation pour produire des distillats moyens.

Par exemple, un mode de réalisation inclut l'hydrotraitement d'un effluent issu de la synthèse Fischer-Tropsch en totalité ou après séparation de la fraction C4 moins (de préférence la conversion des produits ayant des points d'ébullition supérieurs à 370°C est inférieure à 20%), une éventuelle séparation de la fraction C4 moins de l'effluent d'hydrotraitement et au moins une partie de l'effluent résiduel est traité par le procédé selon l'invention (la conversion étant de préférence d'au moins 40%). Dans un autre mode de réalisation, l'effluent issu de la synthèse Fischer-Tropsch est séparé en une fraction lourde (de préférence bouillant au-dessus de 260°C) et au moins une fraction légère (de préférence bouillant en-dessous de 260°C), la fraction lourde est traitée par le procédé selon l'invention, au moins une fraction légère est hydrotraitée puis hydrocraquée/isomérisée de préférence selon le procédé de l'invention.

Dans un autre mode de réalisation de l'invention, le procédé peut être utilisé pour la production de distillats moyens, essentiellement en l'absence de composés organiques oxygénés, à partir d'un mélange synthétique d'hydrocarbures partiellement oxygénés issus du procédé de synthèse Fischer - Trospch, substantiellement linéaires, contenant au moins 20 % en poids d'une fraction ayant une température de distillation supérieure à 370°C. Le procédé comprend alors les étapes suivantes :

a) séparation dudit mélange en au moins une fraction à faible température d'ébullition (B) (généralement avec un point d'ébullition maximum allant de 150 à 380°C, préférentiellement de 260 à 370°C) plus riche en composés oxygénés et au moins une fraction à haute température d'ébullition (A) moins riche en composés oxygénés (généralement avec un point d'ébullition supérieur à 370°C, éventuellement comprenant au moins une partie d'une coupe gazole type) ;

b) soumission de ladite fraction (B) à un traitement hydrogénant dans des conditions de nature à éviter toute variation substantielle dans son poids moléculaire moyen pour obtenir un mélange hydrogéné d'hydrocarbures substantiellement non oxygénés;

c) recombinaison d'au moins une partie dudit mélange hydrogéné selon l'étape (b) avec ladite fraction (A) pour former un mélange (C) d'hydrocarbures linéaires avec un contenu réduit en hydrocarbures oxygénés et soumission dudit mélange (C) à un traitement d'hydrocraquage selon l'invention en présence d'un catalyseur d'hydroisomérisation/hydrocraquage, pour convertir au moins 40 % de ladite fraction à haut point d'ébullition en une fraction d'hydrocarbures pouvant être distillés à une température inférieure à 370°C;

d) séparation d'au moins une fraction d'hydrocarbures du produit obtenu à l'étape (c) dont la température de distillation est dans le domaine des distillats moyens.

La description de ce mode de réalisation sera faite en se référant à la figure (6), sans que cette figure limite l'interprétation.

Un flux synthétique d'hydrocarbures substantiellement linéaires, partiellement oxygénés ou essentiellement exempts de soufre obtenus par un procédé de type Fischer-Tropsch, de préférence de type "non-shifting" est ôté du réacteur de synthèse préalablement subdivisé en une fraction bouillant à haut point d'ébullition (A), avec un point d'ébullition initial allant de 250°C à 450°C, et une fraction à bas point d'ébullition (B), avec un point d'ébullition final allant de 200°C à 450°C. Le rapport massique (B)/(A) entre les deux fractions est de manière préférée compris entre 0,5 et 2,0, de manière plus préférée entre 0,8 et 1,5 et si nécessaire, la composition des deux fractions peut partiellement coïncider, avec une coupe d'hydrocarbures présente dans les deux fractions, préférentiellement en quantité allant de 0,1 à 20% en poids par rapport au poids total de chaque fraction.

La fraction à bas point d'ébullition (B) est chargée, par une ligne 1 dans l'unité d'hydrogénation (HDT) pour effectuer l'étape (b) du présent mode de réalisation, dans laquelle il est mis en contact avec de l'hydrogène (ligne 2) en présence d'un catalyseur adéquat, dans des conditions de nature à minimiser ou exclure la réaction d'hydrocraquage. Une fraction d'hydrocarbures produite dans l'étape d'hydrogénation ayant un contenu en oxygène inférieur à 0,001 % poids (dont la fraction d'hydrocarbures gazeux C5-) est avantageusement séparée et enlevée, par l'intermédiaire de la ligne 5. Cette fraction ne représente cependant pas plus de 5%, de préférence pas plus de 3% en poids de la fraction totale (B).

Une fraction à bas point d'ébullition est ainsi obtenue, essentiellement constituée d'un mélange d'hydrocarbures saturés, de préférence partiellement isomérisés, qui est au moins en partie, de préférence complètement ajoutée par l'intermédiaire de la ligne 4 à la fraction (A) (ligne 3) d'hydrocarbures à haut point d'ébullition à faible contenu en oxygène pour former une charge (C) qui alimente une unité d'hydrocraquage (HCK) selon l'étape (c) du présent mode de réalisation de l'invention.

Les flux suivants sont introduits dans l'unité d'hydrocraquage (HCK) :

- la charge (C), obtenue par l'adjonction de la fraction (A) et de la fraction résultant du prétraitement d'hydrogénation de la fraction (B), par l'intermédiaire de la ligne 4;
- la fraction à haut point d'ébullition recyclée par la ligne 12, ayant de préférence un point d'ébullition supérieur à 360°C, formant le résidu de la séparation du distillat moyen, dans un rapport de masse compris préférentiellement entre 1 et 40%, de manière plus préférée entre 5 et 15% par rapport à ladite charge (C);
- une quantité suffisante d'hydrogène par l'intermédiaire de la ligne 6.

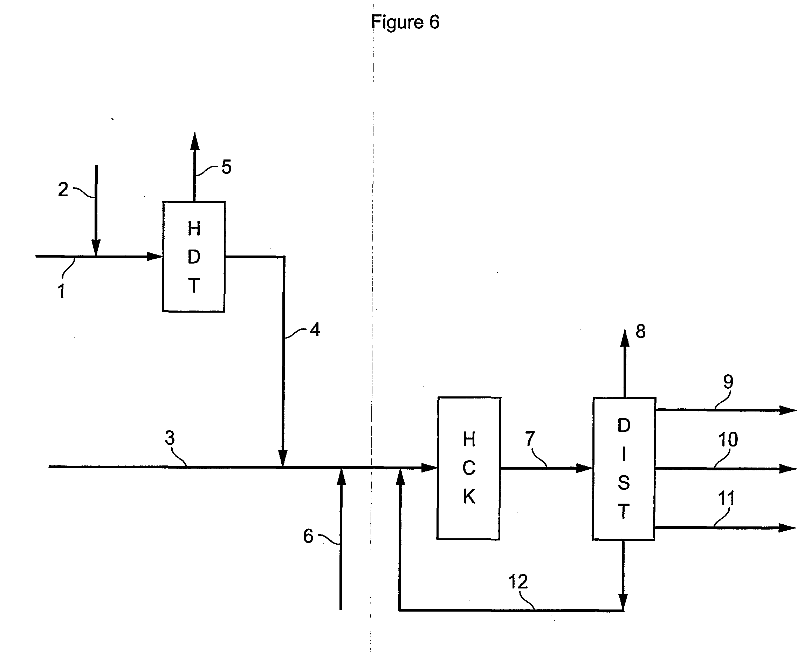

Le produit de l'étape d'hydrocraquage, composé d'un mélange d'hydrocarbures ayant un degré d'isomérisation (hydrocarbures non-linéaires / masse du mélange) de préférence supérieur à 50%, de manière plus préférée supérieur à 70% est introduit par l'intermédiaire de la ligne 7 dans une étape de séparation par distillation (DIST), de préférence dans une colonne opérant à pression atmosphérique ou légèrement au-dessus, dont les distillats visés sont retirés par l'intermédiaire des lignes 10 (kérosène) et 11 (gazole). Dans la figure 6, les produits suivants sont aussi obtenus dans l'unité de distillation : une fraction gazeuse C1-C5, relativement insignifiante, par l'intermédiaire de la ligne 8, et une fraction d'hydrocarbures légers, par l'intermédiaire de la ligne 9, de préférence avec un point d'ébullition inférieur à 150°C (naphta) qui est formé à l'étape (c).

<u>Les produits obtenus</u>

Le(s) gazole(s) obtenu (s) présente(nt) un point d'écoulement d'au plus 0°C, généralement inférieur à -10°C et souvent inférieur à -15°C. L'indice de cétane est supérieur à 60, généralement supérieur à 65, souvent supérieur à 70.

Le(s) kérosène(s) obtenu(s) présente(nt) un point de congélation d'au plus -35°C, (généralement inférieur à -40°C. Le point de fumée est supérieur à 25 mm, généralement supérieur à 30 mm. Dans ce procédé la production d'essence (non recherchée) est la plus faible possible. Le rendement en essence sera toujours inférieur à 50% poids, de préférence inférieur à 40% poids, avantageusement inférieur à 30% poids ou encore à 20% pds ou même à 15% poids.

<u>Exemple 1 : Préparation et mise en forme d'une alumine-silice conforme (SA1)</u>

Le support SA1 est obtenu de la manière suivante.

Les gels d'alumine-silice sont préparés en mélangeant du silicate de soude et de l'eau, en envoyant ce mélange sur une résine échangeuse d'ion. On ajoute une solution d'hexahydrate de chlorure d'aluminium dans l'eau au sol de silice décationisé. Afin d'obtenir un gel, on ajoute de l'ammoniaque, on filtre ensuite le précipité et on effectue un lavage avec une solution d'eau et d'ammoniaque concentrée jusqu'à que la conductivité de l'eau de lavage soit constante. Le gel issu de cette étape est mélangé avec de la poudre de boehmite Pural de façon à ce que la composition finale du support mixte en produit anhydre soit, à ce stade de la synthèse, égale à 70% $Al_2O_3$-30% $SiO_2$. Cette suspension est passée dans un broyeur colloïdal en présence d'acide nitrique. La teneur en acide nitrique rajouté est ajustée de manière que le pourcentage en sortie de broyeur d'acide nitrique soit de 8% rapporté à la masse d'oxyde mixte solide. Ce mélange est ensuite filtré afin de diminuer la quantité d'eau du gâteau mixte. Puis, le gâteau est malaxé en présence de 10% d'acide nitrique puis extrudé. Le malaxage se fait sur un malaxeur bras en Z. L'extrusion est réalisée par passage de la pâte au travers d'une filière munie d'orifices de diamètre 1,4 mm. Les extrudés ainsi obtenus sont séchés à 150°C, puis calcinés à 550°C, puis calcinés à 700°C en présence de vapeur d'eau.

Les caractéristiques du support SA1 sont les suivantes :

La composition du support en silice-alumine est 68% $Al_2O_3$ et de 32% $SiO_2$.
La surface BET est de 233 $m^2$/g.
Le volume poreux total, mesuré par adsorption d'azote, est de 0,38 ml/g
Le volume poreux total, mesuré porosimétrie mercure, est de 0,37 ml/g.
Le diamètre poreux moyen, mesuré par porosimétrie au mercure, est de 69 Å.
Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,95.
Le volume V3, mesuré par porosimétrie au mercure, compris dans les pores de diamètres supérieurs à $D_{moyen}$ + 30 Å est de 0,018 ml/g.
Le volume V6, mesuré par porosimétrie au mercure, compris dans les pores de diamètres supérieurs à $D_{moyen}$ + 15 Å est de 0,021 ml/g,
Le rapport entre la surface adsorption et la surface BET est de 0,83.
Le volume poreux, mesuré par porosimétrie au mercure, compris dans les pores de diamètre supérieurs à 140 Å est de 0,01 ml/g,
Le volume poreux, mesuré par porosimétrie au mercure, compris dans les pores de diamètre supérieurs à 160 Å est de 0,01 ml/g,
Le volume poreux, mesuré par porosimétrie au mercure, compris dans les pores de diamètre supérieurs à 200 Å est de 0,01 ml/g,
Le volume poreux, mesuré par porosimétrie au mercure, est compris dans les pores de diamètre supérieurs à 500 Å est de 0,006 ml/g,
Le rapport B/L du support est de 0.11.
Le diagramme de diffraction X contient les raies principales caractéristiques de l'alumine gamma et notamment il contient les pics à un d compris entre 1,39 à 1,40 Å et à un d compris entre 1,97 Å à 2,00 Å.
La teneur en sodium atomique est de 200 +/- 20 ppm. La teneur en soufre atomique est de 800 ppm.
Les spectres RMN MAS du solide de $^{27}Al$ des catalyseurs montrent deux massifs de pics distincts. Un premier type d'aluminium dont le maximum résonne vers 10 ppm s'étend entre -100 et 20 ppm. La position du maximum suggère que ces espèces sont essentiellement de type $Al_{VI}$ (octaédrique). Un deuxième type d'aluminium minoritaire dont le maximum résonne vers 60 ppm s'étend entre 20 et 100 ppm. Ce massif peut être décomposé en au moins deux espèces. L'espèce prédominante de ce massif correspondrait aux atomes d'$Al_{IV}$ (tétraédrique). La proportion des $Al_{VI}$ octaédriques est de 70%.

Le support contient deux zones alumino-silicates, les dites zones ayant des rapports Si/Al inférieurs ou supérieurs au rapport Si/Al global déterminé par fluorescence X. L'une des zones a un rapport Si/Al déterminé par MET de 0,35.

Exemple 2 : Préparation et mise en forme d'une alumine-silice conforme (SA2)

On prépare un hydrate d'alumine selon les enseignements du brevet US 3 124 418. Après filtration, le précipité fraîchement préparé est mélangé avec une solution d'acide silicique préparé par échange sur résine décationisante. Les proportions des deux solutions sont ajustées de manière à atteindre une composition de 70 % $Al_2O_3$- 30 % $SiO_2$ sur le support final. Ce mélange est rapidement homogénéisé dans un broyeur colloïdal commercial en présence d'acide nitrique de façon que la teneur en acide nitrique de la suspension en sortie de broyeur soit de 8% rapportée au solide mixte silice-alumine. Puis, la suspension est séchée classiquement dans un atomiseur de manière conventionnelle de 300°C à 60°C. La poudre ainsi préparée est mise en forme dans un bras en Z en présence de 3% d'acide nitrique par rapport au produit anhydre. L'extrusion est réalisée par passage de la pâte au travers d'une filière munie d'orifices de diamètre 1,4 mm. Les extrudés ainsi obtenus sont séchés à 150°C, puis calcinés à 550°C, puis calcinés à 750°C en présence de vapeur d'eau.

Les caractéristiques du support SA2 sont les suivantes :

La composition du support en silice-alumine est de 71 % $Al_2O_3$ et de 29% $SiO_2$.
La surface BET est de 264 $m^2$/g.
Le volume poreux total, mesuré par adsorption d'azote, est de 0,39 ml/g.
Le volume poreux total, mesuré porosimétrie mercure, est de 0,35 ml/g.
Le diamètre poreux moyen, mesuré par porosimétrie au mercure, est de 59 Å.
Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,87.
Le volume V3, mesuré par porosimétrie au mercure, compris dans les pores de diamètres supérieurs à $D_{moyen}$ +

30 Å est de 0,045ml/g.

Le volume V6, mesuré par porosimétrie au mercure, compris dans les pores de diamètres supérieurs à $D_{moyen}$ + 15 Å est de 0,05 ml/g,

Le rapport entre la surface adsorption et la surface BET est de 0,90.

Le volume poreux, mesuré par porosimétrie au mercure, compris dans les pores de diamètre supérieurs à 140 Å est de 0,040 ml/g,

Le volume poreux, mesuré par porosimétrie au mercure, compris dans les pores de diamètre supérieurs à 160 Å est de 0,0385 ml/g,

Le volume poreux, mesuré par porosimétrie au mercure, compris dans les pores de diamètre supérieurs à 200 Å est 0,038ml/g,

Le volume poreux, mesuré par porosimétrie au mercure, est compris dans les pores de diamètre supérieurs à 500 Å est de 0,032 ml/g,

Le diagramme de diffraction X contient les raies principales caractéristiques de l'alumine gamma et notamment il contient les pics à un d compris entre 1,39 à 1,40 Å et à un d compris entre 1,97 Å à 2,00 Å.

Le rapport B/L du support est de 0,11.

La teneur en sodium atomique est de 250 +/- 20 ppm. La teneur en soufre atomique est de 2000 ppm.

Les spectres RMN MAS du solide de $^{27}$Al des catalyseurs montrent deux massifs de pics distincts. Un premier type d'aluminium dont le maximum résonne vers 10 ppm s'étend entre -100 et 20 ppm. La position du maximum suggère que ces espèces sont essentiellement de type $Al_{VI}$ (octaédrique). Un deuxième type d'aluminium minoritaire dont le maximum résonne vers 60 ppm s'étend entre 20 et 100 ppm. Ce massif peut être décomposé en au moins deux espèces. L'espèce prédominante de ce massif correspondrait aux atomes d'$Al_{IV}$ (tétraédrique). La proportion des $Al_{VI}$ octaédriques est de 69%.

Le support contient deux zones alumino-silicates, les dites zones ayant des rapports Si/Al inférieurs ou supérieurs au rapport Si/Al global déterminé par fluorescence X. L'une des zones a un rapport Si/Al déterminé par MET de 0,35.

Exemple 3 : Préparation et mise en forme d'une alumine-silice conforme à l'invention (SA3)

La poudre d'hydroxyde d'aluminium a été préparée selon le procédé décrit dans le brevet WO 00/01617. La taille des particules moyenne des particules d'hydroxyde d'aluminium mesurée par granulométrie laser est de 40 microns. Cette poudre est mélangée à un sol de silice préparé par échange sur résine décationisante, puis filtré sur résine de porosité 2. Les concentrations en sol de silice et en poudre d'hydroxyde d'aluminium sont ajustées de manière à obtenir une composition finale de 60% $Al_2O_3$ et de 40% $SiO_2$. La mise en forme est réalisée en présence de 8 % d'acide nitrique par rapport au produit anhydre. Le malaxage se fait sur un malaxeur bras en Z. L'extrusion est réalisée par passage de la pâte au travers d'une filière munie d'orifices de diamètre 1,4 mm. Les extrudés ainsi obtenus sont séchés à 150°C, puis calcinés à 550°C, puis calcinés à 700°C en présence de vapeur d'eau.

Les caractéristiques du support sont les suivantes :

La composition du support en silice-alumine est de 59,7% $Al_2O_3$ et de 40,3% $SiO_2$.

La surface BET est de 253 m2/g.

Le volume poreux total, mesuré par adsorption d'azote, est de 0,4 ml/g

Le volume poreux total, mesuré porosimétrie mercure, est de 0,4 ml/g.

Le diamètre poreux moyen, mesuré par porosimétrie au mercure, est de 51 Å.

Le rapport entre le volume V2, mesuré par porosimétrie au mercure, compris entre le $D_{moyen}$ - 30 Å et le $D_{moyen}$ 30 Å sur le volume poreux total mesuré par porosimétrie au mercure est de 0,9.

Le volume V3, mesuré par porosimétrie au mercure, compris dans les pores de diamètre supérieur à $D_{moyen}$ + 30 Å est de 0,072 ml/g.

Le volume V6, mesuré par porosimétrie au mercure, compris dans les pores de diamètre supérieur à $D_{moyen}$ + 15 Å est de 0,087 ml/g,

Le rapport entre la surface adsorption et la surface BET est de 0,83.

Le volume poreux, mesuré par porosimétrie au mercure, compris dans les pores de diamètre supérieur à 140 Å est de 0,055 ml/g,

Le volume poreux, mesuré par porosimétrie au mercure, compris dans les pores de diamètre supérieur à 160 Å est de 0,053 ml/g,

Le volume poreux, mesuré par porosimétrie au mercure, compris dans les pores de diamètre supérieur à 200 Å est de 0,051 ml/g,

Le volume poreux, mesuré par porosimétrie au mercure, est compris dans les pores de diamètre supérieur à 500 Å est de 0,045 ml/g,

Le rapport B/L du support est de 0,12.

Le diagramme de diffraction X contient les raies principales caractéristiques de l'alumine gamma et notamment il contient les pics à un d compris entre 1,39 à 1,40 Å et à un d compris entre 1,97 Å à 2,00 Å.

La teneur en sodium atomique est de 200 +/- 20 ppm. La teneur en soufre atomique est de 800 ppm.

Les spectres RMN MAS du solide de $^{27}$Al des catalyseurs montrent deux massifs de pics distincts. Un premier type d'aluminium dont le maximum résonne vers 10 ppm s'étend entre -100 et 20 ppm. La position du maximum suggère que ces espèces sont essentiellement de type $Al_{VI}$ (octaédrique). Un deuxième type d'aluminium minoritaire dont le maximum résonne vers 60 ppm et qui s'étend entre 20 et 100 ppm. Ce massif peut être décomposé en au moins deux espèces. L'espèce prédominante de ce massif correspondrait aux atomes d'$Al_{IV}$ (tétraédrique). La proportion des $Al_{VI}$ octaédriques est de 70%.

Le support contient deux zones alumino-silicates, les dites zones ayant des rapports Si/Al inférieurs ou supérieurs au rapport Si/Al global déterminé par fluorescence X. L'une des zones a un rapport Si/Al déterminé par MET de 0,4.

Exemple 4 : Préparation des catalyseurs d'hydrocraquage utilisables dans le procédé selon l'invention (C1, C2, C3, C4)

Le catalyseur C1 est obtenu par imprégnation à sec du support SA-1 (sous forme d'extrudés), préparé dans l'exemple 1 par une solution aqueuse d'acide phosphorique $H_3PO_4$ et par une solution d'acide hexachloroplatinique $H_2PtCl_6$ dissous dans un volume de solution correspondant au volume poreux total à imprégner. Les extrudés imprégnés sont ensuite calcinés à 550°C sous air pendant 4 heures. La teneur en platine est de 0,48% poids et sa dispersion mesurée par titrage $H_2$-$0_2$ est de 82% et sa répartition est uniforme dans les extrudés. La teneur en % $P_2O_5$ est 1 %.

Le catalyseur C2 est obtenu par imprégnation à sec du support SA-2 (sous forme d'extrudés), préparé dans l'exemple 2 par une solution aqueuse d'acide phosphorique $H_3PO_4$ puis par une solution dichlorure de platine tétramine $Pt(NH_3)_4Cl_2$ dissous dans un volume de solution correspondant au volume poreux total à imprégner. Les extrudés imprégnés sont ensuite calcinés à 550°C sous air pendant 4 heures. La teneur en platine est de 0,57% poids et sa dispersion mesurée par titrage H2-$0_2$ est de 62% et sa répartition est uniforme dans les extrudés. La teneur en % $P_2O_5$ est 1 %.

Le catalyseur C3 est obtenu par imprégnation à sec du support SA-3 (sous forme d'extrudés), préparé dans l'exemple 3 par une solution aqueuse d'acide phosphorique $H_3P0_4$ puis par une solution d'acide hexachloroplatinique $H_2PtCl_6$ dissous dans un volume de solution correspondant au volume poreux total à imprégner. Les extrudés imprégnés sont ensuite calcinés à 550°C sous air pendant 4 heures. La teneur en platine est de 0,41% poids et sa dispersion mesurée par titrage $H_2$-$0_2$ est de 88% et sa répartition est uniforme dans les extrudés. La teneur en % $P_2O_5$ est 1 %.

Exemple 5 : Préparation des catalyseurs C4 et C5 non conformes

Le catalyseur C4 est obtenu par imprégnation à sec du support SA-2 (sous forme d'extrudés), préparé dans l'exemple 1 par une solution d'acide hexachloroplatinique $H_2PtCl_6$ dissous dans un volume de solution correspondant au volume poreux total à imprégner. Les extrudés imprégnés sont ensuite calcinés à 550°C sous air pendant 4 heures. La teneur en platine est de 0,48% poids et sa dispersion mesurée par titrage $H_2$-$0_2$ est de 82% et sa répartition est uniforme dans les extrudés. Le catalyseur C4 ne contient pas d'élément dopant.

Le catalyseur C5 est obtenu par imprégnation à sec du support SA-2 (sous forme d'extrudés), préparé dans l'exemple 2 par une solution aqueuse d'acide phosphorique $H_3PO_4$ puis par une solution dichlorure de platine tétramine $Pt(NH_3)_4Cl_2$ dissous dans un volume de solution correspondant au volume poreux total à imprégner. Les extrudés imprégnés sont ensuite calcinés à 550°C sous air pendant 4 heures. La teneur en platine est de 0,57% poids et sa dispersion mesurée par titrage $H_2$-$0_2$ est de 62% et sa répartition est uniforme dans les extrudés. La teneur en % $P_2O_5$ du catalyseur C5 est 7 %.

Exemple 6 : Préparation du catalyseur C6 conforme à l'invention.

La catalyseur C6 est obtenu par imprégnation à sec du support SA-2 (sous forme d'extrudés) préparé dans l'exemple 1 par une solution aqueuse d'acide phosphorique $H_3PO_4$ et par une solution aqueuse d'acide hexachloroplatinique $H_2PtCl_6$ dissous dans un volume de solution correspondant au volume total à imprégner. Après maturation et séchage, les extrudés imprégnés sont ensuite calcinés à 550°C sous air pendant 4 heures. La teneur en Pt est de 0,50% poids et sa dispersion mesurée par $H_2$-$O_2$ est de 83%; sa répartition est uniforme au sein des extrudés. La teneur en $P_2O_5$ est de 2% poids.

Les propriétés texturales du catalyseur C6 sont les suivantes:

La surface BET est de 252 m$^2$/g,

Le volume poreux total, mesuré par adsorption d'azote, est de 0,38 ml/g,

Le volume poreux total, mesuré porosimétrie mercure, est de 0,37 ml/g,

Le diamètre poreux moyen, mesuré par porosimétrie au mercure, est de 58 A,

Le rapport entre le volume V2, mesuré par porosimétrie au mercure, compris entre le Dmoyen - 30 A et le Dmoyen + 30 A sur le volume poreux total mesuré par porosimétrie au mercure est de 0,87

Le volume V3, mesuré par porosimétrie au mercure, compris dans les pores de diamètres supérieurs à Dmoyen + 30 A est de 0,045 ml/g,

Le volume V6, mesuré par porosimétrie au mercure, compris dans les pores de diamètres supérieurs à Dmoyen + 15 A est de 0,05 ml/g,

Le rapport entre la surface adsorption et la surface BET est dé 0,90,

Le volume poreux, mesuré par porosimétrie au mercure, compris dans les pores de diamètre supérieurs à 140 A est de 0,04 ml/g,

Le volume poreux, mesuré par porosimétrie au mercure, compris dans les pores de diamètre supérieurs à 160 A est de 0,0385 ml/g,

Le volume poreux, mesuré par porosimétrie au mercure, compris dans les pores de diamètre supérieurs à 200 A est de 0,038 ml/g,

Le volume poreux, mesuré par porosimétrie au mercure, est compris dans les pores de diamètre supérieurs à 500 A est de 0,032 ml/g.

Exemple 7 : Préparation du catalyseur C7 conforme à l'invention.

Le catalyseur C7 est obtenu par imprégnation à sec du support SA-2 (sous forme d'extrudés) préparé dans l'exemple 1 par une solution aqueuse d'acide phosphorique $H_3PO_4$ et par une solution aqueuse d'acide de chlorure de palladium $PdCl_2$ dissous dans un volume de solution correspondant au volume total à imprégner. Après maturation et séchage, les extrudés imprégnés sont ensuite calcinés à 550°C sous air pendant 4 heures. La teneur en Pd est de 1.0% poids et sa dispersion mesurée par chimisorption du CO est de 82%; sa répartition est uniforme au sein des extrudés. La teneur en $P_2O_5$ est de 2.0% poids.

Les propriétés texturales du catalyseur C7 sont les suivantes:

La surface BET est de 253 $m^2$/g,

Le volume poreux total, mesuré par adsorption d'azote, est de 0,38 ml/g,

Le volume poreux total, mesuré porosimétrie mercure, est de 0,37 ml/g,

Le diamètre poreux moyen, mesuré par porosimétrie au mercure, est de 58 A,

Le rapport entre le volume V2, mesuré par porosimétrie au mercure, compris entre le Dmoyen - 30 A et le Dmoyen + 30 A sur le volume poreux total mesuré par porosimétrie au mercure est de 0,87,

Le volume V3, mesuré par porosimétrie au mercure, compris dans les pores de diamètres supérieurs à Dmoyen + 30 Å est de 0,045 ml/g,

Le volume V6, mesuré par porosimétrie au mercure, compris dans les pores de diamètres supérieurs à Dmoyen + 15 A est de 0,05 ml/g,

Le rapport entre la surface adsorption et la surface BET est de 0,90,

Le volume poreux, mesuré par porosimétrie au mercure, compris dans les pores de diamètre supérieurs à 140 Å est de 0,04 ml/g,

Le volume poreux, mesuré par porosimétrie au mercure, compris dans les pores de diamètre supérieurs à 160 A est de 0,0385 ml/g,

Le volume poreux, mesuré par porosimétrie au mercure, compris dans les pores de diamètre supérieurs à 200 Å est de 0,038 ml/g,

Le volume poreux, mesuré par porosimétrie au mercure, est compris dans les pores de diamètre supérieurs à 500 A est de 0,032 ml/g.

Exemple 8 : Préparation du catalyseur C8 conforme à l'invention.

Le catalyseur C8 est obtenu par imprégnation à sec du support SA-2 (sous forme d'extrudés) préparé dans l'exemple 1 par une solution aqueuse d'acide phosphorique $H_3PO_4$, d'eau oxygénée $H_2O_2$, de métatungstate d'ammonium $(NH_4)6H_2W_{12}O_{40}$ et de nitrate de Nickel $Ni(NO_3)_2$. La quantité d'eau oxygénée dans la solution aqueuse est telle que le rapport molaire entre l'eau oxygénée et le métatungstate d'ammonium soit de 0.15 mol/mol. Après maturation et séchage, les extrudés imprégnés sont ensuite calcinés à 550°C sous air pendant 4 heures. La teneur en oxyde de tungstène $WO_3$ est de 24.0% poids, la teneur en oxyde de nickel NiO est de 3.1% poids, la teneur en $P_2O_5$ est de 1.9% poids. La répartition en tungstène et en nickel est uniforme au sein des extrudés.

Exemple 9 : Évaluation des catalyseurs C1, C2, C3, C4, C5, C6 et C7 dans un procédé selon l'invention : hydrocraguage d'une charge paraffinique issue de la synthèse Fischer-Tropsch

Les catalyseurs dont la préparation est décrite dans les exemples 4, 5, 6 et 7 sont utilisés pour réaliser l'hydrocraquage d'une charge paraffinique issue d'une unité Fischer-Tropsch dont les principales caractéristiques sont données ci-après :

| | |
|---|---|
| Densité à 20°C | 0,787 |
| **Distillation simulée DS** | |
| DS : Point initial | 170 |
| DS : 10%p°C | 197 |
| DS : 50%p°C | 350 |
| DS : 90%p°C | 537 |
| DS : Point final °C | 674 |
| Teneur en fraction 370°C+ (%pds) | 44 |

Les catalyseurs C1, C2, C3, C4, C5, C6 et C7 sont mis en oeuvre selon le procédé de l'invention en utilisant une unité pilote comportant 1 réacteur à lit fixe traversé, les fluides circulent de bas en haut (up-flow). Préalablement au test d'hydrocraquage, les catalyseurs sont réduits à 120 bars, à 450°C sous hydrogène pur.

Après réduction, le test catalytique s'effectue dans les conditions suivantes :

Pression totale 5,5 MPa T=356°C
Rapport H2 sur charge de 1000 normaux litres/litre de charge
La vitesse spatiale (WH) est égale à 0,9 h-1.

Les performances catalytiques sont exprimées par la conversion nette en produits ayant un point d'ébullition inférieurs à 370°C, par la sélectivité nette en distillat moyen coupe 150-370°C et le rapport rendement Gasoil/rendement kérosène dans la fraction distillat moyen. Elles sont exprimées à partir des résultats de distillation simulée.

La conversion nette CN est prise égale à :

$$\text{CN } 370°C^- = [\,(\% \text{ de } 370°C^-_{\text{effluents}}) - (\% \text{ de } 370°C^-_{\text{charge}})\,]\,/\,[\,100 - (\% \text{ de } 370°C^-_{\text{charge}})]$$

avec

% de 370°C⁻ effluents = teneur massique en composés ayant des points d'ébullition inférieurs à 370°C dans les effluents, et
% de 370°C⁻ charge = teneur massique en composés ayant des points d'ébullition inférieurs à 370°C dans la charge.

Le rendement gasoil/rendement kérosène (rapport Go./Ker.) dans la fraction distillat moyen est prise égale à :

$$\text{Rapport Go./Ker.} = \text{rendement de la fraction } (250°C\text{-}370°C) \text{ de l'effluent } / \text{ rendement de la fraction } (150°C - 250°C) \text{ dans l'effluent.}$$

Les performances catalytiques obtenues sont données dans les tableaux 1 et 2 ci-après.
Les conversions nettes en produits ayant un point d'ébullition inférieur à 370°C, telle que définie précédemment, sont, dans les conditions opératoires décrites ci-dessus, fournies pour les catalyseurs C1, C2, C3, C6, C7 et C8 (conformes), C4 et C5 (non conformes) dans le tableau 1.

Tableau 1 : Conversions nettes en 370°C-

| | C1 | C2 | C3 | C4 | C5 | C6 | C7 |
|---|---|---|---|---|---|---|---|
| CN 370°C⁻(% poids) | 79,5 | 77,3 | 78,4 | 71,6 | 67 | 82,6 | 80,2 |

Tableau 2 : Rendements des_produits formés :

| Coupes | Rendements (% poids) $C_1$-$C_4$ | Rendements (% poids) $C_5$-150°C | Rendements (% poids) 150-370°C | Rendements (% poids) 370°C+ | Rapport Go./Ker. |
|--------|------|------|------|------|------|
| C1 | 1,2 | 10,2 | 79,6 | 9 | 2,05 |
| C2 | 1 | 9,9 | 79,1 | 10 | 2,10 |
| C3 | 1,3 | 10,5 | 78,7 | 9,5 | 2,06 |
| C4 | 1,2 | 10 | 76,3 | 12,5 | 2,10 |
| C5 | 1,3 | 10 | 74,2 | 14,5 | 2,10 |
| C6 | 1,5 | 10,9 | 80,0 | 7,6 | 2,03 |
| C7 | 0,7 | 9,5 | 81,1 | 8,7 | 2,07 |

Ces résultats, montrent (tableaux 1 et 2) que l'utilisation du procédé selon l'invention permet par hydrocraquage d'une charge paraffinique issue du procédé de synthèse Fischer-Tropsch d'obtenir de très bons rendements en distillats moyens, coupes 150-250 (kérosène) et 250-370°C (gazole).

Par ailleurs, il apparaît que l'utilisation du procédé selon l'invention utilisant les catalyseurs C1, C2, C3 et C6, qui ont une teneur en phosphore sélectionnée dans la plage préférentielle de 0,2% à 2,5% poids d'oxyde de l'élément dopant phosphore, permet, par hydrocraquage d'une charge paraffinique issue du procédé de synthèse Fischer-Tropsch, d'obtenir de très bons rendements en distillats moyens, coupes 150-250 (kérosène) et 250-370°C (gazole) et sont particulièrement adaptés à l'objectif de l'invention.

Exemple 10 : Évaluation du catalyseur C8 dans un procédé selon l'invention : hydrocraquage d'une charge paraffinique issue de la synthèse Fischer-Tropsch

Le catalyseur C8 dont la préparation est décrite dans l'exemple 8 est utilisé pour réaliser l'hydrocraquage d'une charge paraffinique d'écrite dans l'exemple 9.

Préalablement au test catalytique, le catalyseur doit être sulfuré. Cette étape de sulfuration s'effectue en utilisant une charge paraffinique dopée en diméthylsulfure. Les conditions de sulfuration du catalyseur C sont les suivantes:

charge: n-heptane + 2% poids de diméthylsulfure

WH = 2 h-1

P = 50 b

rapport H2/charge = 1000 NI / I

rampe de montée en température: 24°C/heure

température au palier de sulfuration: 350°C

durée du palier de sulfuration: 12 heures

Après l'étape de sulfuration, le test catalytique s'effectue dans les conditions suivantes:

Pression totale 4,0 MPa T=360°C

Rapport H2 sur charge de 1000 normaux litres/litre de charge

La vitesse spatiale (WH) est égale à 1,0 h-1.

On notera qu'afin de maintenir le catalyseur sous forme sulfurée, l'hydrogène contient 300 ppm de sulfure d'hydrogène (H2S).

Les performances catalytiques sont exprimées comme dans l'exemple 9. Le tableau 3 reporte la conversion nette obtenue pour le catalyseur C8. Le tableau 4 reporte les rendements dans les différentes coupes de produits.

Tableau 5 : Conversion nette en 370°C- pour le catalyseur C8

| | C8 |
|--------|------|
| CN 370°C- (% poids) | 77,5 |

Tableau 4 : Rendements des produits formés pour le catalyseur C8

| Coupes | Rendement (% poids) C1-C4 | Rendement (% poids) C5-150°C | Rendement (% poids) 150-370°C | Rendement( % poids) 370°C+ | Rapport Go./Ker. |
|--------|---------------------------|------------------------------|-------------------------------|-----------------------------|-------------------|
| C8 | 8 | 12 | 70,1 | 9,9 | 1,70 |

**Revendications**

1. Procédé de production de distillats moyens à partir d'une charge paraffinique produite par synthèse Fischer-Tropsch, utilisant un catalyseur d'hydrocraquage/hydroisomérisation qui comporte au moins un élément hydro-déshydrogénant choisi dans le groupe formé par les éléments du groupe VIB et du groupe VIII de la classification périodique, de 0,2 à 2,5% poids d'oxyde d'un élément dopant choisi parmi le phosphore, le bore et le silicium et un support non zéolitique à base de silice - alumine contenant une quantité supérieure à 5% poids et inférieure ou égale à 95% poids de silice ($SiO_2$), ledit catalyseur présentant les caractéristiques suivantes:

   - un diamètre moyen poreux, mesuré par porosimétrie au mercure, compris entre 20 et 140 Å,
   - un volume poreux total, mesuré par porosimétrie au mercure, compris entre 0,1 ml/g et 0,5 ml/g,
   - un volume poreux total, mesuré par porosimétrie azote, compris entre 0,1 ml/g et 0,5 ml/g,
   - une surface spécifique BET comprise entre 100 et 550 $m^2$/g ,
   - un volume poreux, mesuré par porosimétrie au mercure, compris dans les pores de diamètre supérieur à 140 A inférieur à 0,1 ml/g,
   - un volume poreux, mesuré par porosimétrie au mercure, compris dans les pores de diamètre supérieur à 160 A inférieur à 0,1 ml/g,
   - un volume poreux, mesuré par porosimétrie au mercure, compris dans les pores de diamètre supérieurs à 200 Å, inférieur à 0,1 ml/g,
   - un volume poreux, mesuré par porosimétrie au mercure, compris dans les pores de diamètre supérieurs à 500 A est strictement supérieur à 0,01 et inférieur à 0,1 ml/g,
   - un diagramme de diffraction X qui contient au moins les raies principales caractéristiques d'au moins une des alumines de transition comprise dans le groupe composé par les alumines alpha, rhô, chi, eta, gamma, kappa, thêta et delta.
   - une densité de remplissage tassée des catalyseurs supérieure à 0,75 g/$cm^3$.

2. Procédé selon la revendication 1 utilisant un catalyseur comprenant l'association des métaux nickel-tungsten.

3. Procédé selon l'une des revendications précédentes utilisant un catalyseur dans lequel l'élément dopant est le bore et/ou le phosphore.

4. Procédé selon la revendication 3 utilisant un catalyseur dans lequel l'élément dopant est le phosphore.

5. Procédé selon la revendication 4 dans lequel la teneur en phosphore du catalyseur est comprise entre 0,2 et 2,5 % poids d'oxyde

6. Procédé selon la revendication 4 dans lequel la teneur en phosphore du catalyseur est comprise entre 0,2 et 2 % poids d'oxyde.

7. Procédé selon l'une des revendications précédentes utilisant un catalyseur dans lequel la proportion des $Al_{VI}$ octaédriques déterminée par l'analyse des spectres RMN MAS du solide de $^{27}$Al est supérieure à 50%.

8. Procédé selon l'une des revendications précédentes dans lequel le catalyseur a une teneur en impuretés cationiques inférieure à 0,1 % poids.

9. Procédé selon l'une des revendications précédentes dans lequel le catalyseur a une teneur en impuretés anioniques est inférieure à 1% poids.

10. Procédé selon l'une des revendications précédentes utilisant un catalyseur tel que le diagramme de diffraction X du support contient au moins les raies principales caractéristiques d'au moins une des alumines de transition comprise dans le groupe composé par les alumines êta, thêta, delta et gamma.

11. Procédé selon l'une des revendications précédentes utilisant un catalyseur tel que le diagramme de diffraction X du support contient au moins les raies principales caractéristiques d'au moins une des alumines de transition comprise dans le groupe composé par les alumines êta et gamma.

12. Procédé selon l'une des revendications précédentes utilisant un catalyseur tel que :

- le rapport entre le volume V2, mesuré par porosimétrie au mercure, compris entre le $D_{moyen}$ - 30 A et le $D_{moyen}$ + 30 Å sur le volume mercure total est supérieur à 0,6,
- le volume V3, mesuré par porosimétrie au mercure, compris dans les pores de diamètres supérieur à $D_{moyen}$ + 30 Å est inférieur à 0,1 ml/g,
- le volume V6, mesuré par porosimétrie au mercure, compris dans les pores de diamètre supérieur à $D_{moyen}$ + 15 Å est inférieur à 0.2 ml/g.

13. Procédé selon l'une des revendications précédentes tel que le diamètre moyen poreux du catalyseur est compris entre 40 et 120 Å.

14. Procédé selon l'une des revendications précédentes tel que la densité de remplissage tassée du catalyseur est supérieure à 0,85 g/cm$^3$.

15. Procédé selon l'une des revendications précédentes tel que l'acidité du support de catalyseur mesurée par suivi IR de la thermo-désorption de la pyridine est telle que le rapport B/L (rapport du nombre de sites de Bronsted /nombre de sites de Lewis) est compris entre 0,05 et 1.

16. Procédé de production de distillats a partir d'une charge paraffinique produite par synthèse Fischer-Tropsch comprenant les étapes successives suivantes : séparation d'une seule fraction dite lourde à point d'ébullition initial compris entre 120-200°C,

a) hydrotraitement d'une partie au moins de ladite fraction lourde,
b) fractionnement en au moins 3 fractions : au moins une fraction intermédiaire ayant un point d'ébullition initial T1 compris entre 120 et 200°C, et un point d'ébullition final T2 supérieur à 300°C et inférieur à 410°C, au moins une fraction légère bouillant au-dessous de la fraction intermédiaire, au moins une fraction lourde bouillant au-dessus de la fraction intermédiaire.
c) passage d'une partie au moins de ladite fraction intermédiaire dans un procédé selon l'une des revendications 1 à 15 sur un catalyseur non zéolitique d'hydroisomérisation / hydrocraquage,
d) passage dans un procédé selon l'une des revendications 1 à 15 sur un catalyseur non zéolitique d'hydroisomérisation / hydrocraquage d'une partie au moins de ladite fraction lourde,
e) distillation des fractions hydrocraquées / hydroisomérisées pour obtenir des distillats moyens, et recyclage de la fraction résiduelle bouillant au-dessus desdits distillats moyens dans l'étape (e) sur le catalyseur traitant la fraction lourde.

17. Procédé de production de distillats moyens à partir d'une charge paraffinique produite par synthèse Fischer-Tropsch comprenant les étapes successives suivantes:

a) séparation d'au moins une fraction légère de la charge de façon à obtenir une seule fraction dite lourde à point d'ébullition initial compris entre 120-200°C,
b) éventuel hydrotraitement de ladite fraction lourde, éventuellement suivi d'une étape
c) d'enlèvement d'au moins une partie de l'eau,
d) passage dans un procédé selon l'une des revendications 1 à 15 d'une partie au moins de ladite fraction éventuellement hydrotraitée, la conversion sur le catalyseur d'hydroisomérisation/hydrocraquage des produits à points d'ébullition supérieurs ou égaux à 370°C en produits à points d'ébullition inférieures à 370°C est supérieure à 80% pds,
e) distillation de la fraction hydrocraquée/hydroisomérisée pour obtenir des distillats moyens, et recyclage dans l'étape d) de la fraction résiduelle bouillant au-dessus desdits distillats moyens

18. Procédé de production de distillats moyens à partir d'une charge paraffinique produite par synthèse Fischer-Tropsch comprenant les étapes successives suivantes:

a) Fractionnement (étape a) de la charge en au moins 3 fractions:

- au moins une fraction intermédiaire ayant un point d'ébullition initial T1 compris entre 120 et 200°C, et un point d'ébullition final T2 supérieur à 300°C et inférieur à 410°C,
- au moins une fraction légère bouillant au-dessous de la fraction intermédiaire,
- au moins une fraction lourde bouillant au-dessus de la fraction intermédiaire.

b) Hydrotraitement (étape b) d'au moins une partie de ladite fraction intermédiaire, puis passage (étape d) dans un procédé de traitement d'au moins une partie de la fraction hydrotraitée sur un catalyseur d'hydrocraquage/hydroisomérisation.
f) Passage (étape f) dans un procédé de traitement d'une partie au moins de ladite fraction lourde sur un catalyseur d'hydrocraquage/hydroisomérisation avec une conversion des produits à points d'ébullition supérieurs ou égaux à 370°C en produits à points d'ébullition inférieurs à 370°C supérieure à 80% poids.
e) et g) Distillation (étapes e et g) d'au moins une partie des fractions hydrocraquées / hydroisomérisées pour obtenir des distillats moyens.

et l'un au moins desdits procédés de traitement est le procédé selon l'une des revendications 1 à 15.

**19.** Procédé de production de distillats moyens à partir d'une charge paraffinique produite par synthèse Fischer-Tropsch comprenant les étapes successives suivantes :

a) éventuel fractionnement de la charge en au moins une fraction lourde à point d'ébullition initial compris entre 120 et 200°C. et au moins une fraction légère bouillant en-dessous de ladite fraction lourde,
b) éventuel hydrotraitement d'une partie au moins de la charge ou de la fraction lourde, éventuellement suivi d'une étape c)
c) élimination d'au moins une partie de l'eau,
d) passage d'une partie au moins de l'effluent ou de la fraction éventuellement hydrotraité dans un procédé de traitement sur un premier catalyseur d'hydroisomérisation / hydrocraquage contenant au moins un métal noble du groupe VIII,
e) distillation de l'effluent hydroisomérisé / hydrocraqué pour obtenir des distillats moyens (kérosène, gasoil) et une fraction résiduelle bouillant au-dessus des distillats moyens,
f) sur un second catalyseur d'hydroisomérisation/hydrocraquage contenant au moins un métal noble du groupe VIII, passage dans un procédé de traitement d'au moins une partie de ladite fraction lourde résiduelle et/ou d'une partie desdits distillats moyens, et distillation de l'effluent résultant pour obtenir des distillats moyens,

et l'un au moins desdits procédés de traitement est le procédé selon l'une des revendications 1 à 15.

**20.** Procédé de production de distillats moyens à partir d'une charge paraffinique produite par synthèse Fischer-Tropsch comprenant les étapes successives suivantes :

a) séparation de la charge en au moins une fraction à faible température d'ébullition (B) plus riche en composés oxygénés et au moins une fraction à haute température d'ébullition (A) moins riche en composés oxygénés ;
b) soumission de ladite fraction (B) à un traitement hydrogénant dans des conditions de nature à éviter toute variation substantielle dans son poids moléculaire moyen pour obtenir un mélange hydrogéné d'hydrocarbures substantiellement non oxygénés;
c) recombinaison d'au moins une partie dudit mélange hydrogéné selon l'étape (b) avec ladite fraction (A) pour former un mélange (C) d'hydrocarbures linéaires avec un contenu réduit en hydrocarbures oxygénés et soumission dudit mélange (C) à un traitement d'hydrocraquage en présence d'un catalyseur d'hydroisomérisation/hydrocraquage, pour convertir au moins 40 % de ladite fraction à haut point d'ébullition en une fraction d'hydrocarbures pouvant étre distillés à une température inférieure à 370°C;
d) séparation d'au moins une fraction d'hydrocarbures du produit obtenu à l'étape (c) dont la température de distillation est dans le domaine des distillats moyens,

procédé dans lequel le procédé d'hydrocraquage de l'étape c) est le procédé selon l'une des revendications 1 à 15.

**21.** Procédé selon l'une des revendications précédentes dans lequel le catalyseur d'hydrocraquage/hydroisomérisation est à base de platine et/ou palladium.

**22.** Procédé selon l'une des revendications précédentes dans lequel le catalyseur d'hydrocraquage/hydroisomérisation contient de 0,05 à 10 % de métal noble du groupe VIII.

**Patentansprüche**

**1.** Verfahren zur Herstellung von Mitteldestillaten aus einer Paraffincharge, die mittels Fischer-Tropsch-Synthese erzeugt wurde, wobei ein Hydrocrack-/Hydroisomerisierungs-Katalysator verwendet wird, der mindestens ein Element mit drierender/dehydrierender Wirkung, welches aus der Gruppe ausgewählt ist, die von den Elementen der Gruppe VIB und der Gruppe VIII des Periodensystems gebildet wird, 0,2 bis 2,5 Gewichts-% als Oxid eines Dotierelements, welches aus Phosphor, Bor und Silicium ausgewählt ist, sowie einen nicht-zeolithischen Träger aufweist, welcher auf Siliciumdioxid-Aluminiumoxid beruht, wobei dieser eine Menge an Siliciumdioxid ($SiO_2$) aufweist, die größer als 5 Gewichts-% ist und höchstens 95 Gewichts-% beträgt, wobei der Katalysator die folgenden Merkmale aufweist:

- einen mittleren Porendurchmesser, gemessen mittels Quecksilberporosimetrie, im Bereich von 20 bis 140 Å,
- ein Gesamtporenvolumen, gemessen mittels Quecksilberporosimetrie, im Bereich von 0,1 bis 0,5 ml/g,
- ein Gesamtporenvolumen, gemessen mittels Stickstoffporosimetrie, im Bereich von 0,1 bis 0,5 ml/g,
- eine spezifische BET-Oberfläche im Bereich von 100 bis 550 m²/g,
- ein Porenvolumen, gemessen mittels Quecksilberporosimetrie, das in den Poren mit einem Durchmesser von mehr als 140 Å enthalten ist, von weniger als 0,1 ml/g,
- ein Porenvolumen, gemessen mittels Quecksilberporosimetrie, das in den Poren mit einem Durchmesser von mehr als 160 Å enthalten ist, von weniger als 0,1 ml/g,
- ein Porenvolumen, gemessen mittels Quecksilberporosimetrie, das in den Poren mit einem Durchmesser von mehr als 200 Å enthalten ist, von weniger als 0,1 ml/g,
- ein Porenvolumen, gemessen mittels Quecksilberporosimetrie, das in den Poren mit einem Durchmesser von mehr als 500 Å enthalten ist, von streng mehr als 0,01 ml/g und weniger als 0,1 ml/g,
- ein Röntgenbeugungsmuster, das mindestens die kennzeichnenden Hauptlinien mindestens einer der Aluminiumoxid-Übergangsformen enthält, welche der Gruppe angehören, die sich aus den Aluminiumoxiden alpha, rho, chi, eta, gamma, kappa, theta und delta zusammensetzt.
- eine Rütteldichte der Katalysatoren von mehr als 0,75 g/cm³.

**2.** Verfahren nach Anspruch 1, wobei ein Katalysator verwendet wird, in welchem die Metalle Nickel-Wolfram gemeinsam vorliegen.

**3.** Verfahren nach einem der vorhergehenden Ansprüche, wobei ein Katalysator zur Anwendung kommt, in welchem Bor und/oder Phosphor das Dotierelement bilden.

**4.** Verfahren nach Anspruch 3, wobei ein Katalysator verwendet wird, in welchem Phosphor das Dotierelement bildet.

**5.** Verfahren nach Anspruch 4, wobei der Gehalt des Katalysators an Phosphor im Bereich von 0,2 bis 2,5 Gewichts-% als Oxid liegt.

**6.** Verfahren nach Anspruch 4, wobei der Gehalt des Katalysators an Phosphor im Bereich von 0,2 bis 2 Gewichts-% als Oxid liegt.

**7.** Verfahren nach einem der vorhergehenden Ansprüche, wobei ein Katalysator verwendet wird, in welchem der Anteil an oktaedrischem $Al_{VI}$, bestimmt mittels Untersuchung der MAS-NMR-Feststoffspektren des $^{27}$Al, mehr als 50 % beträgt.

**8.** Verfahren nach einem der vorhergehenden Ansprüche, wobei der Katalysator einen Gehalt an kationischen Verunreinigungen hat, der geringer als 0,1 Gewichts-% ist.

**9.** Verfahren nach einem der vorhergehenden Ansprüche, wobei der Katalysator einen Gehalt an kationischen Verunreinigungen hat, der geringer als 0,1 Gewichts-% ist.

**10.** Verfahren nach einem der vorhergehenden Ansprüche, wobei ein Katalysator verwendet wird, der derart beschaffen ist, dass das Röntgenbeugungsmuster des Trägers mindestens die kennzeichnenden Hauptlinien mindestens einer der Aluminiumoxid-Übergangsformen enthält, welche der Gruppe angehören, die sich aus den Aluminiumoxiden eta, theta, delta und gamma zusammensetzt.

11. Verfahren nach einem der vorhergehenden Ansprüche, wobei ein Katalysator verwendet wird, der derart beschaffen ist, dass das Röntgenbeugungsmuster des Trägers mindestens die kennzeichnenden Hauptlinien mindestens einer der Aluminiumoxid-Übergangsformen enthält, welche der Gruppe angehören, die sich aus den Aluminiumoxiden eta und gamma zusammensetzt.

12. Verfahren nach einem der vorhergehenden Ansprüche, wobei ein Katalysator verwendet wird, der derart beschaffen ist, dass:

- das Verhältnis zwischen dem Volumen V2, gemessen mittels Quecksilberporosimetrie, welches im Bereich von $D_{mittel}$ - 30 Å bis $D_{mittel}$ + 30 Å enthalten ist, und dem Gesamtquecksilbervolumen mehr als 0,6 beträgt,
- das Volumen V3, gemessen mittels Quecksilberporosimetrie, das in den Poren mit einem Durchmesser von mehr als $D_{mittel}$ + 30 Å enthalten ist, weniger als 0,1 ml/g beträgt,
- das Volumen V6, gemessen mittels Quecksilberporosimetrie, das in den Poren mit einem Durchmesser von mehr als $D_{mittel}$ + 15 Å enthalten ist, weniger als 0,2 ml/g beträgt.

13. Verfahren nach einem der vorhergehenden Ansprüche, wobei es derart beschaffen ist, dass der mittlere Porendurchmesser des Katalysators im Bereich von 40 bis 120 Å liegt.

14. Verfahren nach einem der vorhergehenden Ansprüche, wobei es derart beschaffen ist, dass die Rütteldichte des Katalysators mehr als 0,85 g/cm$^3$ beträgt.

15. Verfahren nach einem der vorhergehenden Ansprüche, wobei es derart beschaffen ist, dass der Säuregrad des Katalysatorträgers, gemessen mittel IR-Scan der wärmebedingten Desorption von Pyridin, derart ist, dass das B/L-Verhältnis (Verhältnis der Anzahl an Brönsted-Stellen / Anzahl an Lewis-Stellen) im Bereich von 0,05 bis 1 liegt.

16. Verfahren zur Herstellung von Mitteldestillaten aus einer Paraffincharge, die mittels Fischer-Tropsch-Synthese erzeugt wurde, wobei es die folgenden Schritte umfasst, die nacheinander erfolgen: Abtrennen einer einzigen sogenannten Schwerfraktion, deren anfänglicher Siedepunkt im Bereich von 120 bis 200°C liegt,

a) Hydrobehandeln mindestens einer Teilmenge der Schwerfraktion,
b) Fraktionieren in mindestens 3 Fraktionen: mindestens eine Zwischenfraktion mit einem anfänglichen Siedepunkt T1 im Bereich von 120 bis 200°C und einem Endwert des Siedepunkts T2 von mehr als 300°C und weniger als 410°C, mindestens eine Leichtfraktion, die tiefer als die Zwischenfraktion siedet, mindestens eine Schwerfraktion, die höher als die Zwischenfraktion siedet,
c) Einleiten mindestens einer Teilmenge der Zwischenfraktion in ein Verfahren nach einem der Ansprüche 1 bis 15, welches über einem nicht-zeolithischen Hydroisomerisierungs/Hydrocrack-Katalysator erfolgt,
d) Leiten mindestens einer Teilmenge der Schwerfraktion über einen nicht-zeolithischen Hydroisomerisierungs-/Hydrocrack-Katalysator,
e) Destillieren der hydrogecrackten/hydroisomerisierten Fraktionen, um Mitteldestillate zu erhalten, und Zurückführen der restlichen Fraktion, die höher als die Mitteldestillate siedet, zum Schritt (e), welcher über dem Katalysator erfolgt, der die Schwerfraktion behandelt.

17. Verfahren zur Herstellung von Mitteldestillaten aus einer Paraffincharge, die mittels Fischer-Tropsch-Synthese erzeugt wurde, wobei es die folgenden Schritte umfasst, die nacheinander erfolgen:

a) Abtrennen mindestens einer Leichtfraktion von der Charge, sodass eine einzige sogenannte Schwerfraktion erhalten wird, deren anfänglicher Siedepunkt im Bereich von 120 bis 200°C liegt,
b) gegebenenfalls Hydrobehandeln der Schwerfraktion, woran sich gegebenenfalls der folgende Schritt anschließt
c) Entfernen mindestens einer Teilmenge des Wassers,
d) Einleiten mindestens einer Teilmenge der gegebenenfalls hydrobehandelten Fraktion in ein Verfahren nach einem der Ansprüche 1 bis 15, wobei die Umwandlung der Produkte mit Siedepunkten von mindestens 370°C zu Produkten mit Siedepunkten von weniger als 370°C an dem Hydroisomerisierungs/Hydrocrack-Katalysator zu mehr als 80 Gew.-% erfolgt,
e) Destillieren der hydrogecrackten/hydroisomerisierten Fraktionen, um Mitteldestillate zu erhalten, und Zurückführen der restlichen Fraktion, die höher als die Mitteldestillate siedet, zum Schritt (d).

**18.** Verfahren zur Herstellung von Mitteldestillaten aus einer Paraffincharge, die mittels Fischer-Tropsch-Synthese erzeugt wurde, wobei es die folgenden Schritte umfasst, die nacheinander erfolgen:

a) Fraktionieren (Schritt a) der Charge in mindestens 3 Fraktionen

- mindestens eine Zwischenfraktion, die einen anfänglichen Siedepunkt T1 im Bereich von 120 bis 200°C und einen Endwert des Siedepunkts T2 von mehr als 300°C und weniger als 410°C aufweist,
- mindestens eine Leichtfraktion, die höher als die Zwischenfraktion siedet
- mindestens eine Schwerfraktion, die niedriger als die Zwischenfraktion siedet,

b) Hydrobehandeln (Schritt b) mindestens einer Teilmenge der Zwischenfraktion, anschließend Einleiten (Schritt d) mindestens einer Teilmenge der hydrobehandelten Fraktion in ein Behandlungsverfahren, das über einem Hydroisomerisierungs-/Hydrocrack-Katalysator erfolgt,

f) Einleiten (Schritt f) mindestens einer Teilmenge der Schwerfraktion in ein Behandlungsverfahren, das über einem Hydroisomerisierungs-/Hydrocrack-Katalysator erfolgt, wobei die Produkte mit Siedepunkten von mindestens 370°C zu mindestens 80 Gewichts-% in Produkte mit Siedepunkten von weniger als 370°C umgewandelt werden,

e) und g) Destillieren (Schritte e und g) mindestens einer Teilmenge der hydrogecrackten/hydroisomerisierten Fraktionen, um Mitteldestillate zu erhalten,

und wobei es sich bei mindestens einem der Behandlungsverfahren um das Verfahren nach einem der Ansprüche 1 bis 15 handelt.

**19.** Verfahren zur Herstellung von Mitteldestillaten aus einer Paraffincharge, die mittels Fischer-Tropsch-Synthese erzeugt wurde, wobei es die folgenden Schritte umfasst, die nacheinander erfolgen:

a) möglicherweise Fraktionieren der Charge in mindestens eine Schwerfraktion mit einen anfänglichen Siedepunkt im Bereich von 120 bis 200°C, und mindestens eine Leichtfraktion, die niedriger als die Schwerfraktion siedet,

b) möglicherweise Hydrobehandeln mindestens einer Teilmenge der Charge oder der Schwerfraktion, woraufhin möglicherweise ein Schritt c) folgt,

c) Entfernen mindestens einer Teilmenge des Wassers,

d) Einleiten mindestens einer Teilmenge des Stoffstroms oder der möglicherweise hydrobehandelten Fraktion in ein Behandlungsverfahren, das über einem ersten Hydroisomerisierungs-/Hydrocrack-Katalysator erfolgt, welcher mindestens ein Edelmetall der Gruppe VIII enthält,

e) Destillieren des hydroisomerisierten/hydrogecrackten Stoffstroms, um Mitteldestillate (Kerosin, Diesel), um eine restliche Fraktion, die höher als die Mitteldestillate siedet, zu erhalten,

f) Einleiten mindestens einer Teilmenge der restlichen Schwerfraktion und/oder einer Teilmenge der Mitteldestillate in ein Behandlungsverfahren, das über einem zweiten Hydroisomerisierungs-/Hydrocrack-Katalysator erfolgt, der mindestens ein Edelmetall der Gruppe VIII enthält, und Destillieren des erhaltenen Stoffstroms, um Mitteldestillate zu erhalten,

und wobei es sich bei mindestens einem der Behandlungsverfahren um das Verfahren nach einem der Ansprüche 1 bis 15 handelt.

**20.** Verfahren zur Herstellung von Mitteldestillaten aus einer Paraffincharge, die mittels Fischer-Tropsch-Synthese erzeugt wurde, wobei es die folgenden Schritte umfasst, die nacheinander erfolgen:

a) Auftrennen der Charge in mindestens eine Fraktion mit niedriger Siedetemperatur (B), die relativ reich an sauerstoffhaltigen Verbindungen ist, und mindestens eine Fraktion mit hoher Siedetemperatur (A), die weniger reich an sauerstoffhaltigen Verbindungen ist;

b) Einwirkenlassen einer hydrierenden Behandlung auf die Fraktion (B) unter Bedingungen, die derart beschaffen sind, dass jedwede wesentliche Änderung ihres mittleren Molekulargewichts vermieden wird, um eine hydrierte Mischung von Kohlenwasserstoffen zu erhalten, die im Wesentlichen nicht sauerstoffhaltig sind;

c) Vereinigen mindestens einer Teilmenge der hydrierten Mischung gemäß Schritt (b) mit der Fraktion (A), um eine Mischung (C) aus geradkettigen Kohlenwasserstoffen mit verringertem Gehalt an sauerstoffhaltigen Kohlenwasserstoffen zu erhalten, und Einwirkenlassen einer Hydrocrackbehandlung auf die Mischung (C) in Gegenwart eines Hydroisomerisierungs-/Hydrocrack-Katalysators, um mindestens 40% der Fraktion mit hohem Siedepunkt in eine Fraktion von Kohlenwasserstoffen umzuwandeln, die bei einer Temperatur von weniger als 370°C destilliert werden können;

d) Abtrennen mindestens einer Kohlenwasserstofffraktion von dem Produkt, das in Schritt (c) erhalten wurde, wobei deren Destillationstemperatur im Bereich der Mitteldestillate liegt,

wobei es sich in dem Verfahren bei dem Hydrocrackverfahren des Schrittes c) um das Verfahren nach einem der Ansprüche 1 bis 15 handelt.

21. Verfahren nach einem der vorhergehenden Ansprüche, wobei der Hydrocrack-/Hydroisomerisierungs-Katalysator auf Basis von Platin und/oder Palladium ist.

22. Verfahren nach einem der vorhergehenden Ansprüche, wobei der Hydrocrack-/Hydroisomerisierungs-Katalysator 0,05 bis 10% an Edelmetall der Gruppe VIII enthält.

**Claims**

1. A process for producing middle distillates from a paraffinic feed produced by Fischer-Tropsch synthesis using a hydrocracking/hydroisomerization catalyst which comprises at least one hydrodehydrogenating element selected from the group formed by elements from group VIB and group VIII of the periodic table, 0.2% to 2.5% by weight of an oxide of a doping element selected from phosphorus, boron and silicon, and a non-zeolitic support based on silica-alumina containing a quantity of more than 5% by weight and 95% by weight or less of silica ($SiO_2$), said catalyst having the following characteristics:

    • a mean pore diameter, measured by mercury porosimetry, in the range 20 to 140 Å;
    • a total pore volume, measured by mercury porosimetry, in the range 0.1 ml/g to 0.5 ml/g;
    • a total pore volume, measured by nitrogen porosimetry, in the range 0.1 ml/g to 0.5 ml/g;
    • a BET specific surface area in the range 100 to 550 $m^2$/g;
    • a pore volume, measured by mercury porosimetry, included in pores with a diameter of more than 140 Å, of less than 0.1 ml/g;
    • a pore volume, measured by mercury porosimetry, included in pores with a diameter of more than 160 Å, of less than 0.1 ml/g;
    • a pore volume, measured by mercury porosimetry, included in pores with a diameter of more than 200 Å, of less than 0.1 ml/g;
    • a pore volume, measured by mercury porosimetry, included in pores with a diameter of more than 500 Å is strictly more than 0.01 and less than 0.1 ml/g.
    • an X ray diffraction diagram which contains at least the characteristic principal peaks of at least one transition alumina included in the group composed of alpha, rho, khi, eta, gamma, kappa, theta and delta aluminas;
    • a catalyst settled packing density of more than 0.75 g/$cm^3$.

2. A process according to claim 1 using a catalyst comprising a nickel-tungsten metal association.

3. A process according to one of the preceding claims, using a catalyst in which the doping effluent is boron and/or phosphorus.

4. A process according to claim 3, using a catalyst in which the doping element is phosphorus.

5. A process according to claim 4, in which the phosphorus content of the catalyst is in the range 0.2% to 2.5% by weight of oxide.

6. A process according to claim 4, in which the phosphorus content in the catalyst is in the range 0.2% to 2% by weight of oxide.

7. A process according to one of the preceding claims, using a catalyst in which the proportion of octahedral $Al_{VI}$ determined by solid $^{27}Al$ MAS NMR spectral analysis, is more than 50%.

8. A process according to one of the preceding claims, in which the catalyst has a cationic impurities content of less than 0.1% by weight.

9. A process according to one of the preceding claims, in which the catalyst has an anionic impurities content of less than 1% by weight.

10. A process according to one of the preceding claims, using a catalyst wherein the X ray diffraction diagram of the support contains at least the characteristic principal peaks of at least one of the transition aluminas included in the group composed by eta, theta, delta and gamma aluminas.

11. A process according to one of the preceding claims, using a catalyst wherein the X ray diffraction diagram of the support contains at least the characteristic principal peaks of at least one of the transition aluminas included in the group composed by eta and gamma aluminas.

12. A process according to one of the preceding claims, using a catalyst such that:

> • the ratio between the volume V2, measured by mercury porosimetry, in the range $D_{mean}$ - 30 Å to $D_{mean}$ + 30 Å over the total mercury volume is more than 0.6;
> • the volume V3, measured by mercury porosimetry, included in pores with a diameter of more than $D_{mean}$ + 30 Å, is less than 0.1 ml/g;
> • the volume V6, measured by mercury porosimetry, included in pores with a diameter of more than $D_{mean}$ + 15 Å, is less than 0.2 ml/g.

13. A process according to one of the preceding claims, in which the mean pore diameter of the catalyst is in the range 40 to 120 Å.

14. A process according to one of the preceding claims, in which the catalyst settled packing density is more than 0.85 g/cm$^3$.

15. A process according to one of the preceding claims, in which the acidity of the catalyst support, measured by IR monitoring of the thermo-desorption of pyridine, is such that the ratio B/L (ratio of the number of Bronsted sites/number of Lewis sites) is in the range 0.05 to 1.

16. A process for producing middle distillates from a paraffinic feed produced by Fischer-Tropsch synthesis, comprising the following successive steps: separation of a single fraction, termed the heavy fraction, with an initial boiling point between 120-200°C;

> a) hydrotreating at least a portion of said heavy fraction;
> b) fractionating into at least 3 fractions: at least one intermediate fraction having an initial boiling point T1 in the range 120 to 200°C, and an end point T2 of more than 300°C and less than 410°C, at least one light fraction boiling below the intermediate fraction, at least one heavy fraction boiling above the intermediate fraction;
> c) passing at least a portion of said intermediate fraction through a process according to one of claims 1 to 15 over a non-zeolitic hydroisomerization/hydrocracking catalyst;
> d) passing at least a portion of said heavy fraction through a process according to one of claims 1 to 15 over a non-zeolitic hydroisomerization/hydrocracking catalyst;
> e) distilling the hydrocracked/hydroisomerized fractions to obtain middle distillates, and recycling the residual fraction boiling above said middle distillates in step e) over the catalyst treating the heavy fraction.

17. A process for producing middle distillates from a paraffinic feed produced by the Fischer-Tropsch synthesis, comprising the following steps:

> a) separating at least a light fraction from the feed to obtain a single fraction, termed the heavy fraction, with an initial boiling point in the range 120-200°C;
> b) optionally, hydrotreating said heavy fraction, optionally followed by a step
> c) for removing at least a portion of the water;
> d) passing at least a portion of said optionally hydrotreated fraction through a process according to one of claims 1 to 15, wherein conversion over the hydroisomerization/hydrocracking catalyst of products with a boiling point of 370°C or more into products with a boiling point of less than 370°C is more than 80% by weight;
> e) distilling the hydrocracked/hydroisomerized fraction to obtain middle distillates, and recycling the residual fraction boiling above said middle distillates to step d).

**18.** A process for producing middle distillates from a paraffinic feed produced by the Fischer-Tropsch synthesis, comprising the following steps in succession:

a) fractionating (step a)) the feed into at least 3 fractions:

• at least one intermediate fraction having an initial boiling point T1 in the range 120°C to 200°C, and an end point T2 of more than 300°C and less than 410°C;
• at least one light fraction boiling below the intermediate fraction;
• at least one heavy fraction boiling above the intermediate fraction;

b) hydrotreating (step b)) at least a portion of said intermediate fraction, then passage (step d)) through a process for treating at least a portion of the hydrotreated fraction over a hydrocracking/hydroisomerization catalyst;
f) passage (step f)) through a process for treating at least a portion of said heavy fraction over a hydrocracking/hydrocracking catalyst with a conversion of products with a boiling point of 370°C or more into products with a boiling point of less than 370°C of more than 80% by weight;
e) and g) distilling (steps e) and g)) at least a portion of the hydrocracked/hydroisomerized fractions to obtain middle distillates;

and at least one of said treatment processes is the process according to one of claims 1 to 15.

**19.** A process for producing middle distillates from a paraffinic feed produced by the Fischer-Tropsch process, comprising the following successive steps:

a) optional fractionation of the feed into at least one heavy fraction with an initial boiling point in the range 120°C to 200°C, and at least one light fraction boiling below said heavy fraction;
b) optional hydrotreatment of at least a portion of the feed or the heavy fraction, optionally followed by a step c);
c) for eliminating at least a portion of the water;
d) passing at least a portion of the effluent or the optionally hydrotreated fraction through a treatment process over a first hydroisomerization/hydrocracking catalyst containing at least one noble metal from group VIII;
e) distilling the hydroisomerized/hydrocracked effluent to obtain middle distillates (kerosene, gas oil) and a residual fraction boiling above the middle distillates;
f) over a second hydroisomerization/hydrocracking catalyst containing at least one noble metal from group VIII, passage into a process for treating at least a portion of said residual heavy fraction and/or a portion of said middle distillates, and distilling the resulting effluent to obtain middle distillates;

and at least one of said treatment processes is the process according to one of claims 1 to 15.

**20.** A process for producing middle distillates from a paraffinic feed produced by the Fischer-Tropsch process, comprising the following successive steps:

a) separating the feed into at least one fraction with a low boiling point (B) which is richer in oxygen-containing compounds and at least one fraction with a high boiling point (A) which is less rich in oxygen-containing compounds;
b) subjecting said fraction (B) to a hydrogenating treatment under conditions of a nature which avoids any substantial variation in its mean molecular weight, to obtain a hydrogenated substantially non oxygen-containing mixture of hydrocarbons;
c) recombining at least a portion of said hydrogenated mixture of step b) with said fraction (A) to form a mixture (C) of straight-chain hydrocarbons with a reduced oxygen-containing hydrocarbon content and subjecting said mixture (C) to a hydrocracking treatment in the presence of a hydroisomerization/hydrocracking catalyst to convert at least 40% of said fraction with a high boiling point into a hydrocarbon fraction which may be distilled at a temperature of less than 370°C;
d) separating at least one hydrocarbon fraction from the product obtained in step c) the distillation temperature of which is in the middle distillates range;

in which process the hydrocracking process of step c) is the process according to one of claims 1 to 15.

**21.** A process according to one of the preceding claims, in which the hydrocracking/hydroisomerization catalyst is based on platinum and/or palladium.

22. A process according to one of the preceding claims, in which the hydrocracking/hydroisomerization catalyst contains 0.05% to 10% of a noble metal from group VIII.

Figure 1

Figure 2

EP 1 893 724 B1

Figure 3

Figure 4

Figure 5

Figure 6

EP 1 893 724 B1

**EP 1 893 724 B1**

## RÉFÉRENCES CITÉES DANS LA DESCRIPTION

### Documents brevets cités dans la description

- EP 583836 A
- EP 321303 A
- WO 2004076598 A
- US 5370788 A
- US 2908635 A
- US 3423332 A
- US 3433747 A
- US 3451947 A
- US 3629152 A
- US 3650988 A
- US 3520654 A
- US 3630670 A
- US 3864461 A
- US 4154812 A
- US 4313923 A
- DE 3243193
- US 4371513 A
- FR 1261182
- FR 1381282
- EP 15196 A
- FR 1357830
- US 3268295 A
- US 3245919 A
- WO 0001617 A
- US 1371808 A
- US 2892858 A
- US 4676928 A
- US 6030599 A
- US 4066574 A
- EP 0387109 A
- US 3124418 A

### Littérature non-brevet citée dans la description

- **JEAN CHARPIN ; BERNARD RASNEUR.** *Techniques de l'ingénieur, traité analyse et caractérisation,* 1050-5
- **A. LECLOUX.** *Mémoires Société Royale des Sciences de.Liège, 6ème série,* 1971, vol. I, 169-209
- **B.C. LIPPENS ; J.J. STEGGERDA.** Physical and Chemical aspects of adsorbents and catalysts. Academic Press, 1970, 171-211
- **KODAKARI et al.** *Langmuir,* 1998, vol. 14, 4623-4629
- **J.F. LE PAGE ; J. COSYNS ; P. COURTY ; E. FREUND ; J-P. FRANCK ; Y. JACQUIN ; B. JUGUIN ; C. MARCILLY ; G. MARTINO ; J. MIQUEL.** *Applied Heterogenous Catalysis*
- *Alcoa paper n°19,* 1972, 9-12